(19) Europäisches Patentamt
European Patent Office
Office européen des brevets

(11) **EP 3 875 995 B1**

(12) **EUROPEAN PATENT SPECIFICATION**

(45) Date of publication and mention
of the grant of the patent:
**20.11.2024 Bulletin 2024/47**

(21) Application number: **21159076.5**

(22) Date of filing: **24.02.2021**

(51) International Patent Classification (IPC):
**G01V 20/00** *(2024.01)*  **G06T 17/05** *(2011.01)*
**G06T 17/20** *(2006.01)*

(52) Cooperative Patent Classification (CPC):
**G01V 20/00; G06T 17/05; G06T 17/20;**
G01V 2210/661

(54) **IMAGING A SUBSURFACE GEOLOGICAL MODEL AT A PAST INTERMEDIATE RESTORATION TIME**

ABBILDUNG EINES UNTERIRDISCHEN GEOLOGISCHEN MODELLS ZU EINER VERGANGENEN ZWISCHENRESTAURATIONSZEIT

IMAGERIE D'UN MODÈLE GÉOLOGIQUE SOUTERRAIN À UN TEMPS INTERMÉDIAIRE DE RESTAURATION PASSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2020 US 202016807695**

(43) Date of publication of application:
**08.09.2021 Bulletin 2021/36**

(73) Proprietor: **Aspen Paradigm Holding LLC
Bedford MA 01730 (US)**

(72) Inventors:
• **MALLET, Jean-Laurent
1221 Luxembourg-Beggen (LU)**
• **TERTOIS, Anne-Laure
91690 Saint Cyr la Riviere (FR)**

(74) Representative: **Pearl Cohen Zedek Latzer Baratz UK LLP
The Gridiron Building
One Pancras Square
London N1C 4AG (GB)**

(56) References cited:
**US-A1- 2014 278 298     US-A1- 2017 330 373**

• **BAUR F ET AL: "Integrating structural geology and petroleum systems modeling - A pilot project from Bolivia's fold and thrust belt", MARINE AND PETROLEUM GEOLOGY, ELSEVIER, AMSTERDAM, NL, vol. 26, no. 4, 1 April 2009 (2009-04-01), pages 573 - 579, XP026063977, ISSN: 0264-8172, [retrieved on 20090115], DOI: 10.1016/J.MARPETGEO.2009.01.004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

Embodiments of the invention relate to the field of geological tomography for generating an image of the interior subsurface of the Earth based on geological data collected by transmitting a series of incident waves and receiving reflections of those waves across discontinuities in the subsurface. The incident and reflected waves are reconstituted by a 3D model to generate an image of the reflecting surfaces interior to the Earth. Accordingly, geological tomography allows geophysicists to "see inside" the Earth.

Embodiments of the invention further relate to geological restoration in which the tomographic images of the present day geology are transformed into images of the past geology, as it was configured at an intermediate restoration time in the past $\tau$ before the present day and after the start of deposition of the oldest subsurface layer being imaged. New techniques are proposed herein to improve both the accuracy and computational speed of generating those images of the past restored geology. Improved images may aid geoscientists exploring the subsurface geology for applications such as predicting tectonic motion or earthquakes, or by engineers in the mining or oil and gas industries.

**BACKGROUND OF THE INVENTION**

The accuracy of a geological model of the present day configuration of the subsurface of the Earth may be improved by "restoring" the model to a past intermediate time $\tau$ and checking model consistency at that time in the past. However, restoring geological models is a complex task and current methods are typically inefficient, requiring extensive processing resources and time, as well as inaccurate, relying on over-simplifications that induce errors to moderate the complexity of the task.

There is a longstanding need in the art to efficiently and accurately restore geological models from their present day geology to their past geology at restored past time $\tau$.

United States Patent Application Publication number 2017/0330373 A1, by Medwedeff et al, discloses a geometric method for 3D structural restoration of a subsurface model including receiving data representative of a subsurface volume of interest including one or more chronohorizons and the geometry and topology of any faults of relevance; developing a fault framework model of the subsurface volume of interest; selecting a horizon, the deposition of which represents the geologic time to which the structural model should be restored; developing coordinate transformation constrained by a single datum horizon and, optionally, additional geologic constraints; applying the 3D transformation to all geologic features below and, optionally, above the datum surface; and scaling the vertical coordinates to accurately relate vertical and horizontal dimensions.

"Integrating structural geology and petroleum systems modeling - A pilot project from Bolivia's fold and thrust belt", by Baur et al in the journal Marine and Petroleum Geology, discloses a new approach to petroleum systems analysis which allows full integration of tectonic and palinspastic restoration with three-dimensional (3D), PVT-controlled, multi-component, three-phase petroleum migration analysis through time.

**SUMMARY OF EMBODIMENTS OF THE INVENTION**

Some embodiments, not forming part of the present invention, are directed to modeling restored geological models with $\tau$-active and $\tau$-inactive faults. In an embodiment of the invention, a system and method is provided for restoring a 3D model of the subsurface geology of the Earth from a present day geometry measured at a present time to a predicted past geometry at a past restoration time. The 3D model of the present day measured geometry comprising a network of faults may be received, wherein a fault is a discontinuity that divides fault blocks that slide in opposite directions tangential to the surface of the fault as time approaches a modeled time. A past restoration time $\tau$ may be selected that is prior to the present time and after a time when an oldest horizon surface in the 3D model was originally deposited. The network of faults may be divided into a subset of $\tau$-active faults and a subset of $\tau$-inactive faults, wherein a $\tau$-active fault is a fault that is active at the past restoration time $\tau$ and a $\tau$-inactive fault is a fault that is inactive at the past restoration time $\tau$. A fault may be determined to be $\tau$-active when the fault intersects a horizon $H_\tau$ that was originally deposited at the past restoration time $\tau$ and a fault may be determined to be $\tau$-inactive when the fault does not intersect the horizon $H_\tau$ that was originally deposited at the past restoration time $\tau$. The 3D model may be restored from the present day measured geometry to the predicted past geometry at the past restoration time $\tau$ by modeling each $\tau$-active and $\tau$-inactive fault differently. Each $\tau$-active fault may be modeled to join end points of a horizon $H_\tau$ separated on opposite sides of the fault in the present day model to merge into the same position in the restored model by sliding the end points towards each other in a direction tangential to the surface of the $\tau$-active fault. Each $\tau$-inactive fault may be modeled to keep collocated points on opposite sides of the fault together.

Some embodiments, not forming part of the present invention, are directed to modeling restored geological models with new restoration coordinates $u_\tau$, $v_\tau$, $t_\tau$. In an embodiment of the invention, a system and method is provided for restoring a 3D model of the subsurface geology of the Earth from a present day measured geometry to a predicted past geometry at a restoration time in the past $\tau$. The 3D model of the present day geometry of the subsurface may be received, including one or more folded geological horizon surfaces. A value may be selected of a restoration time in the past $\tau$ before the present day and after a time an oldest horizon surface in the 3D model of the subsurface was deposited. The 3D model may be restored from the present day measured geometry to the predicted past geometry at the restoration time in the past $\tau$ using a 3D transformation. The vertical component of the 3D transformation may restore the geometry to the vertical coordinate $t_\tau$ such that: points along a horizon surface $H_\tau$ modeling sediment that was deposited at the selected restoration time in the past $\tau$ have a substantially constant value for the restored vertical coordinate $t_\tau$; and at any location in the 3D model, the restored vertical coordinate $t_\tau$ is equal to a sum of a first approximation $t'_\tau$ of the vertical coordinate and an error correction term $\varepsilon_\tau$, wherein the error correction term $\varepsilon_\tau$ is computed by solving a linear relationship in which a variation in the sum of the first approximation $t'_\tau$ of the vertical coordinate and the error correction term $\varepsilon_\tau$ between any two points separated by an infinitesimal difference in the direction of maximal variation of the sum is approximately equal to the distance between the points in the direction of maximal variation; and displaying an image of the restored 3D model of the subsurface geology of the Earth such that each point in the 3D model is positioned at the restored vertical coordinate $t_\tau$ as it was configured at the restoration time in the past $\tau$.

Some embodiments of the invention are directed to modeling restored geological models taking compaction into account at an intermediate restoration time in the past $\tau$. In an embodiment of the invention, a system and computer-implemented method is provided for decompacting a 3D model of the subsurface geology of the Earth at an intermediate restoration time in the past $\tau$. According to the invention, a method comprises receiving a 3D model of present-day geometry of the subsurface geology and a measure of present-day porosity experimentally measured within the subsurface geology of the Earth. A value of a restoration time in the past $\tau$ is selected before the present day and after a time an oldest horizon surface in the 3D model of the subsurface was deposited. The 3D model from the present day measured geometry is restored to the predicted past geometry at the restoration time in the past $\tau$ using a 3D transformation. The vertical dimension of the restored 3D model is decompacted to elongate vertical lengths of geological layers below a horizon layer deposited at the restoration time in the past $\tau$. The vertical lengths are elongated based on a relationship between a depositional porosity of the geological layers at the time sediment in those layers was deposited, restoration porosity of the geological layers at the restoration time in the past $\tau$, and the present-day porosity of the geological layers experimentally measured in the present-day.

## BRIEF DESCRIPTION OF THE DRAWINGS

The principles and operation of the system, apparatus, and method according to embodiments of the present invention may be better understood with reference to the drawings, and the following description, it being understood that these drawings are given for illustrative purposes only and are not meant to be limiting.

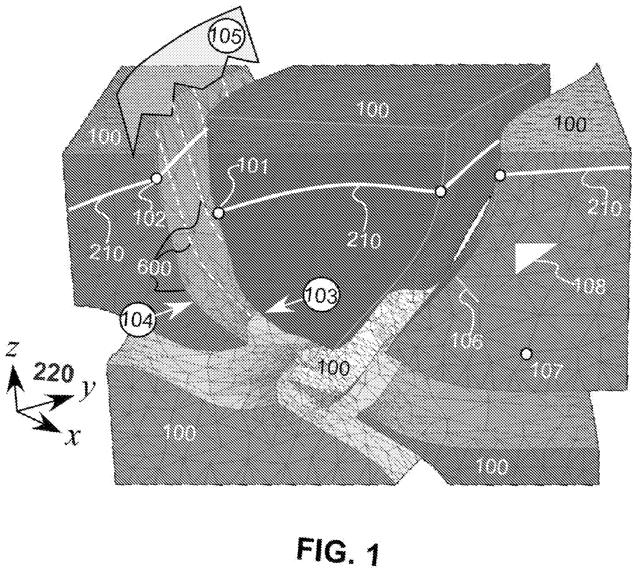

FIG. **1** schematically illustrates an exploded view of a 3D present day geological model of the subsurface of the Earth according to an embodiment of the invention. The 3D geological model may comprise a faulted 3D grid $\Gamma$ **100.** Cell edges **106** of the grid are constrained to never cross faults **105.** During restoration, twin faces $F^-$ **104** and $F^+$ **103** on opposite sides of a fault $F$ **105** may slide along one another only in a direction tangential to the surface of the fault $F$ **105.** Points ( $\mathbf{r}_F^+$, $\mathbf{r}_F^-$ ) **(101,102)** are twin-points. "Twin" points or faces may refer to points or faces that were collocated at the time of their deposition, but which may have separated at a later time.

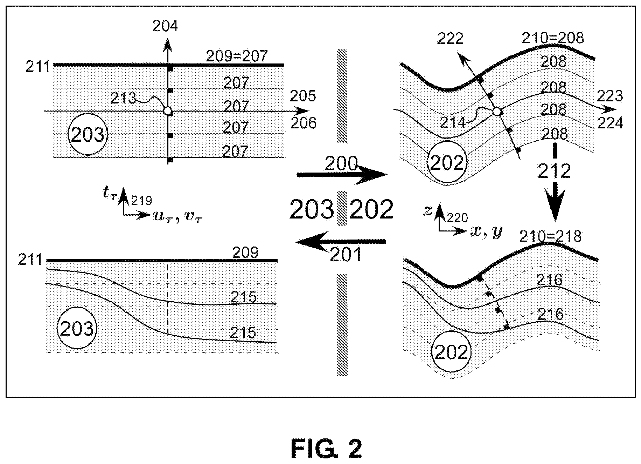

FIG. **2** schematically illustrates a vertical cross section of a 3D subsurface model in a volume deformation: the $u_\tau$ $v_\tau$ $t_\tau$ - transform **201** restores the volume $G_\tau$ **202** in a present day space $G$ **220** to a past volume $\overline{G}_\tau$ **203** in a past restored space **219** as the subsurface was configured at restoration time $\tau$ according to an embodiment of the invention.

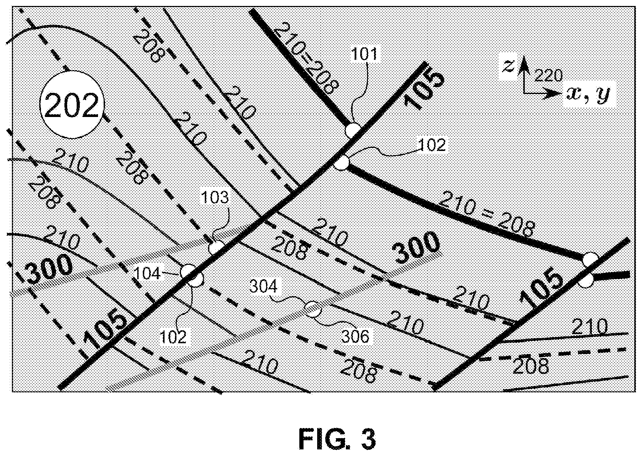

FIG. **3** schematically illustrates a vertical cross section of the present day domain $G_\tau$ **202** according to an embodiment of the invention. Horizons **210** are shown in bold lines and level sets **208** of the vertical restoration coordinate $t_\tau(\mathbf{r})$ are shown in dashed lines. $\tau$-active faults **105** (depicted as bold black lines) cut the horizon $H_\tau$ **210** deposited at restoration time $\tau$ whilst $\tau$-inactive faults **300** (depicted as bold gray lines) do not cut horizon $H_\tau$ **210.** Level sets of the vertical restoration coordinate $t_\tau(\mathbf{r})$ (dashed lines **208**) are continuous across $\tau$-inactive faults **300** and only separated across $\tau$-active faults **105** because the sedimentary layers of those level sets were not divided when the faults were inactive (at a time before the faults formed).

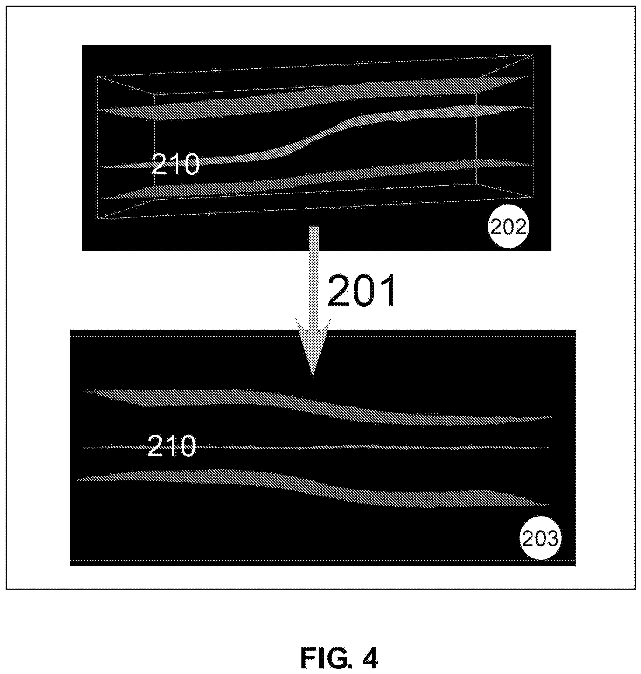

FIG. **4** schematically illustrates an example 3D geological model used to test the accuracy of the vertical restoration coordinate $t_\tau(\mathbf{r})$ according to an embodiment of the invention. This example 3D geological model has a "ramp" geological structure with a restored horizon $H_\tau$ **210** as the central, sigmoid surface. This seemingly "simple" test comprises highly complex calculations because there are large variations in layer thickness which make numerical computation of the geological time of deposition $t(\mathbf{r})$ more challenging.

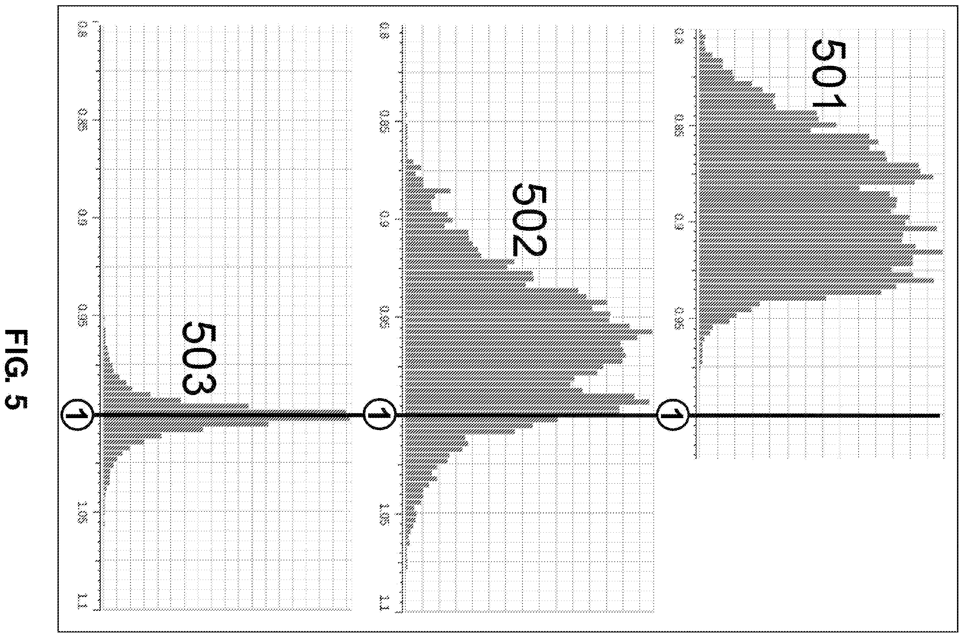

FIG. **5** shows a comparison of multiple histograms **501, 502** and **503** of $\|\mathbf{grad}\,t_\tau(\mathbf{r})\|$ each using a different method to compute $t_\tau(\mathbf{r})$ in the test case domain $G_\tau$ of FIG. **4**. Depending on the method used to compute $t_\tau(\mathbf{r})$, the resulting magnitude of $\mathbf{grad}\,t_\tau(\mathbf{r})$ may severely deviate from the ideal value of "1," as required by equation (10). Histogram **503,** which is generated according to an inventive embodiment, is the closest approximation of (10), yielding the most accurate restoration model.

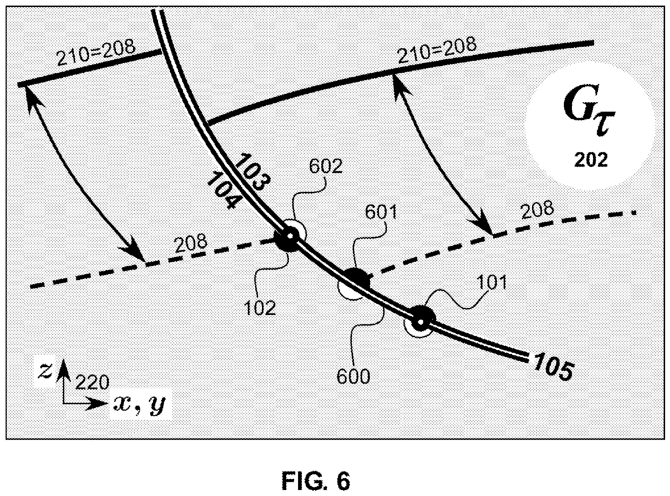

FIG. **6** schematically illustrates a vertical cross section of a 3D subsurface model in which a pair of $\tau$-twin-points $(\tilde{\mathbf{r}}_F^+, \mathbf{r}_F^-)_\tau$ **(601,602)** are deduced from a pair of present day twin-points $(\mathbf{r}_F^+, \mathbf{r}_F^-)$ **(101,102),** using a depositional (e.g., GeoChron) model as input, according to an embodiment of the invention.

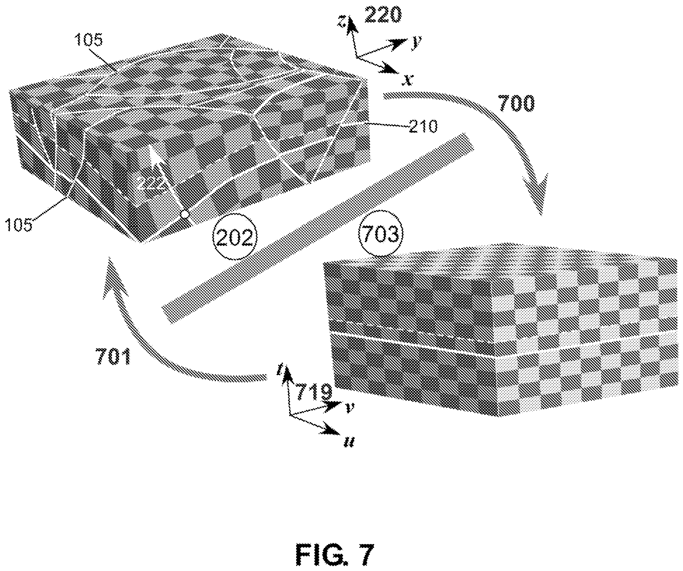

FIG. **7** schematically illustrates a direct *uvt*-transform **700** and inverse *uvt*-transform **701** that transform a 3D model between a present day geological space $G$ **220** and a depositional geological space $\overline{G}$ **719** according to an embodiment of the invention.

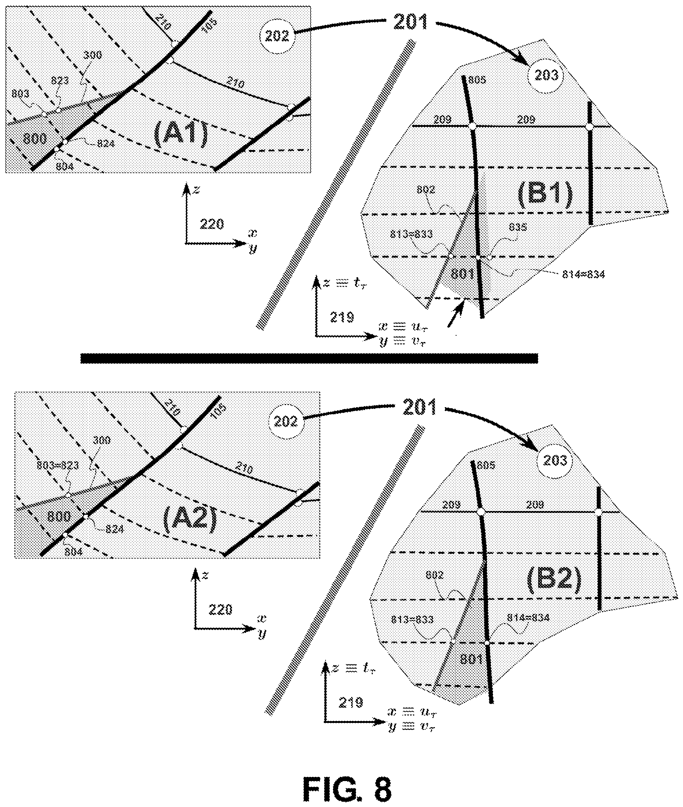

FIG. **8** schematically illustrates a $u_\tau v_\tau t_\tau$- transform **201** of a vertical cross-section of a 3D subsurface model showing the geological impact between fault **300** being erroneously considered a $\tau$-active fault (top image of FIG. **8**) vs. correctly considered a $\tau$-inactive fault with respect to restored horizon $H_\tau$ **210** (bottom image of FIG. **8**). In the top image of FIG. **8,** when fault **300** is erroneously considered a $\tau$-active fault, in order to preserve geological volume, present day fault block **800** is transformed to a restored fault block **801** that intersects $\tau$-active fault **805,** which contradicts geological rules. In contrast, in the bottom image of FIG. **8,**when fault **300** is correctly considered a $\tau$-inactive fault, a volume-preserving transformation maps the present day fault block **800** correctly to a restored fault block that stays within (and does not cross) $\tau$-active fault **805,** according to geological rules.

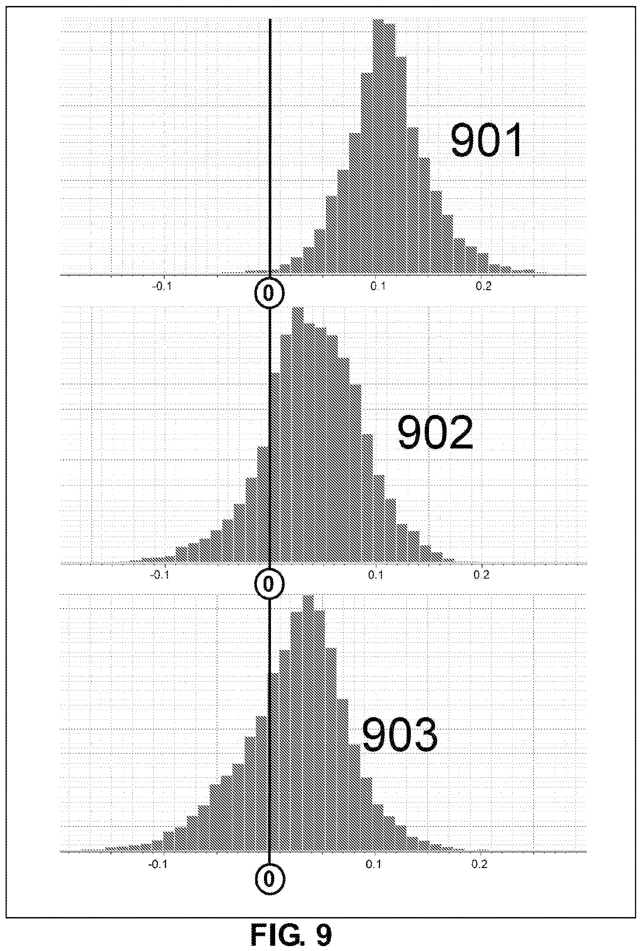

FIG. **9** shows a comparison of multiple histograms **901, 902** and **903** of $\Delta V /V$ each using a different method to compute $t_\tau(\mathbf{r})$ in the test case domain $G_\tau$ of FIG. **4**. Depending on the method used to compute $t_\tau(\mathbf{r})$, the resulting magnitude of $\Delta V/V$ may severely deviate from the target value of "0". Histogram **903,** which is generated according to an embodiment of the invention, has the least amount of volume variation, yielding the most accurate restoration model.

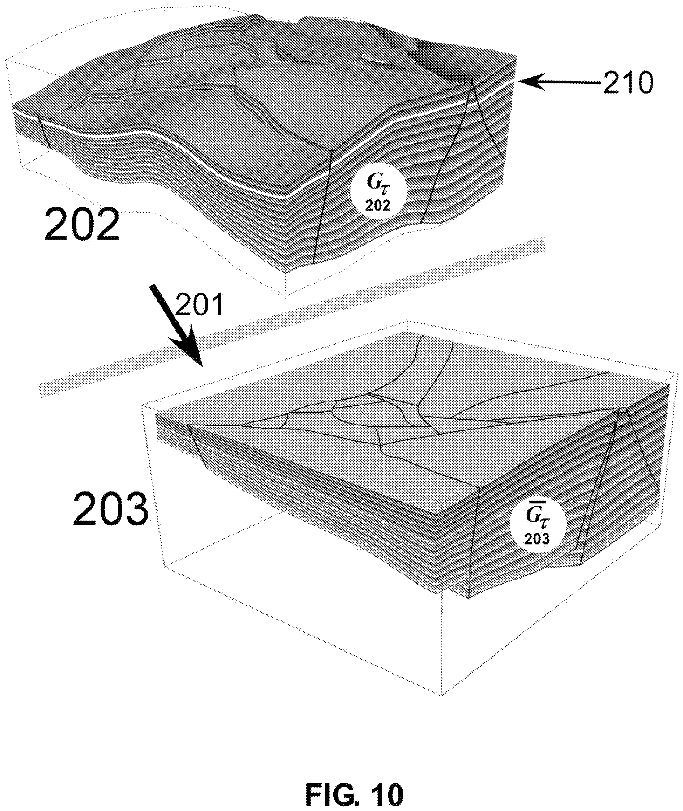

FIG. **10** schematically illustrates an example of a 3D $u_\tau v_\tau t_\tau$- transform **201** of a horizon $H_\tau$ **210** (depicted as a white layer) from a present day domain $G$ **202** to a restored domain $\overline{G}_\tau$ **203** at restoration time $\tau$ according to an embodiment of the invention.

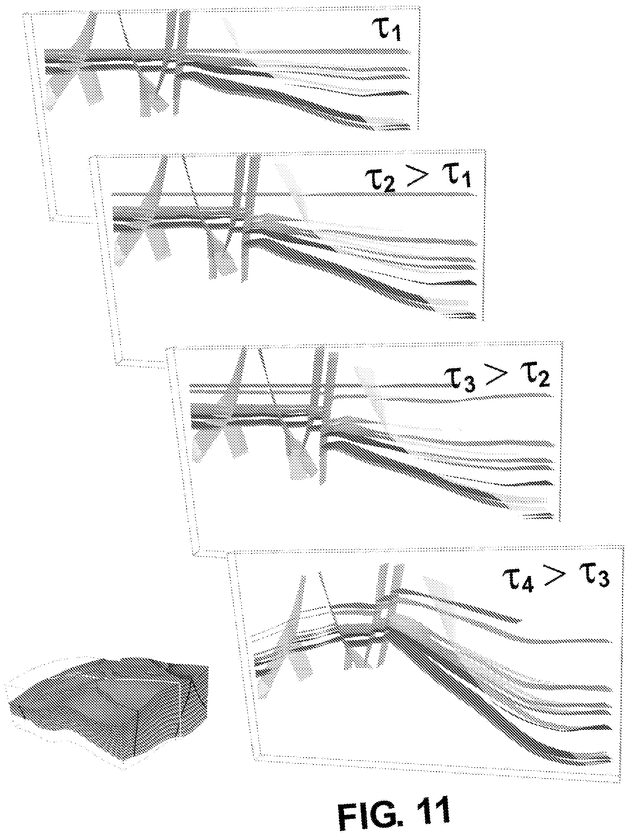

FIG. **11** schematically illustrates an example of a sequence of restorations at geological times $\{\tau_1 < \tau_2 < ... < \tau_n\}$ of vertical cross sections of the 3D model of FIG. **10** according to an embodiment of the invention.

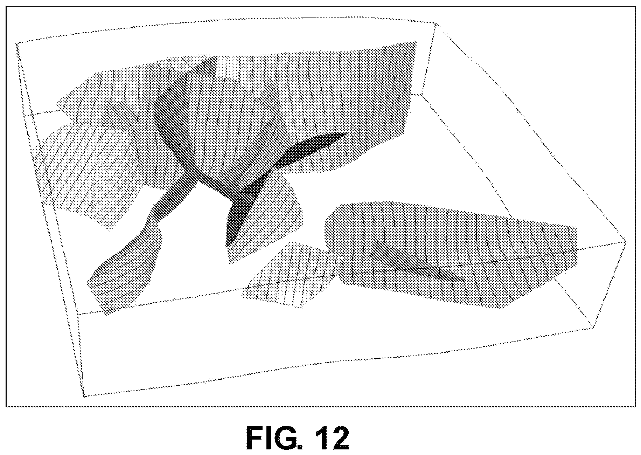

FIG. **12** schematically illustrates an example of fault striae induced on faults by paleo-geographic coordinates $u(\mathbf{r})$ and $v(\mathbf{r})$ of a depositional model provided as input to the restoration according to an embodiment of the invention.

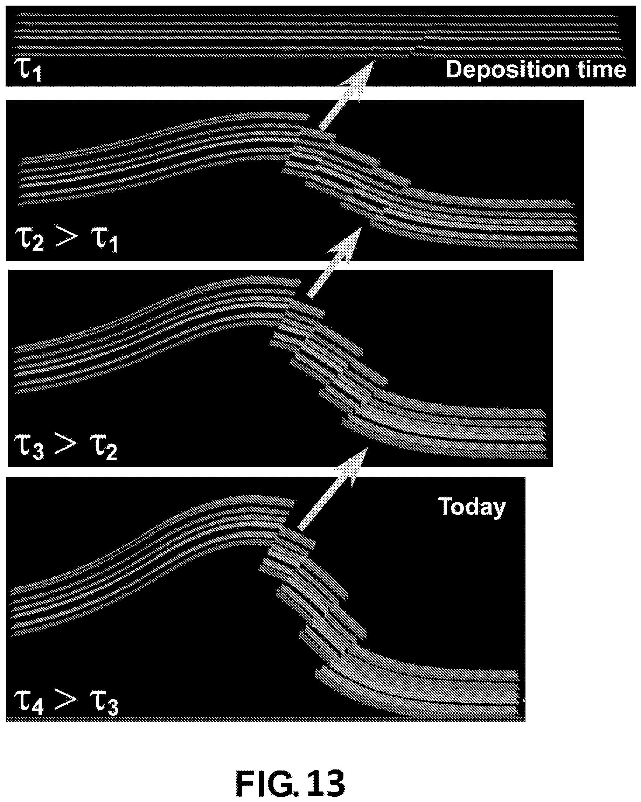

FIG. **13** schematically illustrates an example display of a sequential chronological transformation of a vertical cross section of a 3D subsurface model according to an embodiment of the invention. Chronological transformation may correspond to a plurality of restoration times $\tau i$ ordered in a sequence either "forward modeling" according to a forward passage of time (e.g., with sequentially ascending or later values of time) or "restoration" according to a reverse passage of time (e.g., with sequentially descending or earlier values of time). In the example shown in FIG. **13,** the sequence of chronological transformation progresses according to a forward passage of time, from the start of deposition at earliest geological time $\tau_1$, to one or more subsequent intermediate restorations times $\tau_2 < \tau_3$, to a latest present day geological time $\tau_4$ (although the sequence may progress according to the reverse passage of time). Further, any other number or orders of restorations or times may be used).

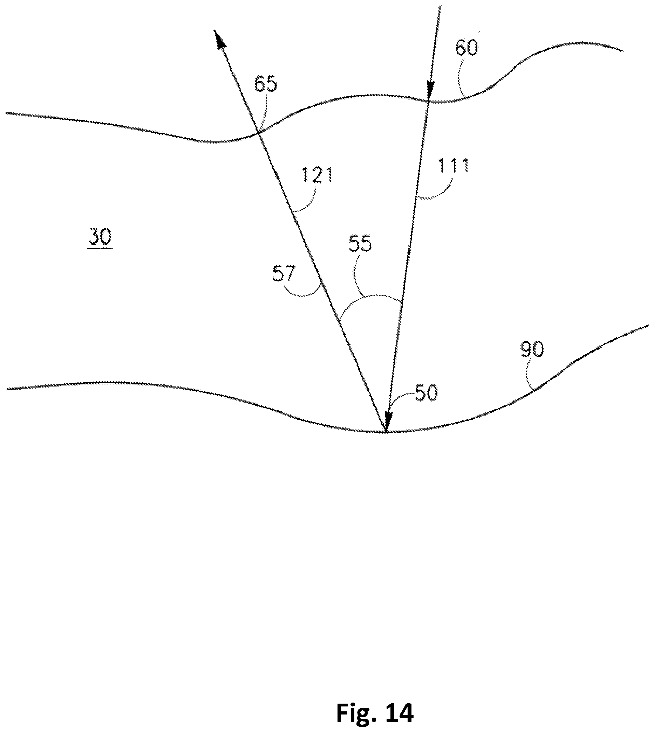

FIG. **14** schematically illustrates a geological tomography technique in which a series of incident and reflected waves are propagated through a subsurface region of the Earth to image the subsurface according to an embodiment of the invention.

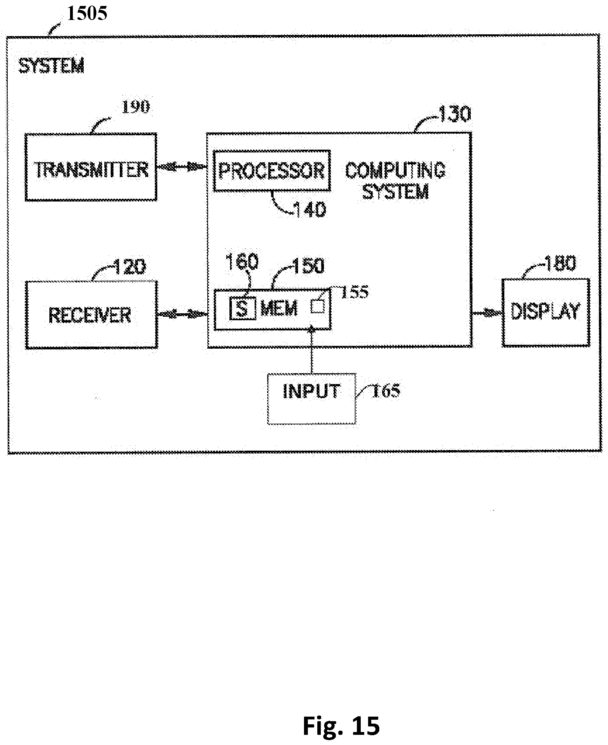

FIG. **15** schematically illustrates a system for restoring a present day geological model to an intermediate restoration time $\tau$, according to an embodiment of the invention.

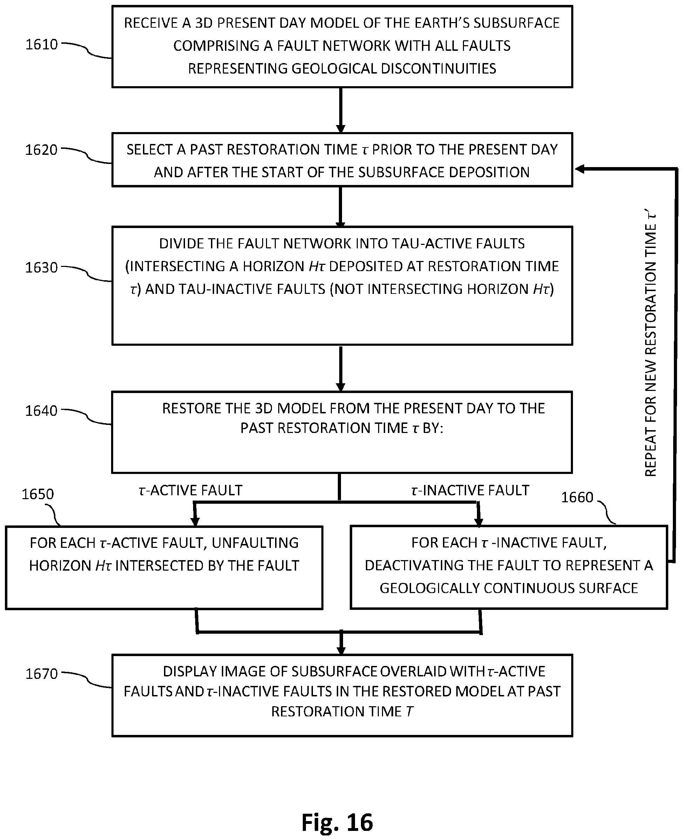

FIG. **16** is a flowchart of a method to restore a geological model with $\tau$-active and $\tau$-inactive faults, according to an embodiment not forming part of the present invention.

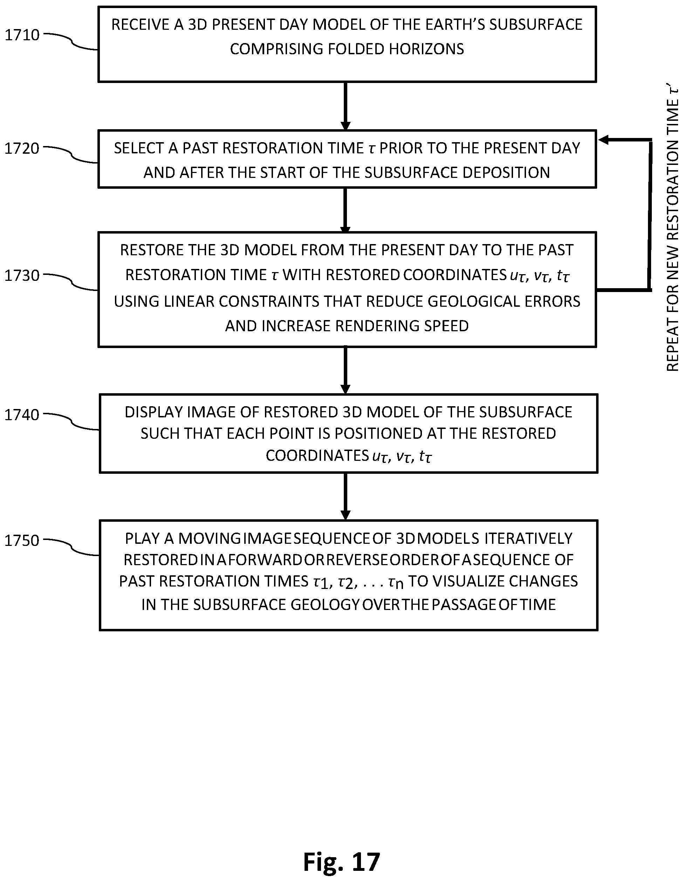

FIG. **17** is a flowchart of a method to restore a geological model with improved accuracy using a new thickness-preserving constraint, according to an embodiment not forming part of the present invention.

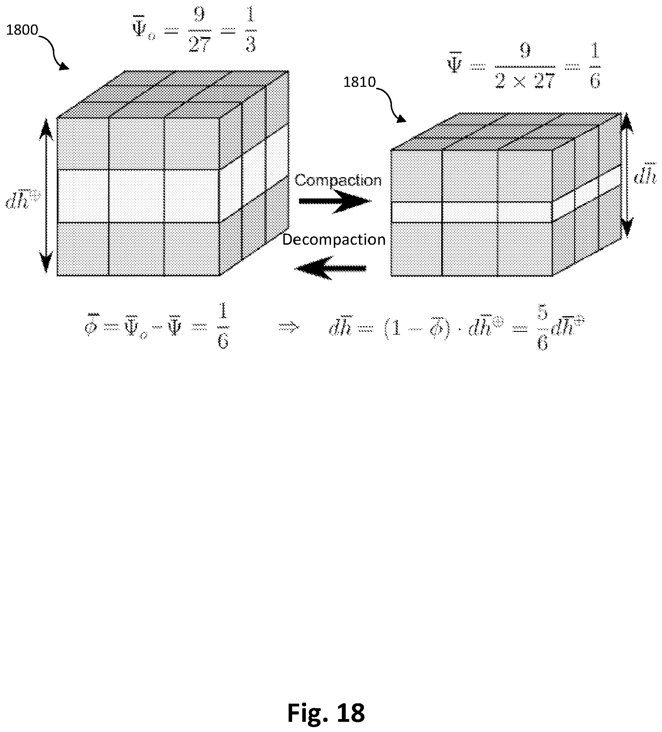

FIG. **18** schematically illustrates an example 3D geological volume of a model that is compacted (right image) and that is decompacted (left image) at an intermediate restoration time in the past $\tau$, according to an embodiment of the invention.

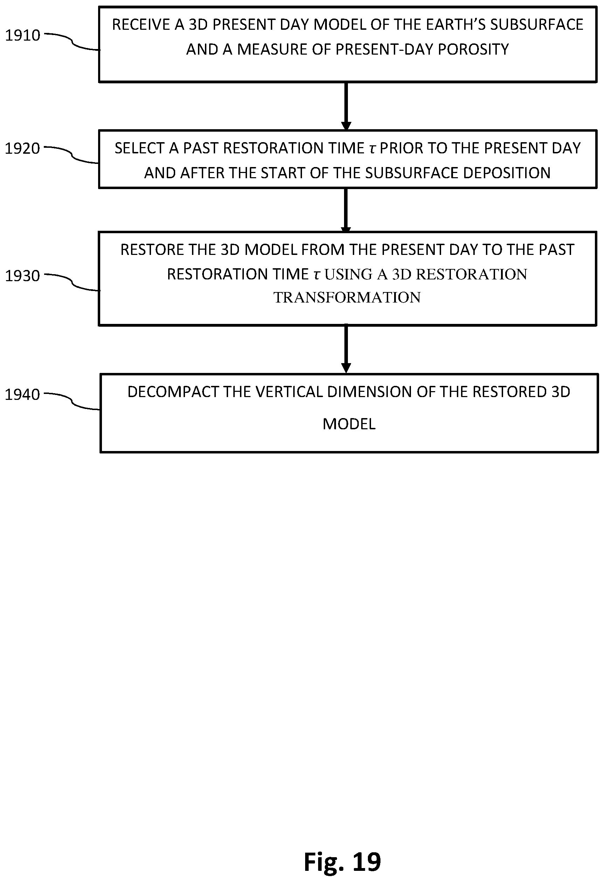

FIG. **19** is a flowchart of a method for decompacting a 3D model of the subsurface geology of the Earth at an intermediate restoration time in the past $\tau$, according to an embodiment of the invention.

For simplicity and clarity of illustration, elements shown in the drawings have not necessarily been drawn to scale. For example, the dimensions of some of the elements may be exaggerated relative to other elements for clarity. Further, where considered appropriate, reference numerals may be repeated among the drawings to indicate corresponding or analogous elements throughout the serial views.

## DETAILED DESCRIPTION OF EMBODIMENTS OF THE INVENTION

Embodiments of the invention improve conventional restoration techniques for imaging restored geological models as follows:

• "$\tau$-active" faults vs. "$\tau$-inactive" faults:

In conventional restoration models, all faults are active (as discontinuous surfaces) at all times. However, in reality, certain faults have not yet formed or activated at various intermediate restoration times $\tau$. Accordingly, conventional restoration models generate false or "phantom" faults that erroneously divide geology that has not yet fractured, leading to geological inaccuracies in subsurface images.

Embodiments of the invention solve this problem by selectively activating and deactivating individual fault surfaces to be discontinuous or continuous, respectively, depending on the specific restoration geological-time $\tau$. For each intermediate restoration time in the past $\tau$, embodiments of the invention split faults into two complementary subsets of "$\tau$-active" faults and "$\tau$-inactive" faults. $\tau$-active faults are activated at restoration time $\tau$ (e.g., a discontinuous fault surface along which fault blocks slide tangentially), whereas $\tau$-inactive faults are deactivated at restoration time $\tau$ (e.g., a continuous surface that does not behave as a fault).

As faults form and evolve over time, they behave differently at different geological times in the past. For example, a fault that forms at an intermediate geological-time $\tau$, where $\tau_1 < \tau < \tau_2$, is $\tau$-active in a restored model at later time $\tau_2$ (after the fault has formed), but $\tau$-inactive in a restored model at earlier time $\tau_1$ (before the fault has formed). This fault classification allows faults to be modelled differently at each restoration time $\tau$ in a geologically consistent way, thereby preventing unrealistic deformations from being generated in the neighborhood of these faults.

FIG. **8** shows the problem of a fault **300** being erroneously considered active at a restoration time before it formed (top image of FIG. **8**) and the solution of modeling the fault as a $\tau$-inactive fault to correctly deactivate the fault at restoration time $\tau$ according to embodiments of the invention (bottom image of FIG. **8**). In the top image of FIG. **8**, when a horizon $H_\tau$ **210** is restored using $u_\tau v_\tau t_\tau$-transform **201**, fault block **800** (shaded region in the top-left image of FIG. **8**) is bounded by an active fault **105** and an inactive fault **300**. If however fault **300** is erroneously considered as an active fault then, after applying restoration **201**:

- erroneous $\tau$-twin points **(803,823)** are transformed into a pair of collocated points **813=833,**
- $\tau$-twin points **(804,824)** are transformed into collocated points **814=834.**

It is clear that, if $d(a, b)$ denotes the distance between any arbitrary pair of points $(a, b)$, then:

$$d(803,824) = d(833,835) \neq d(833,834) \qquad (2)$$

This observation shows that erroneously considering fault **300** as a $\tau$-active fault inevitably generates unrealistic deformations.

This problem is solved according to embodiments of the invention, e.g., as shown in the bottom image of FIG. **8**. In this image, fault **105** is modeled as a $\tau$-active fault (activating the fault), but fault **300** is modeled as a $\tau$-inactive fault (deactivating the fault). Accordingly, when $u_\tau v_\tau t_\tau$-transform **201** is applied to fault block **800** (shaded region in the bottom-left image of FIG. **8**), restored fault block **801** (shaded region in the bottom-right image of FIG. **8**) is no longer bounded by an active fault ($\tau$-inactive fault **300** is inactive at restored time $\tau$). Accordingly, the restored fault block **801** preserves volume and stays within (and does not cross) $\tau$-active fault **805** (because the deactivated boundary transformed from $\tau$-inactive fault **300** may shift to accommodate a shift in the restored $\tau$-active fault **805**).

Contrary to conventional methods, the use of $\tau$-active and $\tau$-inactive faults produces more accurate results, e.g., even if there is no continuous path between (no way to continuously connect) a given fault block (e.g., **800**) and the horizon $H\tau$ (e.g., **210**) deposited at geological time $\tau$, which typically requires additional processing that may induce errors. By selectively activating and inactivating faults at the various restoration times according to when they form, embodiments of the invention eliminate erroneous phantom faults and more accurately represent the faulted geology.

Reference is made to FIG. **16,** which is a flowchart of a method to restore a geological model using $\tau$-active and $\tau$-inactive faults, according to an embodiment not forming part of the present invention.

In operation **1610**, a processor may receive a 3D model of the present day measured geometry comprising a network of faults (e.g., present day model **202**). The present day model may be measured tomographically by scanning the Earth's subsurface e.g., as described in reference to FIGS. **14** and **15**. In the present day geology, all faults in the model have already formed and so, represent active discontinuities that divide fault blocks which slide in opposite directions tangential to the surface of the fault as time approaches a modeled time.

In operation **1620**, a processor may select or receive a past restoration time $\tau$ that is "intermediate" or prior to the present time and after the start of the subsurface's deposition (the time period when an oldest horizon surface in the 3D model was originally deposited).

In operation **1630**, a processor may divide the network of faults into a subset of $\tau$-active faults and a subset of $\tau$-inactive faults, $\tau$-active faults may be faults that are active at the past restoration time $\tau$ and $\tau$-inactive faults are faults that are inactive at the past restoration time $\tau$. A fault is determined to be $\tau$-active when the fault intersects a horizon $H_\tau$ that was originally deposited at the past restoration time $\tau$ (e.g., see $\tau$-active faults **105** of FIG. **3**) and a fault is determined to be $\tau$-inactive when the fault does not intersect the horizon $H_\tau$ that was originally deposited at the past restoration time $\tau$ (e.g., see $\tau$-inactive faults **300** of FIG. **3**). Because different faults activate to fracture the subsurface at different geological times, the processor may divide the fault network differently at different geological times. Thus, a fault may be $\tau$-active at a first restoration time $\tau'$ (e.g., a time period during which the fault has formed) and $\tau$-inactive at a second restoration time $\tau''$ (e.g., a time period different than that during which the fault has formed). In one embodiment, iso-value surfaces (e.g., **208** of FIG. **3**) of each restoration coordinate (e.g., $u_\tau$, $v_\tau$, and $t_\tau$) are continuous across $\tau$-inactive faults (e.g., **300** of FIG. **3**) and discontinuous across $\tau$-active faults (e.g., **105** of FIG. **3**).

In operation **1640**, a processor may restore the 3D model from the present day measured geometry to the predicted past geometry at the past restoration time $\tau$. During restoration, the processor may flatten a horizon $H_\tau$ (e.g., **210** of FIG. **4**) that was originally deposited at time $\tau$ to a substantially planar surface of approximately constant depth. For horizons older (e.g., deposited deeper in the subsurface) than horizon $H_\tau$, the processor may restore the horizons to non-planar surfaces, e.g., when the thickness of the layers is not constant. Because the region of the subsurface deposited after the restoration time $\tau$ (e.g., deposited shallower in the subsurface) did not yet exist at the time of the restored model, restoring the 3D model to a past restoration time $\tau$ may eliminate (e.g., removing or not displaying) all relatively shallower horizon surfaces that were originally deposited after the past restoration time $\tau$. During restoration, the processor may treat $\tau$-active and $\tau$-inactive faults differently in operations **1650** and **1660**, respectively.

In operation **1650**, for each $\tau$-active fault, a processor may model the $\tau$-active fault as an active discontinuous fault surface and restore the horizon surface by removing or omitting the fault surface at the time of restoration. The processor may eliminate the $\tau$-active fault during restoration by sliding its adjacent fault blocks together. This may join end points of a horizon $H_\tau$ separated on opposite sides of the fault in the present day model to merge into the same position in the restored model by sliding the end points towards each other in a direction tangential to the surface of the $\tau$-active fault.

In operation **1660**, for each $\tau$-inactive fault, a processor may model the $\tau$-inactive fault, not as a discontinuous fault surface, but as a continuous non-fault surface in the restoration transformation. The $\tau$-inactive fault may be modeled as a surface in which the discontinuity induced by the fault has been deactivated to prevent fault blocks from sliding in directions tangential to the surface of the fault as time approaches the restoration time $\tau$. The processor may model the $\tau$-inactive fault during restoration by keeping collocated points on opposite sides of the fault in the present day model together in the restored model.

After the geological model has been restored for a first past restoration time $\tau$ (operations **1620-1660**), the process may repeat to restore the model for a second different past restoration time $\tau'$. In some embodiments, the geological model may be sequentially restored to a sequence of multiple past restoration times $\tau_1, \tau_2, ..., \tau_n$. In multiple (all or not all) of the past restoration times $\tau_1, \tau_2, ..., \tau_n$, the fault network may be divided into a different subset of $\tau$-active and $\tau$-inactive faults, e.g., because different faults fracture the subsurface at different geological times. In some embodiments, a processor may play a moving image sequence in which the 3D model is iteratively restored in a forward or reverse order of the sequence of past restoration times $\tau_1, \tau_2, ..., \tau_n$ to visualize changes in the subsurface geology over the passage of time.

In operation **1670**, a processor may display a visualization of an image of the subsurface geology of the Earth overlaid with $\tau$-active faults and $\tau$-inactive faults in the restored model at past restoration time $\tau$. The processor may display the $\tau$-active faults and the $\tau$-inactive faults with different visual identifiers, such as, different levels of translucency, different colors, different patterns, etc.

**• New restoration transformation $u_\tau$, $v_\tau$, and $t_\tau$:**

A restoration transformation may transform a geological image of the subsurface of the Earth from a present day space (e.g., $x,y,z$ coordinates) to a restoration space (e.g., $u_\tau$, $v_\tau$, and $t_\tau$ coordinates) as it was formed at an intermediate restoration time in the past $\tau$ (before the present-day but after the start of the subsurface deposition). An ideal restoration should transform the vertical coordinate $t_\tau$ in a manner that strictly honors the thickness of layers, to preserve areas and volumes of the Earth, so that terrains are not stretched or squeezed over time in the vertical dimension. However, conventional restoration transformations typically deform the vertical coordinates, forcing terrains to stretch and squeeze, resulting in errors in the restoration model.

Embodiments of the invention improve the accuracy of the restoration model by establishing a vertical restoration coordinate $t_\tau$ that preserves layer thickness. This may be achieved by implementing a thickness-preserving constraint that sets a variation in the vertical restoration coordinate $t_\tau$ between any two points separated by an infinitesimal difference in the direction of maximal variation of the vertical coordinate $t_\tau$ to be approximately equal to the distance between the points in the direction of maximal variation. An example of this constraint may be modeled by $\|\mathbf{grad}\ t_\tau(x,y,z)\| = 1$. This constraint, however, is non-linear and highly complex and time-consuming to solve. Due to its complexity, this constraint is rarely used in conventional restoration models, and instead replaced by over-simplifications, such as equations (33) and (34), that result in model errors as shown in histograms **501** and **502** of FIG. **5,** and histograms **901** and **902** of FIG. **9,** respectively.

Embodiments of the invention improve the accuracy of the restored model by establishing a new thickness-preserving constraint that introduces an error correction term $\varepsilon_\tau$. The new thickness-preserving constraint sets the restored vertical coordinate $t_\tau$ to be equal to a sum of a first approximation $t'_\tau$ of the vertical coordinate and an error correction term $\varepsilon_\tau$, wherein the error correction term $\varepsilon_\tau$ is computed by solving a relationship in which a variation in the sum of the first approximation $t'_\tau$ of the vertical coordinate and the error correction term $\varepsilon_\tau$ between any two points separated by an infinitesimal difference in the direction of maximal variation of the sum is approximately equal to the distance between the points in the direction of maximal variation. An example of this constraint may be modeled by $\|\mathbf{grad}\ (t'_\tau + \varepsilon_\tau)\| = 1$. The new thickness-preserving constraint preserves layer thickness with greater accuracy as shown in histogram **503** of FIG. **5** as compared to conventional approximations shown in histograms **501** and **502** of FIG. **5** and minimizes volume variation with greater accuracy as shown in histogram **903** of FIG. **9** as compared to conventional approximations shown in histograms **901** and **902** of FIG. **9,** respectively.

Embodiments of the invention further improve the performance and computational speed of the computer generating the restored model by linearizing the new thickness-preserving constraint. As an example, the new thickness-preserving constraint may be linearized as follows. $\|\mathbf{grad}\ (t'_\tau + \varepsilon_\tau)\| = 1$ may be squared to obtain $\|\mathbf{grad}\ t'_\tau\|^2 + \|\mathbf{grad}\ \varepsilon_\tau\|^2 + \| 2 \cdot \mathbf{grad}\ t'_\tau \cdot \mathbf{grad}\ \varepsilon_\tau \| = 1$. The error correction term $\varepsilon_\tau$ may be generated such that the square of its spatial variation, $\|\mathbf{grad}\ \varepsilon_\tau\|^2$, is negligible. Accordingly, the thickness-preserving constraint simplifies to a new linear thickness-preserving constraint of $\mathbf{grad}\ \varepsilon_\tau \cdot \mathbf{grad}\ t'_\tau \cong \frac{1}{2} \{1-\|\mathbf{grad}\ t'_\tau\|^2\}$ (eqn. (37)). This thickness-preserving constraint is linear because $t'_\tau$ is already known, so the constraint is a relationship between the gradient of the error $\varepsilon_\tau$ and the gradient of the known first approximation of the vertical coordinate $t'_\tau$. The computer may therefore compute the new thickness-preserving constraint in linear time, which is significantly faster than computing the non-linear constraints $\|\mathbf{grad}\ t_\tau\| = 1$ or $\|\mathbf{grad}\ (t'_\tau + \varepsilon_\tau)\| = 1$.

Contrary to conventional methods, the computational complexity for performing the restoration transformation according to embodiments of the invention is significantly reduced compared to classical methods that are based on the mechanics of continuous media. As a consequence, the modeling computer uses significantly less computational time and storage space to generate the inventive restoration model.

Contrary to conventional methods that allow variations of geological volumes and deformations, embodiments of the invention implement a new set of geometrical constraints and boundary conditions that preserve geological volumes and deformations while adhering to geological boundaries.

Contrary to conventional methods, embodiments of the invention restore faults along fault striae (e.g., see FIG. **12**) induced by the twin points associated with the paleo-geographic coordinates of a depositional (e.g., GeoChron) model, given as input of the restoration method.

An ideal restoration should also transform the horizontal coordinates $u_\tau$ and $v_\tau$ in a manner that strictly honors lateral spatial distribution, to preserve areas and volumes of the Earth, so that terrains are not stretched or squeezed over time in the horizontal dimensions. However, conventional restoration transformations based on depositional coordinates (e.g., paleo-geographic coordinates $u$ and $v$) typically deform the horizontal coordinates, forcing terrains to stretch and squeeze, resulting in errors in the restoration model.

Embodiments of the invention improve the accuracy of the restoration model at time $\tau$ by establishing horizontal restoration coordinates $u_\tau$ and $v_\tau$ that restore the horizon surface $H_\tau$ deposited at time $\tau$ consistently with horizontal depositional coordinates $u$ and $v$ whilst minimizing deformations. In one embodiment, on the horizon surface $H_\tau$ only, the horizontal restoration coordinates $u_\tau$ and $v_\tau$ are equal to the depositional coordinates $u$ and $v$ (see e.g., equation (20)) and the spatial variations of the horizontal restoration coordinates $u_\tau$ and $v_\tau$ are preserved with respect to the horizontal depositional coordinates $u$ and $v$ (see e.g., equation (21)). Thus, each restoration model at time $\tau$, presents a horizon surface $H_\tau$ as it was configured at that time $\tau$ when it was originally deposited. Additionally or alternatively, horizontal restoration coordinates $u_\tau$ and $v_\tau$ are modeled in a tectonic style (e.g., using constraints (22) or (23)) that is consistent with that of the horizontal coordinates $u$ and $v$ of the depositional model, which makes the restoration more accurate because the geological context is taken into account. Additionally or alternatively, horizontal restoration coordinates $u_\tau$ and $v_\tau$ are modeled to minimize deformations induced by the restoration of horizon $H_\tau$, rather than minimizing deformations in the whole volume G. This may be achieved by implementing constraints (41) and (42) that only enforce orthogonality of gradients of $u_\tau$ and $v_\tau$ with local axes $\boldsymbol{b}_\tau$ and $\boldsymbol{a}_\tau$, but which do not constrain the norm of **grad** $u_\tau$ and **grad** $v_\tau$, as is typically constrained for horizontal depositional coordinates $u$ and $v$ consistent with the depositional time model. Horizontal restoration coordinates $u_\tau$ and $v_\tau$ may also be constrained only in $G_\tau$, thereby only taking into account the part of the subsurface to be restored, not the entire model G. Additionally or alternatively, horizontal restoration coordinates $u_\tau$ and $v_\tau$ may be constrained to be equal on opposite sides of $\tau$-active faults at twin point locations, where the twin points are computed from fault striae, which also ensures consistency with the depositional model (see e.g., equation (43)). Additionally or alternatively, horizontal restoration coordinates $u_\tau$ and $v_\tau$ are constrained to be equal on opposite sides of $\tau$-inactive faults at mate point locations to cancel the effect of inactive faults on the restoration model (see e.g., equation (43)).

Reference is made to FIG. **17,** which is a flowchart of a method to restore a geological model with improved accuracy using a new thickness-preserving constraint, according to an embodiment not forming part of the present invention.

In operation **1710**, a processor may receive a 3D model of the present day measured geometry (e.g., present day model **202**) comprising one or more folded (e.g., curvilinear or non-planar) geological horizon surfaces (e.g., **210**). The present day model may be measured tomographically by scanning the Earth's subsurface e.g., as described in reference to FIGS. **14** and **15.**

In operation **1720,** a processor may select or receive a past restoration time $\tau$ that is "intermediate" or prior to the present time and after the start of the subsurface's deposition (the time period when an oldest horizon surface in the 3D model was originally deposited).

In operation **1730,** a processor may restore the 3D model from the present day measured geometry (e.g., present day model $G_\tau$ **202** in xyz-space $G$ **220**) to the predicted past geometry at the restoration time in the past $\tau$ (e.g., restored model $\overline{G}_\tau$ **203** in $u_\tau v_\tau t_\tau$- space **219**) using a 3D restoration transformation (e.g., $u_\tau v_\tau t_\tau$-transform **201**). At the restored time in the past $\tau$, the geological layers above $H_\tau$ (e.g., $H_{\tau\tau+1} \ldots H_n$) did not yet exist, so the subregion above $H_\tau$ in the present day space $G$ **220** is eliminated or omitted, and only the subregion $G_\tau$ **202** below and aligned with $H_\tau$ (e.g., $H_1 \ldots H_\tau$) in the present day space $G$ **220** is restored. The 3D restoration transformation includes a vertical component that restores the geometry to the vertical coordinate $t_\tau$ and two lateral or horizontal components that restore the geometry to the horizontal coordinates $u_\tau$ and $v_\tau$. The restored vertical coordinate $t_\tau$ and horizontal coordinates $u_\tau$ and $v_\tau$ represent the predicted vertical and horizontal positions, respectively, where particles in the subsurface were located in the Earth at the restoration time in the past $\tau$. Because the region of the subsurface deposited after the restoration time $\tau$ (e.g., deposited shallower in the subsurface than $H_\tau$) did not yet exist at the time of the restored model, the processor may restore and compute coordinates for the part or subregion $G_\tau$ of the subsurface $G$ that was deposited at a geological time of deposition t prior to or during the past restoration time $\tau$ (e.g., deposited deeper than, or at the same layer in the subsurface as, $H_\tau$). Accordingly, the restored model eliminates or omits all relatively shallower or younger horizon surfaces or layers that were originally deposited after the past restoration time $\tau$.

The processor may restore the vertical coordinate $t_\tau$ such that points along a horizon surface $H_\tau$ (e.g., **210**) modeling sediment that was deposited at the selected restoration time $\tau$ have a substantially constant value for the restored vertical coordinate $t_\tau$ (see e.g., eqn. (19)). Further, the processor may restore the vertical coordinate $t_\tau$ such that at any location in the 3D model, the restored vertical coordinate $t_\tau$ is equal to a sum of a first approximation $t'_\tau$ of the vertical coordinate and an error correction term $\varepsilon_\tau$, wherein the error correction term $\varepsilon_\tau$ is computed by solving a relationship in which a variation in the sum of the first approximation $t'_\tau$ of the vertical coordinate and the error correction term $\varepsilon_\tau$ between any two points separated by an infinitesimal difference in the direction of maximal variation of the sum is approximately equal to the distance between the points in the direction of maximal variation. The error correction term $\varepsilon_\tau$ may correct errors in the first approximation $t'_\tau$ of the vertical coordinate. This constraint may be represented by a linear second order approximation (see e.g., eqn. (37)).

In some embodiments, the processor computes the first approximation $t'_\tau$ of the vertical coordinate by solving a relationship in which the spatial variation of the vertical coordinate $t'_\tau$ is locally approximately proportional to the spatial variation of a geological time of deposition t. In some embodiments, the coefficient of proportionality is locally equal to the inverse of the magnitude of the maximal spatial variation of the geological time of deposition (see e.g., eqn. (34)-(1)). This relationship may give the vertical restoration coordinate $t_\tau$ the shape of the horizon $H_\tau$ because, on the horizon, the gradient of depositional time t is normal to the horizon surface. Thus, the ratio grad $t/\|$grad t$\|$ follows the shape of the horizon.

In some embodiments, the processor computes the first approximation $t'_\tau$ of the vertical coordinate by solving a relationship in which any infinitesimal displacement in the direction orthogonal to horizon surface $H_\tau$ results in a variation of the vertical coordinate $t'_\tau$ approximately equal to the length of the infinitesimal displacement for points on the horizon surface $H_\tau$ (see e.g., eqn. (33)-(1)).

In some embodiments, the processor computes the restored vertical coordinate $t_\tau$ in parts of the subsurface which are older than restoration time $\tau$ such that iso-value surfaces of the restored vertical coordinate $t_\tau$ are parallel to the horizon surface $H_\tau$ and the difference in the restored vertical coordinate $t_\tau$ between two arbitrary iso-values is equal to the distance between the corresponding iso-surfaces (see e.g., eqn. (31)). Parallel surfaces may be planar parallel in the restored model, and curved parallel (e.g., having parallel tangent surfaces) in present day model, such that the surfaces are non-intersecting at limits.

In some embodiments, the error correction term $\varepsilon_\tau$ is null at points along the horizon surface $H_\tau$ that was deposited at the selected restoration time in the past $\tau$ so that the restored horizon surface $H_\tau$ is flat (see e.g., eqn. (36)).

In some embodiments, the restored horizontal coordinates $u_\tau$ and $v_\tau$ are constrained such that for each point along the horizon surface $H_\tau$ that was deposited at the selected restoration time in the past $\tau$: the restored horizontal coordinates $u_\tau$ and $v_\tau$ are equal to depositional horizontal coordinates $u$ and $v$, respectively, and the spatial variations of the restored horizontal coordinates $u_\tau$ and $v_\tau$ are equal to the spatial variations of the depositional horizontal coordinates $u$ and $v$, respectively (see e.g., eqns. (20)-(21)). On average, globally over the entire model, the processor may compute $\|\mathbf{grad}\ u\| = 1$ and $\|\mathbf{grad}\ v\| = 1$. However, locally, this is not necessarily true e.g., on horizon $H\tau$. So, while the processor sets $\mathbf{grad}\ u_\tau = \mathbf{grad}\ u$ and $\mathbf{grad}\ v_\tau = \mathbf{grad}\ v$ on $H\tau$, the processor may not constrain $\|\mathbf{grad}\ u_\tau\| = 1$ and $\|\mathbf{grad}\ v_\tau\| = 1$ on $H\tau$. Moreover, the processor may not constrain $\mathbf{grad}\ u_\tau$ to be orthogonal to $\mathbf{grad}\ t_\tau$. This results from the boundary condition on $H\tau$ and propagation through its constant gradient.

In some embodiments, the restored horizontal coordinates $u_\tau$ and $v_\tau$ are constrained in parts of the subsurface which are older than restoration time $\tau$ such that directions of maximal change of the restored horizontal coordinates $u_\tau$ and $v_\tau$ are linearly constrained by a local co-axis vector $\mathbf{b}_\tau$ and a local axis vector $\mathbf{a}_\tau$, respectively (see e.g., eqn. (41)).

In some embodiments, the local axis vector $\mathbf{a}_\tau$ is oriented approximately in the direction of maximal change of depositional horizontal coordinate $u$ and orthogonal to the direction of maximal change of the vertical restoration coordinate $t_\tau$, and the local co-axis vector $\mathbf{b}_\tau$ is oriented orthogonal to the direction of the local axis vector $\mathbf{a}_\tau$ and orthogonal to the direction of maximal change of the vertical restoration coordinate $t_\tau$ (see e.g., eqn. (40)).

In some embodiments, if the tectonic style of the 3D model is minimal deformation, the restored horizontal coordinates $u_\tau$ and $v_\tau$ are computed over the part of the 3D model of the subsurface which is older than restoration time $\tau$ such that the directions of maximal change of $u_\tau$ and $v_\tau$ are approximately orthogonal to the local co-axis vector $\mathbf{b}_\tau$ and the local axis vector $\mathbf{a}_\tau$, respectively. For example, equation (40) constrains the local axis vector $\mathbf{a}_\tau$ to be parallel to the gradient of $u$ and the local co-axis vector $\mathbf{b}_\tau$ to be orthogonal to the local axis vector $\mathbf{a}_\tau$, which means that the gradient of $u$ is orthogonal to the local co-axis vector $\mathbf{b}_\tau$. Equation (41) further constrains the gradient of $u_\tau$ to be approximately orthogonal to the local co-axis vector $\mathbf{b}_\tau$. Accordingly, the gradient of $u_\tau$ is approximately parallel to the gradient of $u$. The same logic implies the gradient of $v_\tau$ is approximately parallel to the gradient of $v$.

In some embodiments, if the tectonic style of the 3D model is flexural slip, the restored horizontal coordinates $u_\tau$ and $v_\tau$ are computed over the part of the 3D model of the subsurface which is older than restoration time $\tau$ such that projections of their directions of maximal change over the iso-value surfaces of the restored vertical coordinate $t_\tau$ are approximately orthogonal to local co-axis vector $\mathbf{b}_\tau$ and the local axis vector $\mathbf{a}_\tau$, respectively (see e.g., eqn. (42)).

In some embodiments, the values of the restored horizontal coordinates $u_\tau$ and $v_\tau$ are constrained in parts of the subsurface which are older than the restoration time $\tau$ to be respectively equal on twin points on $\tau$-active faults, wherein twin points are points on opposite sides of a $\tau$-active fault that were collocated at the restoration time $\tau$ and are located on the same fault stria in the present day model, to merge the twin points into the same position in the restored model by sliding the twin points towards each other in a direction tangential to the surface of the $\tau$-active fault (see e.g., eqn. (43)).

In some embodiments, the values of the restored horizontal coordinates $u_\tau$ and $v_\tau$ are constrained in parts of the subsurface which are older than the restoration time $\tau$ to be respectively equal on mate points on $\tau$-inactive faults, wherein mate points are points on opposite sides of a $\tau$-inactive fault that are collocated at present day time, to move mate points together on opposite sides of $\tau$-inactive faults (see e.g., eqn. (43)).

In operation **1740,** a processor may display an image of the restored 3D model of the subsurface geology of the Earth such that each point in the 3D model is positioned at the restored coordinates $u_\tau$, $v_\tau$, $t_\tau$ defining the location that a piece of sediment represented by the point was located at the restoration time in the past $\tau$.

In some embodiments, the processor may receive an increasing chronological sequence of past restoration times $\tau_1$, $\tau_2$, ..., $\tau_n$. For each restoration time $\tau_i$ in sequence $\tau_1$, $\tau_2$, ..., $\tau_n$, the processor may repeat operations **1720-1730** to compute a corresponding 3D restoration transformation $\mathbf{R}\tau_i$. 3D restoration transformation $\mathbf{R}\tau_i$ restores the part of the subsurface older than horizon $H_{\tau i}$ to its predicted past geometry at time $\tau_i$, e.g., to 3D restored coordinates $u_{\tau i}$, $v_{\tau i}$ and $t_{\tau i}$.

In operation **1750,** in some embodiments, a processor may play a moving image sequence in which the 3D model is iteratively restored in a forward or reverse order of the sequence of past restoration times $\tau_1$, $\tau_2$, ..., $\tau_n$ to visualize changes in the subsurface geology over the passage of time.

In some embodiments, the processor may edit the model in the restoration space and then reverse the restoration transformation to apply those edits in the present day space. For example, the processor may edit the depositional values *u, v,* and *t* associated with the restored 3D model, and then reverse transform the restored 3D model forward in time from the predicted past geometry at the restoration time in the past $\tau$ to the present day measured geometry using an inverse of the 3D restoration transformation **200** to incorporate the edits from the restored model into the present day model.

• **Decompaction at Intermediate Restoration Time** $\tau$:

Compaction may refer to the pore space reduction in sediment within the Earth's subsurface. Compaction is typically caused by an increase in load weight of overlying geological layers as they are deposited over time. As sediment accumulates, compaction typically increases, as time and depth increase. Conversely, porosity typically decreases, as time and depth increase. For example, at a depositional time $t_0$ when a layer is deposited with no overlaying geology, the depositional model has minimal or no compaction and maximum depositional porosity $\overline{\psi}_0$. At an intermediate restoration time $\tau$, when there is an intermediate load of overlying deposited layers, the restored model has an intermediate level of compaction and an intermediate level of porosity $\overline{\psi}_\tau$ (or simply $\overline{\psi}$). At the present-day time $t_p$, when the present-day model has the most deposited layers, the present-day model typically has a maximal level of compaction and minimum porosity $\overline{\psi}_p$. Accordingly, the depositional porosity $\overline{\psi}_0$ is greater than the intermediate time porosity $\overline{\psi}_\tau$, which in turn is greater than the present-day porosity $\overline{\psi}_p$, i.e., $\overline{\psi}_0 > \overline{\psi}_\tau > \overline{\psi}_p$. Further, because deeper layers are typically deposited at relatively earlier times than are shallower layers, within each model at the same time $\tau$, a relatively deeper geological layer typically experiences a relatively greater load than does a relatively shallower geological layer, resulting in greater compaction and lesser porosity.

Whereas compaction is a result of deposition over the forward passage of time, the process of restoration reverses the passage of time to visualize geology at an intermediate time in the past $\tau$ (before the present day and after the start of deposition of the oldest subsurface layer). Accordingly, embodiments of the invention generate a restoration model by reversing the effects of compaction in a process referred to as "decompaction" to more accurately depict how the geometry of geological layers change as their depths increase. Whereas compaction compresses the geological layers, decompaction reverses those effects, decompressing and uplifting terrains, resulting in increased layer thicknesses and increased intermediate time porosity $\overline{\psi}_\tau$ (or simply $\overline{\psi}$) in the restored domain as compared with the compacted present-day domain $\overline{\psi}_p$. Decompaction decompresses the geology by a greater amount the earlier the intermediate restoration time $\tau$ is in the past and the deeper the layer is underneath the Earth's surface.

Conventional decompaction techniques, however, are notoriously unreliable. Laboratory experiments on rock samples show that, during burial when sediments contained in a volume $\overline{V}(r_\tau)$ compact under their own weight, their porosity $\overline{\psi}(r_\tau)$ exponentially decreases according to Athy's law:

$$\overline{\Psi}(\mathbf{r}_\tau) \; \simeq \; \overline{\Psi}_o(\mathbf{r}_\tau) \cdot exp\left\{-\overline{\kappa}(\mathbf{r}_\tau) \cdot \delta(\mathbf{r}_\tau)\right\} \qquad \forall \, \overline{\mathbf{r}}_\tau \in \overline{G}_\tau \qquad\qquad (52)$$

where $\overline{V}(r_\tau)$ represents an infinitely small volume of sediment centered on a point $r_\tau \in \overline{G}_\tau$ underneath the sea floor $\overline{S}_\tau(0)$ $\equiv \overline{H}_\tau$, $\delta(\overline{r}_\tau)$ is the absolute distance, or depth, from point $\overline{r}_\tau \in \overline{G}_\tau$ to sea floor $\overline{S}_\tau(0)$ measured at restoration time $\tau$, and $\overline{\psi}_0(\overline{r}_\tau) < 1$ and $\overline{\kappa}(\overline{r}_\tau)$ are known non-negative coefficients which depend only on rock type at location $\overline{r}_\tau$. $\overline{\psi}_0(\overline{r}_\tau)$ is the porosity of the rock type with approximately no (zero) compaction, i.e., the porosity at its depositional time $t_0$ before any layers were deposited to compress from above. $\overline{\kappa}$ is an experimental measurement derived from compression experiments of Athy's law performed in laboratory tests. As an example, assuming that geological depth $\overline{\delta}(r_\tau)$ is expressed in meters, the following average coefficients for sedimentary terrains were observed in southern Morocco:

| *Rock type* | $\overline{\psi}_0$ | $\overline{\kappa}$ |
|---|---|---|
| Siltstone | 0.62 | $0.57 \times 10^{-3}$ |
| Clay | 0.71 | $0.77 \times 10^{-3}$ |
| Sandstone | 0.35 | $0.60 \times 10^{-3}$ |
| Carbonates | 0.46 | $0.23 \times 10^{-3}$ |
| Dolomites | 0.21 | $0.61 \times 10^{-3}$ |

Because, in the restored $\overline{G}\tau$-space, $-t_\tau(\overline{r}_\tau)$ measures the vertical distance from point $\overline{r}_\tau$ to the sea floor $\overline{S}\tau(0)$, the depth $\delta(\overline{r}_\tau)$ in equation (52) may be equivalently expressed as:

$$\delta(\overline{r}_\tau) = -t_\tau(\overline{r}_\tau) \qquad \forall\, \overline{r}_\tau \in \overline{G}\tau \qquad (53)$$

Accordingly, in the context of embodiments of the invention, Athy's law may be reformulated as:

$$\overline{\Psi}(\mathbf{r}_\tau) \simeq \overline{\Psi}_o(\mathbf{r}_\tau) \cdot exp\left\{ \overline{\kappa}(\mathbf{r}_\tau) \cdot t_\tau(\mathbf{r}_\tau) \right\} \qquad \forall\, \mathbf{r}_\tau \in \overline{G}_\tau \qquad (54)$$

Athy's law alone, however, incorrectly models porosity $\overline{\psi}$ and therefore often models decompaction inaccurately. Under Athy's law, restoration porosity $\overline{\psi}$ depends only on predictions extrapolated based on rock properties ($\overline{\psi}_0$ and $\overline{\kappa}$), but does not actually measure real-world porosity. Because Athy's law is not rooted in the real-world geology, it often leads to inaccurate overestimated or underestimated compaction. Further, Athy's law models compaction based on porosity only at the time of earliest deposition, $\overline{\psi}_0$, but not porosity that occurs in the present-day, $\overline{\psi}_p$. Once the model is transformed from the present-day to restored time $\tau$, but prior to decompaction, the restored model still erroneously exhibits present-day compaction $\overline{\psi}_p$. Because Athy's law does not eliminate present-day compaction, which erroneously over-compresses terrains compared to restoration porosity, the resulting model is incorrectly decompacted at the restoration time $\tau$.

Embodiments of the invention improve decompaction techniques by modeling decompaction at an intermediate restoration time in the past $\tau$ based on real-world measurements of present-day compaction $\overline{\psi}_p$ experimentally observed within the subsurface geology of the Earth. Modeling decompaction based on present-day compaction measurements accounts for the many real-world geological variables, such as those in the above example scenarios, that Athy's law misses.

Some embodiments accurately decompact the restoration model by simultaneously (1) removing the impact of present-day compaction affecting terrains in (incorrectly) restored version at time $\tau$ (e.g., "total" decompaction, such as, defined in equations (58)); and (2) recompacting these terrains according to their depth in the restored model (e.g., "partial" recompaction, such as, defined in equations (59)). Embodiments of the invention solve the difficult problem of performing these two operations (decompaction and recompaction) simultaneously.

Reference is made to FIG. **18**, which schematically illustrates an example 3D geological volume of a compacted model **1810** representing the porosity of a subsurface region before decompaction (right image) and a corresponding decompacted model **1800** representing the porosity of the region after decompaction (left image) in the restored $\overline{G}\tau$-space at an intermediate restoration time in the past $\tau$, according to an embodiment of the invention. Embodiments of the invention replace original restoration coordinates of the compacted model **1810** with new restoration coordinates $\{u_\tau, v_\tau, t_\tau\}_{r_\tau}$ of the decompacted model **1800**. Decompacted model **1800** may represent a new $u_\tau, v_\tau, t_\tau$-transform from the present-day model in $G\tau$-space to the restored $\overline{G}\tau$-space that restores the terrains and induces thickness variations as a consequence of decompaction. This decompaction transformation is modeled to be the inverse ("reversing time") of the compaction that occurred over the forward passage of time between geological-time $\tau$ and the present geological-time. Some embodiments may start with a region of the compacted model **1810** under the horizon $H\tau$ (geology deposited before time $\tau$ with a present-day level of compaction) and restore the region to the decompacted model **1800** in $\overline{G}\tau$-space (geology deposited before time $\tau$ with a level of compaction at intermediate time $\tau$). Because the compacted model **1810** has not yet been decompacted, its low porosity is similar to the present-day porosity, yielding vertical lengths $d\overline{h}(r_\tau)$ that are too short and compressed for the restored time $\tau$. Accordingly, decompaction vertically stretches the lengths $d\overline{h}^{\oplus}(\overline{r}_\tau)$ of the decompacted model **1800** to yield a greater porosity predicted at the time in the past $\tau$. This process may repeat iteratively, layer-by-layer, starting at the top horizon $H\tau$ deposited at the restoration time $\tau$ and ending at the bottom horizon deposited at the depositional time $t_0$.

Elasto-plastic mechanical frameworks developed to model compaction rely on a number of input parameters which may be difficult for a geologist or geomodeler to assess and are solved using a complex system of equations. Isostasic approaches are typically simpler to parameterize and still provide useful information on basin evolution. Therefore, compaction may be considered a primarily one-dimensional vertical compression induced by gravity which mainly occurs in the early stages of sediment burial when horizons are still roughly horizontal surfaces close to the sea floor.

At any point $\overline{r}_\tau \in \overline{G}_\tau$ within a geological layer, the decompacted thickness $d\overline{h}^{\oplus}(\overline{r}_\tau)$ e.g., of a vertical probe of infinitely small volume $\overline{V}(r_\tau)$ comprising an infinitely short column of sediment roughly orthogonal to the restored horizon

passing through $\bar{r}_\tau$ is linked to the thickness $d\bar{h}(\bar{r}_\tau)$ of the shorter, compacted vertical column by, for example, the following relationship:

$$\forall\, \overline{\mathbf{r}}_\tau \in \overline{G}_\tau \; : \; \left| \begin{array}{rcl} d\bar{h}^{\oplus}(\overline{\mathbf{r}}_\tau) & = & \dfrac{1}{1 - \bar{\phi}_\tau(\overline{\mathbf{r}}_\tau)} \cdot d\bar{h}(\overline{\mathbf{r}}_\tau) \\[2ex] \text{with} : \bar{\phi}_\tau(\overline{\mathbf{r}}_\tau) = \overline{\Psi}_o(\overline{\mathbf{r}}_\tau) - \overline{\Psi}(\overline{\mathbf{r}}_\tau) \in [0,1[ \end{array} \right. \qquad (55)$$

In this equation, $\overline{\phi(r_\tau)}$ denotes the "compaction coefficient" which characterizes the vertical shortening of the probe at restored location $r_\tau \in \overline{G}\tau$. As an example, Fig. **18** shows the same infinitely short vertical column of sediment where average porosity is equal to ($\overline{\psi}_0$ = 1/3) before compaction and ($\overline{\psi}$ = 1/6) after compaction. The compaction coefficient ($\overline{\psi}_0 - \overline{\psi}$) is then equal to ($\overline{\phi}$ = 1/6) and column shortening (1 - $\overline{\phi}$) is (5/6).

**Taking present day compaction into account to decompact the restored model in $\overline{G}\tau$-space:**

Compacted model **1810,** built assuming there is no compaction, incorrectly ignores the compaction characterized by present-day porosity $\overline{\psi}_p(r_\tau)$. Compacted model **1810** thus results in geology with greater compaction and smaller porosity than occurred at intermediate restoration time $\tau$. Embodiments of the invention correct the restored model by decompacting compacted model **1810**. The decompaction process involves decompressing the vertical dimension's compacted height $d\bar{h}(\bar{r}_\tau)$ or compacted time $d\bar{t}(\bar{r}_\tau)$ (relatively shorter) to elongate the vertical dimension with a decompacted height $d\bar{h}^{\oplus}(\bar{r}_\tau)$ or decompacted time $d\bar{t}^{\oplus}(\bar{r}_\tau)$ (relatively longer) (see e.g., equation (60) and/or (64)). This decompaction of height (e.g., in equation (60)) or time (e.g., in equation (64)) is elongated based on compaction coefficient $\bar{\phi}_\tau^{\ominus}(\bar{r}_\tau)$, which is a function of the present-day porosity $\overline{\psi}_p(r_\tau)$ (see e.g., equation (56)). Because the present-day porosity $\overline{\psi}_p(r_\tau)$ is less than the restoration porosity $\overline{\psi}_\tau(r_\tau)$ the ratio term in equations (60) and (64) is > 1. Accordingly, the decompacted length $d\bar{h}^{\oplus}(\bar{r}_\tau)$ and time $d\bar{t}^{\oplus}(\bar{r}_\tau)$ are greater than the compacted length $d\bar{h}(\bar{r}_\tau)$ and time $d\bar{t}(\bar{r}_\tau)$, respectively, resulting in an elongation of the vertical dimension after decompaction. This elongation is thus defined based on real-world measurements of the present-day porosity $\overline{\psi}_p(\bar{r}_\tau)$, which yields more accurate decompaction than conventional simulations that ignore real-world porosity and compaction, such as Athy's law.

Present-day porosity $\overline{\psi}_p(\bar{r}_\tau)$ is measured by direct inspection of the Earth's subsurface material composition. In one example, porosity may be measured by directly analyzing core samples of the Earth's subsurface, for example, using a variety of methods to compare bulk rock volume and total sample volume. In one example, porosity may be derived from well logs, which are measurements performed on rock inside wells. Samples may be collected and porosity measured at regularly or irregularly spaced intervals within the Earth (e.g., bored into the Earth or along well paths). After porosity measurements are taken at those discrete locations, porosity may be extrapolated throughout the entire studied domain. In one example, at least one (and preferably multiple) samples are collected at each distinct depositional layer or depth (e.g., deposited at each distinct period of time).

Example decompaction processes may proceed as follows:

Let $\bar{\phi}_\tau^{\ominus}(\bar{r}_\tau)$ be a total compaction coefficient (representing a total compaction as a difference between the minimum present-day porosity and maximum depositional porosity) and let $\bar{\phi}_\tau^{\oplus}(\bar{r}_\tau)$ be an intermediate compaction coefficient (representing a partial compaction as a difference between the intermediate restoration porosity and maximum depositional porosity). The pair of compaction coefficients, $\bar{\phi}_\tau^{\ominus}(\bar{r}_\tau)$ and $\bar{\phi}_\tau^{\oplus}(\bar{r}_\tau)$, may be defined, for example, as:

$$\forall\, \overline{\mathbf{r}}_\tau \in \overline{G}_\tau \; : \; \left| \begin{array}{rcl} \bar{\phi}_\tau^{\ominus}(\overline{\mathbf{r}}_\tau) & = & \overline{\Psi}_o(\overline{\mathbf{r}}_\tau) - \overline{\Psi}_p(\overline{\mathbf{r}}_\tau) \\[2ex] \bar{\phi}_\tau^{\oplus}(\overline{\mathbf{r}}_\tau) & = & \overline{\Psi}_o(\overline{\mathbf{r}}_\tau) - \overline{\Psi}(\overline{\mathbf{r}}_\tau) \end{array} \right. \qquad (56)$$

Because compaction typically increases over time, the present day porosity $\overline{\psi}_p(\bar{r}_\tau)$ may be assumed to be less than the restored time porosity $\overline{\psi}(\bar{r}_\tau)$:

$$\overline{\psi}_p(\bar{r}_\tau) < \overline{\psi}(\bar{r}_\tau) \qquad \forall\, \bar{r}_\tau \in \bar{G}\tau \qquad (57)$$

This inequality implies that intermediate compaction coefficient $\bar{\phi}_\tau^{\oplus}(\bar{r}_\tau) \le$ total compaction coefficient $\bar{\phi}_\tau^{\ominus}(\bar{r}_\tau)$, and so, the ratio in equations (60) and (64) is greater than 1, resulting in a vertical elongation in height to $d\bar{h}^{\oplus}(\bar{r}_\tau)$ and/or time to $d\bar{t}^{\oplus}(\bar{r}_\tau)$ in the decompacted model **1800** relative to the compacted model **1810**.

Considering once again the vertical probe introduced above in restored space $\overline{G}_\tau$, decompaction may proceed by using equation (55) twice, once in a forward and then in a backward transformation, for example, as follows:

    1. First, to completely cancel out the compaction characterized by given, present day porosity $\overline{\psi}_p(\bar{r}_\tau)$, a "total" vertical decompaction is applied by updating $d\bar{h}(\bar{r}_\tau)$ as follows:

$$d\bar{h}_o(\mathbf{\bar{r}}_\tau) = \frac{1}{1 - \bar{\phi}_\tau^{\ominus}(\mathbf{\bar{r}}_\tau)} \cdot d\bar{h}(\mathbf{\bar{r}}_\tau) \qquad (58)$$

After canceling the total compaction in the first operation, the probe porosity is equal to the depositional porosity $\overline{\psi}_0(\bar{r}_\tau)$ having no or negligible compaction.

    2. Next, a "partial" recompaction is applied as a function of the actual restoration porosity $\overline{\psi}(\bar{r}_\tau)$ approximated by equation (54) at geological-time $\tau$, for example, as:

$$d\bar{h}^{\oplus}(\mathbf{\bar{r}}_\tau) = \{1 - \bar{\phi}_\tau^{\oplus}(\mathbf{\bar{r}}_\tau)\} \cdot d\bar{h}_o(\mathbf{\bar{r}}_\tau) \qquad (59)$$

After this second operation, the probe porosity is equal to the intermediate time restoration porosity $\overline{\psi}(\bar{r}_\tau)$.

Therefore, to take present-day compaction into account, equation (55) may be replaced, for example, by:

$$d\bar{h}^{\oplus}(\mathbf{\bar{r}}_\tau) = \frac{1 - \bar{\phi}_\tau^{\oplus}(\mathbf{\bar{r}}_\tau)}{1 - \bar{\phi}_\tau^{\ominus}(\mathbf{\bar{r}}_\tau)} \cdot d\bar{h}(\mathbf{\bar{r}}_\tau) \qquad \forall\, \mathbf{\bar{r}}_\tau \in \overline{G}_\tau \qquad (60)$$

where compaction coefficient $\bar{\phi}_\tau^{\ominus}(\bar{r}_\tau)$ is based on the measured present-day porosity $\overline{\psi}_p(\bar{r}_\tau)$, for example, as defined in equation (56). Accordingly, the decompacted vertical thickness $d\bar{h}^{\oplus}(\bar{r}_\tau)$ at intermediate restoration time $\tau$ is elongated based on real-world measurements of the present-day compaction $\overline{\psi}_p(\bar{r}_\tau)$ experimentally observed within the subsurface of the Earth.

**Decompaction in GeoChron Based Restoration**

In the restored $\overline{G}\tau$-space, the geological time of deposition $t_\tau(\bar{r}_\tau)$ may be interpreted as an arc-length abscissa $s(\bar{r}_\tau)$ along the vertical straight line passing through $\bar{r}_\tau$ oriented in the same direction as the vertical unit frame vector $\{\bar{r}_{t_\tau} = \bar{r}_z\}$. Therefore, in the $\overline{G}\tau$-space,

$$dt_\tau(\mathbf{\bar{r}}_\tau) = ds(\mathbf{\bar{r}}_\tau) = d\bar{h}(\mathbf{\bar{r}}_\tau) \qquad (61)$$

may represent the height of an infinitely short vertical column of restored sediment located at point $\bar{r}_\tau \in \overline{G}\tau$, subject to present-day compaction. As a consequence, to take compaction into account in the restored $\overline{G}\tau$-space, according to

equations (60) and (61), geological-time $t_\tau(\bar{r}_\tau)$ may be replaced by a "decompacted" geological-time $t_\tau^\oplus(\bar{r}_\tau)$ such that, for example:

$$\left. \frac{dt_\tau^\oplus}{dt_\tau} \right|_{\overline{\mathbf{r}}_\tau} = \frac{d\bar{h}^\oplus(\overline{\mathbf{r}}_\tau)}{d\bar{h}(\overline{\mathbf{r}}_\tau)} = \frac{1 - \bar{\phi}_\tau^\oplus(\overline{\mathbf{r}}_\tau)}{1 - \bar{\phi}_\tau^\ominus(\overline{\mathbf{r}}_\tau)} \tag{62}$$

Assuming that $\{\bar{r}_{t_\tau} = \bar{r}_z\}$ is the unit vertical frame vector of the $\overline{G}\tau$-space, it follows, for example, that:

$$\mathbf{grad}\, t_\tau^\oplus(\overline{\mathbf{r}}_\tau) \cdot \overline{\mathbf{r}}_{t_\tau} = \left. \frac{dt_\tau^\oplus(\overline{\mathbf{r}}_\tau + s \cdot \overline{\mathbf{r}}_{t_\tau})}{ds} \right|_{s=0} = \left. \frac{dt_\tau^\oplus}{dt_\tau} \right|_{\overline{\mathbf{r}}_\tau} \tag{63}$$

From this, it can be concluded that the compacted geological-time $t_\tau(\bar{r}_\tau)$ of point $\bar{r}_\tau \in \overline{G}_\tau$ should be transformed into a decompacted geological-time $t_\tau^\oplus(\bar{r}_\tau)$ , for example, honoring the following differential equation:

$$\mathbf{grad}\, t_\tau^\oplus(\overline{\mathbf{r}}_\tau) \cdot \overline{\mathbf{r}}_{t_\tau} = \frac{1 - \phi_\tau^\oplus(\overline{\mathbf{r}}_\tau)}{1 - \phi_\tau^\ominus(\overline{\mathbf{r}}_\tau)} \qquad \forall\, \overline{\mathbf{r}}_\tau \in \overline{G}_\tau \tag{64}$$

with :

$$\bar{\phi}_\tau^\oplus(\overline{\mathbf{r}}_\tau) = \overline{\Psi}_o(\overline{\mathbf{r}}_\tau) - \overline{\Psi}(\overline{\mathbf{r}}_\tau) \quad \& \quad \bar{\phi}_\tau^\ominus(\overline{\mathbf{r}}_\tau) = \overline{\Psi}_o(\overline{\mathbf{r}}_\tau) - \overline{\Psi}_p(\overline{\mathbf{r}}_\tau)$$

Due to the vertical nature of compaction, on the top restored horizon $\{\overline{S}(0) \equiv \overline{H}_\tau\}$, geological-time $t_\tau^\oplus(\bar{r}_\tau)$ should vanish or reduce to zero and its gradient should be vertical. In other words, in addition to the constraint of equation (64), geological-time $t_\tau^\oplus(\bar{r}_\tau)$ may also honor the following example boundary conditions where $\bar{r}_{u_\tau}$ and $\bar{r}_{v_\tau}$ may represent the unit horizontal frame vectors of the $\overline{G}\tau$-space:

$$\forall\, \overline{\mathbf{r}}_\tau^o \in \{\overline{S}_\tau(0) \equiv \overline{H}_\tau\} \;:\; \left| \begin{array}{lll} 1) & t_\tau^\oplus(\overline{\mathbf{r}}_\tau^o) = & 0 \\[4pt] 2) & \mathbf{grad}\, t_\tau^\oplus(\overline{\mathbf{r}}_\tau^o) \cdot \overline{\mathbf{r}}_{\bar{u}_\tau} = & 0 \\[4pt] 3) & \mathbf{grad}\, t_\tau^\oplus(\overline{\mathbf{r}}_\tau^o) \cdot \overline{\mathbf{r}}_{\bar{v}_\tau} = & 0 \end{array} \right. \tag{65}$$

Boundary condition (65)(1) may ensure that the top restored horizon $\overline{H}_\tau$ is flat and planar at intermediate restoration time $\tau$ when it was deposited. Boundary conditions (65)(2) and (65)(3) may ensure that the direction of change (gradient) of the geological-time $t_\tau(\bar{r}_\tau)$ is vertical in the $\overline{G}\tau$-space.

As compaction is a continuous process, geological-time $t_\tau^\oplus(\bar{r}_\tau)$ may be continuous (e.g., $C^0$-continuous) across all faults affecting $\overline{G}\tau$. As a consequence, in addition to the constraints in equations (64) and (65), for any fault $F$ in $\overline{G}\tau$, geological-time $t_\tau^\oplus(\bar{r}_\tau)$ may also honor the following boundary conditions where ( $\bar{r}_F^\oplus, \bar{r}_F^\ominus$ ) are pairs of "$\tau$-mate-points" defined as collocated points respectively lying on the positive face $\overline{F}^+$ and negative face $\overline{F}^-$ (opposite sides of fault $\overline{F}$) at geological time $\tau$:

$$t_\tau(\overline{\mathbf{r}}_F^\oplus) \;=\; t_\tau(\overline{\mathbf{r}}_F^\ominus) \tag{66}$$

$$\forall\, \overline{F} \in \overline{G}_\tau \quad \& \quad \forall\, (\overline{\mathbf{r}}_F^\oplus, \overline{\mathbf{r}}_F^\ominus)_\tau \in \overline{F}$$

Boundary condition (66) may ensure that, for any pair of collocated points on opposite sides of the fault, the two points have the same decompacted geological-time coordinate $t_\tau^\oplus(\bar{r}_\tau)$. This ensures there are no (or reduced) gaps or overlaps along the fault in the restored $\overline{G}_\tau$-space.

Using an appropriate numerical method, $t_\tau^\oplus(\bar{r}_\tau)$ may be computed in $\overline{G}_\tau$ whilst ensuring that differential equation (64) and boundary conditions (65) and (66) are honored. To ensure smoothness and uniqueness of $t_\tau^\oplus(\bar{r}_\tau)$, the following constraint may also be added:

$$\sum_{(a,b) \in \{u_\tau, v_\tau, t_\tau\}^2} \int_{G_\tau} \left\{ \partial_a \partial_b \, t_\tau^\oplus(\overline{\mathbf{r}}_\tau) \right\}^2 \cdot d\overline{\mathbf{r}}_\tau \qquad \text{minimum} \tag{67}$$

In summary, the following GeoChron Based Restoration technique may be used to take compaction into account:

1. Compute a numerical approximation of the elongated geological-time $t_\tau^\oplus(\bar{r}_\tau)$ in $\overline{G}_\tau$ and use the reverse $u_\tau$, $v_\tau$, $t_\tau$-transform to update $t_\tau(r_\tau)$ in $G_\tau$:

$$t_\tau(\mathbf{r}_\tau) \longleftarrow t_\tau^\oplus(\overline{\mathbf{r}}_\tau) \qquad \forall\, \mathbf{r}_\tau \in G_\tau; \tag{68}$$

2. Recompute numerical approximations of restoration functions $u_\tau(r_\tau)$ and $v_\tau(r_\tau)$ in $G_\tau$ to prevent voids and overlaps from being generated in the restored space, as, according to equations (22) and (23), $u_\tau(r_\tau)$ and $v_\tau(r_\tau)$ depend on $t_\tau(r_\tau)$;
3. Build the "decompacted" restored space $\overline{G}_\tau$ as the new, direct $u_\tau$, $v_\tau$, $t_\tau$-transform of geological space $G_\tau$ observed today.

This approach to decompaction may be seamlessly integrated into the GeoChron Based Restoration framework according to embodiments of the invention and is wholly dissimilar to the sequential decompaction following Athy's law along IPG-lines. In particular, embodiments of the invention perform decompaction based on real-world present-day porosity, a quantity that is accurately measured and extrapolated for any type of rock without having to make assumptions. Additionally, embodiments of the invention allow decompaction in the restored $\overline{G}_\tau$ space representing the Earth's subsurface at an intermediate restoration time in the past $\tau$, before the present day and after the start of deposition of the oldest subsurface layer being imaged.

**An analytical solution**

In the general case, the system of equations (64), (65) and (66) is typically too complex to be solved analytically and may be approximated using numerical methods. However, in a specific case where $\overline{\kappa}(\bar{r}_\tau)$, $\overline{\psi}_0(\bar{r}_\tau)$ and $\overline{\psi}_p(\bar{r}_\tau)$ are all constant $\forall\, \bar{r}_\tau \in \overline{G}_\tau$, the compaction ratio may be integrated at once over the entire domain, and there is no need to iteratively and independently decompact one layer at a time. This special case allows an analytical solution to the system of equations, for example, as follows.

In this special case, in $\overline{G}_\tau$, terrain porosity is homogeneous and characterized as for example follows where $\kappa$, $\psi_0$ and $\psi_p$ are known constants:

$$\forall\, \overline{\mathbf{r}}_\tau \in \overline{G}_\tau \; : \; \left| \begin{array}{rcl} \overline{\kappa}(\overline{\mathbf{r}}_\tau) & = & \kappa \\ \overline{\Psi}_o(\overline{\mathbf{r}}_\tau) & = & \Psi_o \\ \overline{\Psi}_p(\overline{\mathbf{r}}_\tau) & = & \Psi_p \end{array} \right. \qquad (69)$$

Due to its homogeneity, $\overline{G}_\tau$ may be considered continuous and the intrinsic, vertical nature of compaction implies that any function $\overline{\varphi}(r_\tau)$ defined in $\overline{G}_\tau$ associated to compaction may only depend on the vertical component $t_\tau(\overline{r}_\tau)$ of $\overline{r}_\tau$. Therefore, it follows, for example, that:

$$\overline{\varphi}(\overline{\mathbf{r}}_\tau) \; = \; \overline{\varphi}\big(\, t_\tau(\overline{\mathbf{r}}_\tau)\big) \; = \; \overline{\varphi}(t_\tau) \qquad (70)$$

Let constants A and B be defined, for example, by:

$$A = \frac{1 - \Psi_o}{1 - \Psi_o + \Psi_p} \quad ; \quad B = \frac{\Psi_o}{1 - \Psi_o + \Psi_p} \qquad (71)$$

Let the following example functions be derived from Athy's law in equation (54) and equations (56) and (69):

$$\overline{\phi_\tau^{\ominus}}(t_\tau) = \Psi_o - \Psi_p \quad ; \quad \overline{\phi_\tau^{\oplus}}(t_\tau) = \Psi_o - \Psi_o \cdot exp(\kappa \cdot t_\tau) \qquad \forall\, t_\tau \leq 0 \qquad (72)$$

On the one hand, the following example indefinite integral holds true:

$$\int \frac{1 - \overline{\phi_\tau^{\oplus}}(s)}{1 - \overline{\phi_\tau^{\ominus}}(s)} \cdot ds \; = \; \int \big\{ A + B \cdot exp(\kappa s) \big\} \cdot ds \; = \; A \cdot s + \frac{B}{\kappa} \cdot exp(\kappa s) \qquad (73)$$

On the other hand, according to equation (62):

$$t_\tau^{\oplus}(t_\tau) \; = \; \int_0^{t_\tau} \frac{1 - \overline{\phi_\tau^{\oplus}}(s)}{1 - \overline{\phi_\tau^{\ominus}}(s)} \cdot ds \; = \; A \cdot t_\tau \; + \; \frac{B}{\kappa} \cdot \big\{ exp(k \cdot t_\tau) - 1 \big\} \qquad (74)$$

Therefore, for any $\{t_\tau \leq 0\}$, the decompacted restoration function $t_\tau^{\oplus}(t_\tau)$ may be analytically defined, for example, by:

$$t_\tau^{\oplus}(t_\tau) \; = \; A \cdot t_\tau \; + \; \frac{B}{\kappa} \cdot \big\{ exp(\kappa \cdot t_\tau) - 1 \big\} \qquad (75)$$

with :

$$A = \frac{1 - \Psi_o}{1 - \Psi_o + \Psi_p} \quad ; \quad B = \frac{\Psi_o}{1 - \Psi_o + \Psi_p}$$

Other equations or permutations of these equations or terms may also be used.

Reference is made to FIG. **19,** which is a flowchart of a method for decompacting a 3D model of the subsurface geology of the Earth at an intermediate restoration time in the past $\tau$, according to an embodiment of the invention.

In operation **1910,** a processor receives a 3D model of present-day geometry of the subsurface geology and a measure of present-day porosity experimentally measured within the subsurface geology of the Earth. The present day model may be measured tomographically by scanning the Earth's subsurface e.g., as described in reference to FIGS. **14** and **15**. To obtain the measure of present-day porosity, a probe may burrow into the Earth's subsurface or into one or more wells to collect and/or analyze material from within the subsurface geology of the Earth. Samples of subsurface materials are collected at spaced intervals, from which porosity is extrapolated throughout the studied domain.

In operation **1920**, a processor selects a past restoration time $\tau$ that is "intermediate" or prior to the present time and after the start of the subsurface's deposition (the time period when an oldest horizon surface in the 3D model was originally deposited).

In operation **1930**, a processor restores the 3D model from the present day measured geometry (e.g., present day model $G_\tau$ **202** in xyz-space $G$ **220**) to the predicted past geometry at the restoration time in the past $\tau$ (e.g., restored model $\overline{G}_\tau$ **203** in $u_\tau v_\tau t_\tau$- space **219**) using a 3D restoration transformation (e.g., $u_\tau v_\tau t_\tau$-transform **201**). The 3D model may be restored, for example, as described in reference to Fig. **17.** Prior to decompaction, the restored model may be a compacted model (e.g., **1810** of Fig. **18**).

In operation **1940**, a processor decompacts the vertical dimension of the restored 3D model. This elongates compacted vertical lengths in the compacted model (e.g., **1810** of Fig. **18**) to relatively longer vertical lengths in a decompacted model (e.g., **1800** of Fig. **18**). In one embodiment, the vertical length may be a measure of height and the vertical dimension may be expanded from relatively shorter heights $d\overline{h}(\overline{r}_\tau)$ in the compacted model to relatively longer heights $d\overline{h}^\oplus(\overline{r}_\tau)$ in a decompacted model (e.g., as defined in equation (60)). In another embodiment, the vertical length may be a measure of geological-time when the particles of sediment were originally deposited on the Earth's surface and the vertical dimension may be expanded from relatively shorter times $d\overline{t}(\overline{r}_\tau)$ in the compacted model to relatively longer times $d\overline{t}^\oplus(\overline{r}_\tau)$ in a decompacted model (e.g., as defined in equation (64)). The vertical lengths are elongated based on a relationship between a depositional porosity (e.g., $\overline{\psi}_0(\overline{r}_\tau)$) of the geological layers at the time sediment in those layers was deposited, restoration porosity (e.g., $\overline{\psi}(\overline{r}_\tau)$) of the geological layers at the restoration time in the past $\tau$, and the present-day porosity (e.g., $\overline{\psi}_p(\overline{r}_\tau)$) of the geological layers experimentally measured in the present-day. In some embodiments, the relationship between the depositional porosity, the restoration porosity, and the present-day porosity may be, for example: $\dfrac{1-\overline{\phi}_\tau^\oplus}{1-\overline{\phi}_\tau^\ominus}$, where compaction coefficients $\overline{\phi}_\tau^\oplus = \overline{\psi}_0 - \overline{\psi}$ and $\overline{\phi}_\tau^\ominus = \overline{\psi}_0 - \overline{\psi}_p$ for all points in the restored 3D model, e.g., as defined in equations (56), (60) and (64). Since porosity decreases over time, the restoration porosity is typically greater than the present-day porosity (e.g., equation (57)) and typically less than the depositional porosity. Accordingly, the compaction coefficients have a relationship $\overline{\phi}_\tau^\oplus \leq \overline{\phi}_\tau^\ominus$, and the relationship between the depositional, restoration, and present-day porosities, e.g., $\dfrac{1-\overline{\phi}_\tau^\oplus}{1-\overline{\phi}_\tau^\ominus}$, is greater than 1, resulting in a stretching or elongating effect to increase the vertical lengths when they are decompacted.

In some embodiments, a processor may decompact the vertical dimension of the restored 3D model by a combination (e.g., equation (60)) of total decompaction corresponding to an increase in porosity from the present day porosity to the depositional porosity (e.g., equation (58)) and partial recompaction corresponding to a partial decrease in the porosity from the depositional porosity to the restored porosity (e.g., equation (59)).

At the restored time in the past $\tau$, the geological layers above $\overline{H}_\tau$ (e.g., $\overline{H}_{\tau+1} \dots \overline{H}_n$) did not yet exist, so decompaction may elongate lengths of geological layers below the horizon layer $\overline{H}_\tau$ (e.g., $\overline{H}_0 \dots \overline{H}_\tau$) deposited at the restoration time in the past $\tau$. In some embodiments, decompaction may be performed by iteratively decompacting the subsurface layer-by-layer, starting at the top horizon $\overline{H}_\tau$ deposited at the restoration time $\tau$ and ending at the bottom horizon $\overline{H}_0$ deposited at the depositional time. In some embodiments, the depositional porosity and the present-day porosity may be independently determined for each geological layer of the subsurface. In other embodiments, when the depositional porosity and the present-day porosity are substantially constant throughout the subsurface geology, decompaction may occur in one operation over the entire domain of the restored 3D model (e.g., as in equation (76)).

Some embodiments may implement a boundary condition that ensures that a top horizon $\overline{H}_\tau$ deposited at the restoration time $\tau$ is a horizontal plane in the restored 3D model (e.g., equation (65)(1)). Additionally or alternatively, some embodiments may implement a boundary condition that ensures that a direction of change of geological-time when the particles of sediment were originally deposited on the Earth's surface is vertical in the restored 3D model (e.g., equation (65)(2) and (65)(3)). Additionally or alternatively, some embodiments may implement a boundary condition that ensures that, for any pair of collocated points on opposite sides of a fault, the two collocated points are decompacted to have the same coordinate (e.g., equation (66)).

In some embodiments, for example, implemented in a past-time model, such as the GeoChron model, a processor may decompact the vertical dimension of the restored 3D model by: computing an elongated geological-time (e.g.,

$d\bar{t}^{\oplus}(\bar{r}_\tau)$) in the restored 3D model (e.g., by solving equation (64)), transforming the elongated geological-time from the restored 3D model to generate a 1D geological-time (e.g., $t_\tau(r_\tau)$) in the present-day 3D model (e.g., equation (68)), computing 2D paleo-depositional coordinates (e.g., $u_\tau(r_\tau)$ and $v_\tau(r_\tau)$) based on the transformed geological-time (e.g., $t_\tau(r_\tau)$) in the present-day 3D model, and performing a 3D transformation (e.g., a $u_\tau$, $v_\tau$, $t_\tau$-transformation)) comprising the 1D geological-time and 2D paleo-depositional coordinates from the present-day 3D model (e.g., $G_\tau$) to the restored 3D model (e.g., $\overline{G}_\tau$) that is decompacted based on the elongated geological-time.

Operations of FIGS. **16, 17** and **19** may be performed for example using system **1505** of FIG. **15,** e.g., by one or more processor(s) **140** of FIG. **15,** or another suitable computing system. The embodiments disclosed in reference to FIGS. **16, 17** and **19** may be performed using other operations or orders of the operations, and the exact set of steps shown in the figures may be varied.

In the past 30 years, many methods have been proposed to build geological models of sedimentary terrains having layers that are both folded and faulted. For any given geological-time $\tau$, checking geological model consistency is considered both simpler and more accurate if terrains have previously been "restored" to their pre-deformational, unfolded and unfaulted state, as they were at geological-time $\tau$.

Embodiments of the invention provide a new, purely geometrical 3D restoration method based on the input of a depositional (e.g., GeoChron model). Embodiments of the invention are able to handle depositional models of any degree of geometrical and topological complexity, with both small and large deformations, do not assume elastic mechanical behavior, and do not require any prior knowledge of geo-mechanical properties. Embodiments of the invention further reduce or eliminate gaps and overlaps along faults as part of the restoration transformation and do not resort to any post-processing to minimize such gaps and overlaps. Compared to other conventional methods, embodiments of the invention minimize deformations and volume variations induced by geological restoration with a higher degree of precision, unequaled so far (*see* e.g., FIG. **5** and FIG. **9**). Embodiments of the invention further ensure that 2D deformations of horizon surfaces induced by the *uvt*-transform are kept coherent with 3D deformations of volumes induced by the new proposed 3D restoration method.

Referring to FIG. **3,** for a given restoration time $\tau$, the set of faults is split into $\tau$-active and $\tau$-inactive subsets. Such a distinction allows:

- deformations along faults **105** to be minimized,
- restoration to work correctly even though there are regions of $G_\tau$ not continuously connected to $H_\tau$,
- gaps and overlaps along faults and the geometry of fault striae **600** are minimized by the restoration transformation, so no post-processing is needed to correct gaps or overlaps.

Embodiments of the invention input a 3D model of sedimentary terrains in the subsurface. In one example, the input model may be the GeoChron™ model generated by SKUA® software for use in mining and oil and gas industries. Embodiments of the invention may build a 3D restoration transformation of this model in such a way that, after transformation, the new model represents terrains as they were at a given intermediate restoration-time $\tau$ (where $\tau_1 < \tau < \tau_2$, before the present day $\tau_2$ and after the time of the deposition of the oldest layer $\tau_1$).

For example, G may represent the present day 3D geological domain of the region of the subsurface being modeled and $G_\tau$ **202** may represent the subset of G containing particles of sediment that were deposited at a time prior to or equal to $\tau$. In some embodiments, for all points $\mathbf{r} \in G$, a geologic restoration transformation may move a particle of sediment observed today at location $\mathbf{r}$ to a new restored location $\bar{\mathbf{r}}_\tau(\mathbf{r})$, e.g., defined as follows:

$$\bar{\mathbf{r}}_\tau(\mathbf{r}) = \mathbf{r} + \mathbf{R}_\tau(\mathbf{r}) \qquad \forall\, \mathbf{r} \in G_\tau \qquad\qquad (1)$$

where $\mathbf{R}_\tau(\mathbf{r})$ represents a 3D field of restoration vectors, e.g., generated to minimize deformations in $G_\tau$.

**Depositional Model**

A depositional model may be generated by inputting a tomographic model of the present day subsurface geology of the Earth and transforming that geology to a past depositional time as each particle was configured when originally deposited in the Earth. Sedimentary particles are deposited over time in layers from deepest to shallowest from the earliest to the most recent geological time periods. Since various layers of terrain are deposited at different geological times, a depositional model does not image the geology at any one particular time period, but across many times periods, each layer modeled at the geological time when the layer was deposited. Accordingly, the vertical axis or depth in the depositional model may be a time dimension representing the time period of deposition, progressing from oldest to newest geological time as the model progresses vertically from deepest to shallowest layers.

In one embodiment, the depositional model may be the GeoChron™ model, which is generated by SKUA™ software, that is routinely used by many oil & gas companies to build models of geologic reservoirs which help optimize hydrocarbon production and exploration. An example implementation of the GeoChron model is discussed in U.S. Patent No. 8,600,708. The depositional model is described in reference to the GeoChron model only for example, though any other depositional model may be used.

Reference is made to FIG. **7,** which schematically illustrates an example transformation from a present day model (upper-left image) to a depositional GeoChron model (bottom-right image), according to an embodiment of the invention. The transformation may be referred to as a "*uvt*-transform" **700** that transforms a particle of sediment observed today at location **r** = $r(x,y,z)$ in the present day geological domain $G$ (also referred to as "G-space") **220** to be moved to a new depositional location $\overline{\textbf{r}}(\textbf{r}) = \overline{\textbf{r}}(u,v,t)$ in the depositional geological domain $\overline{G}$ (also referred to as "$\overline{G}$-space"). The new depositional location $\overline{\textbf{r}}$ has a vertical coordinate that is the geological time $t(\textbf{r})$ when the particle at location **r** was deposited and has horizontal or paleo-geographic coordinates $\{u(\textbf{r}), v(\textbf{r})\}$ equal to the lateral spatial location where the particle at **r** was located at its depositional time $t(\textbf{r})$. The paleo-geographic coordinates $\{u(\textbf{r}), v(\textbf{r})\}$ may be linked to the vertical time coordinate $t(\textbf{r})$ by different relationships (e.g., constrained by different systems of differential equations) depending on the structural style of their deposition (e.g., minimal deformation or flexural slip).

In the example *uvt*-transform **700** shown in FIG. **7,** when the geological time coordinate $t(\textbf{r})$ is equal to the curvilinear distance to the top horizon $H_\tau$ **210** along curvilinear axis **222,** the *uvt*-transform is a valid technique for imaging the depositional model. In other words, the *uvt*-transform is a valid depositional rendering technique if the module of its gradient **grad** $t(\textbf{r})$ honors the following constraint:

$$\|\textbf{grad}\, t(\textbf{r})\| = 1 \qquad \forall\, \textbf{r} \in G \qquad (3)$$

Embodiments of the invention observe that when $\|\textbf{grad}\, t(\textbf{r})\|$ differs from "1," replacing the depositional coordinates $\{u(\textbf{r}), v(\textbf{r}), t(\textbf{r})\}$ of the *uvt*-transform **700** by new restoration coordinates $\{u_\tau(\textbf{r}), v_\tau(\textbf{r}), t_\tau(\textbf{r})\}$ where $\|\textbf{grad}\, t_\tau\| = 1$ allows the *uvt*- transform to be replaced by a $u_\tau\, v_\tau\, t_\tau$-transform that generates a valid restoration model at restoration time $\tau$.

In some embodiments, the depositional (e.g., GeoChron) model includes the following data structures stored in a memory (e.g., memory **150** of FIG. **15**) (see FIGS. **1, 3, 6,** and **7**):

- A network of geological faults **105** within the present day domain $G$ **220.**
- A 3D corner-point grid $\Gamma$ **100** that fills the $G$-space **220** with 3D polyhedral cells **108** (e.g., tetrahedra or hexahedra), without any gaps or overlaps in the studied domain, in such a way that no cell edge crosses any fault. The location of each node $\alpha$ **107** of grid $\Gamma$ **100** in the $G$-space is denoted $\textbf{r}(\alpha)$.
- For each geological fault $F$ **105,** two disconnected and independently meshed, collocated surfaces $F^+$ **103** and $F^-$ **104** on opposite sides of the fault **105.** Surfaces $F^+$ **103** and $F^-$ **104** may be composed of 2D facets from the 3D polyhedral cells of grid $\Gamma$ **100** bordering $F$ **105** on either side of the fault **105.** Fault surfaces $F^+$ **103** and $F^-$ **104** that are collocated in the present day model may, during the restoration process of transforming the model backwards in time, typically slide against one another, without generating gaps or overlaps between adjacent fault surfaces or fault blocks.
- Referring to FIGS. **1, 3** and **6,** for each fault $F$ **105,** a set of pairs of points $(\textbf{r}_F^+, \textbf{r}_F^-)$ **(101,102)** called "twin-points," such that:

  1. The two twin points in each pair are located on opposite sides of a corresponding pair of twin fault surfaces, $\textbf{r}_F^+ \in F^+$ and $\textbf{r}_F^- \in F^-$.

  2. At geological times before fault $F$ **105** formed in the subsurface, particles of sediment were collocated which are observed today at locations $\textbf{r}_F^+$ and $\textbf{r}_F^-$.

  During the activation of fault $F$ **105,** particles of sediment initially located on $F$ are assumed to slide along fault-striae (e.g., see FIG. **12**), which are the shortest paths, on $F$, between pairs of twin points $(\textbf{r}_F^+, \textbf{r}_F^-)$ **(101,102).**

- A tectonic style which may be either a "minimal deformation" style or a "flexural slip" style. Choosing this tectonic style is a model decision assumed to have been made by a structural geologist.
- A triplet (e.g., $\{u(\textbf{r}), v(\textbf{r}), t(\textbf{r})\}$) of discrete coordinates defined on a 3D grid $\Gamma$ **100** of the depositional $\overline{G}$-space, such that, for a particle of sediment observed today at location **r,** the coordinate values $\{u(\textbf{r}), v(\textbf{r})\}$ represent the paleo-geographic coordinates of the particle at geological-time $t(\mathbf{r})$ during the time period when it was deposited. According to the depositional (e.g., GeoChron) model, the paleo-geographic coordinates $\{u(\mathbf{r}), v(\mathbf{r})\}$ may honor different differential equations depending on the tectonic style.

Moreover, referring to FIG. **1** and FIG. **2,** the depositional model may have the following properties:

- Within the present day domain G, each geological horizon $H_\tau$ **210** may be defined by a set of particles of sediment which were deposited at geological time $\tau$:

$$\mathbf{r} \in H_\tau \quad \Longleftrightarrow \quad t(\mathbf{r}) = \tau \qquad (4)$$

In other words, each horizon $H_\tau$ **210** is a level-set (constant value) surface of the geological-time $t$.
- Paleo-geographic coordinates $\{u(\mathbf{r}), v(\mathbf{r})\}$ and twin-points **(101,102)** given as input are linked e.g. by the following equations:

$$\left| \quad \begin{array}{l} \{ (\mathbf{r}_{\mathrm{F}}^+, \mathbf{r}_{\mathrm{F}}^-) \text{ is a pair of twin-points } \} \\[2mm] \Longleftrightarrow \left\{ \begin{array}{ll} \mathbf{r}_{\mathrm{F}}^+ \in F^+ \ \& \ \mathbf{r}_{\mathrm{F}}^- \in F^- & (5) \\[2mm] u(\mathbf{r}_{\mathrm{F}}^-) = u(\mathbf{r}_{\mathrm{F}}^+) & (6) \\[2mm] v(\mathbf{r}_{\mathrm{F}}^-) = v(\mathbf{r}_{\mathrm{F}}^+) & (7) \\[2mm] t(\mathbf{r}_{\mathrm{F}}^-) = t(\mathbf{r}_{\mathrm{F}}^+) & (8) \end{array} \right. \end{array} \right.$$

- Additionally or alternatively, each pair of twin-points $(\mathbf{r}_{\mathrm{F}}^+, \mathbf{r}_{\mathrm{F}}^-)$ **(101,102)** may be the intersection of a level set **210** of vertical depositional coordinate $t(\mathbf{r})$ with a "fault stria" $\sigma(\mathbf{r}_{\mathrm{F}}^-)$ **600** comprising a curved surface passing through point $\mathbf{r}_{\mathrm{F}}^-$ **102** whose geometry is defined by geological rules, e.g., defining fault blocks sliding against one another according to tectonic forces and geological context. As a consequence of constraints defined by equations (6), (7), and (8) above, fault-striae (e.g., see FIG. **12**) may characterize the paleo-geographic coordinates $\{u(\mathbf{r}), v(\mathbf{r})\}$, and vice versa.
- Each point $\mathbf{r} \in G$ **214** may be characterized by its present day coordinates (e.g., $\{x(\mathbf{r}), y(\mathbf{r}), z(\mathbf{r})\}$) with respect to a present day coordinate system $\{\mathbf{r}_x, \mathbf{r}_y, \mathbf{r}_z\}$ **220** comprising three mutually orthogonal unit vectors, e.g., where $\mathbf{r}_z$ is assumed to be oriented upward.

It would be appreciated by a person of ordinary skill in the art that the GeoChron model and its features described herein are discussed only as an example of a depositional model and that these elements may differ in other models or implementations.

### $u_\tau\, v_\tau\, t_\tau$ - Transformation

Referring to the volume deformation of FIG. **2,** the restoration time $\tau$ may be a given geological time in the past and subdomain $G_\tau$ **202** may be a part of a 3D present day geological domain $G$ that has terrains older than (deposited at a time prior to) or equal to restoration time $\tau$ and defined by a depositional model. Embodiments of the invention provide a new unfolding technique that replaces the $uvt$-transform (converting the present day model to a depositional model rendering all layers at their many respective times of deposition) by a $u_\tau\, v_\tau\, t_\tau$-transform **201** (converting the present day model to a restored model at a single restoration time $\tau$ before the present day but after the earliest times of deposition of the deepest model layer):

$$(x,y,z) \xrightarrow{\ u_\tau\, v_\tau\, t_\tau\ } \{\, u_\tau(x,y,z),\ v_\tau(x,y,z),\ t_\tau(x,y,z) \} \qquad (9)$$

Accordingly, present day geological space $G_\tau$ **202** is transformed into a restored geological space $\overline{G}_\tau$ **203,** such that:

- $t_\tau(\mathbf{r})$ is a vertical spatial coordinate of the subsurface at the past restoration time $\tau$, and is derived from, but different than, the geological time of deposition $t(\mathbf{r})$. The vertical restoration coordinate $t_\tau(\mathbf{r})$ honors the following constraint:

$$\|\mathbf{grad}\ t_\tau(\mathbf{r})\| = 1 \qquad\qquad \forall\ \mathbf{r} \in G_\tau \qquad\qquad (10)$$

- $\{u_\tau(\mathbf{r}),\ v_\tau(\mathbf{r})\}$ are lateral restoration coordinates derived from, but different than, the paleogeographic coordinates $\{u(\mathbf{r}),\ v(\mathbf{r})\}$ of the depositional model.
- restoration coordinates $\{u_\tau(\mathbf{r}),\ v_\tau(\mathbf{r}),\ t_\tau(\mathbf{r})\}$ honor specific inventive constraints described below in such a way that, using the $u_\tau v_\tau t_\tau$-transform as a restoration operator minimizes deformations in the present day domain $G_\tau$
- for each point $\mathbf{r} \in G_\tau$ **202**, the restoration vector field $\mathbf{R}_\tau$ may be defined e.g. by:

$$\mathbf{R}_\tau(\mathbf{r}) = u_\tau(\mathbf{r}) \cdot \mathbf{r}_x + v_\tau(\mathbf{r}) \cdot \mathbf{r}_y + t_\tau(\mathbf{r}) \cdot \mathbf{r}_z - \mathbf{r} \qquad\qquad (11)$$

**Volume Deformation**

Compaction may be handled in pre and post-restoration stages, as is known in the art. Thus, the model may be restored without taking compaction into account.

Some embodiments of the invention provide an inventive volume deformation with a new set of inventive geometric constraints on the depositional model to allow geologic layers to be restored at a given geological time $\tau$ with a precision that has never before been reached. As shown in FIG. **2,** in this volume deformation, paleo-geographic coordinates $\{u(\mathbf{r})$ and $v(\mathbf{r})\}$ and the geological time coordinate $t(\mathbf{r})$ are replaced by new restoration coordinates respectively denoted $\{u_\tau(\mathbf{r}),\ v_\tau(\mathbf{r})\}$ and $t_\tau(\mathbf{r})$.

As shown in FIG. **2:**

- a restored volume **203,** denoted $\overline{G}_\tau$ contains a (e.g., direct or "right-handed") coordinate space **219** having orthogonal coordinate unit vectors $\{\overline{\mathbf{r}}_{u\tau}, \overline{\mathbf{r}}_{v\tau}, \overline{\mathbf{r}}_{t\tau}\}$ and a family of horizontal planes $\{\overline{S}_\tau(d) : d \geq 0\}$ **207** parallel to horizontal coordinate vectors $\{\mathbf{r}_{u\tau}, \overline{\mathbf{r}}_{v\tau}\}$;
- a deformed version $G_\tau$ of $\overline{G}_\tau$ contains a (e.g., direct or "right-handed") coordinate space **220** having orthogonal coordinate unit vectors $\{\mathbf{r}_x, \mathbf{r}_y, \mathbf{r}_z\}$ and a family of curved surfaces $\{S_\tau(d) : d \geq 0\}$ **208** parallel to horizon $\{H_\tau \equiv S_\tau(0)\}$ **(210=208).**

For simplicity and without loss of generality, the coordinate frame unit vectors $\{\mathbf{r}_{u\tau}, \mathbf{r}_{v\tau}, \mathbf{r}_{t\tau}\}$ **219** of the $\overline{G}_\tau$-space and its origin $\overline{O}_{u\tau v\tau t\tau}$ may be equal to the coordinate frame unit vectors $\{\mathbf{r}_x, \mathbf{r}_y, \mathbf{r}_z\}$ **220** of the $G$-space and its origin $O_{xyz}$:

$$\overline{\mathbf{r}}_{u\tau} \equiv \mathbf{r}_x \ ; \quad \overline{\mathbf{r}}_{v\tau} \equiv \mathbf{r}_y \ ; \quad \overline{\mathbf{r}}_{t\tau} \equiv \mathbf{r}_z$$

$$\overline{O}_{u\tau\ v\tau\ t\tau} \equiv O_{xyz} \qquad\qquad (12)$$

Referring to FIG. **2,** the following notation is used:

- each point $\mathbf{r} \in G_\tau$ **214** is transformed into point $\overline{\mathbf{r}}_\tau \in \overline{G}_\tau$ **213** and vice versa:

$$\overline{\mathbf{r}}_\tau \in \overline{G}_\tau \quad \longleftrightarrow \quad \mathbf{r} \in G_\tau \qquad\qquad (13)$$

- $\{u_\tau(\overline{\mathbf{r}}_\tau),\ v_\tau(\overline{\mathbf{r}}_\tau)\}$ represent the horizontal restoration coordinates of $\overline{\mathbf{r}}_\tau$ **213** with respect to $\{\overline{\mathbf{r}}_{u\tau}, \overline{\mathbf{r}}_{v\tau}\}$ **219** whilst $t_\tau(\overline{\mathbf{r}})$ represents the vertical restoration coordinate or altitude **204** of $\overline{\mathbf{r}}_\tau$ **213** with respect to $\overline{\mathbf{r}}_t$, oriented upward;
- for each point $\mathbf{r} \in G_\tau$ **214:**

  - $\{x(\mathbf{r}),\ y(\mathbf{r})\}$ represent the horizontal present day coordinates of $\mathbf{r}$ with respect to $\{\mathbf{r}_x, \mathbf{r}_y\}$ whilst $z(\mathbf{r})$ represents

the vertical present day coordinate or altitude of **r** with respect to the vertical unit frame vector **r**$_z$ oriented upward; and
• $\{u_\tau(\mathbf{r}), v_\tau(\mathbf{r}), t_\tau(\mathbf{r})\}$ represent the restoration coordinates of $\bar{r}_\tau$ with respect to the restoration coordinate frame unit vectors $\{\bar{r}_{u_\tau}, \bar{r}_{v_\tau}, \bar{r}_{t_\tau}\}$ **219** of the restored volume $\overline{G}_\tau$ **203**.

Equivalently to equations (12) and in accordance with equation (1), during restoration of $G_\tau$, a particle of sediment observed today at location **r 214** is moved to a new location $\bar{r}(\mathbf{r})$ **213** defined e.g., as follows, where $\mathbf{R}_\tau(\mathbf{r})$ is a restoration vector field:

$$\bar{\mathbf{r}}(\mathbf{r}) \;=\; \mathbf{r} \;+\; \mathbf{R}_\tau(\mathbf{r}) \tag{14}$$

with, in matrix notation:

$$\mathbf{R}_\tau(\mathbf{r}) = [\mathbf{r}_x, \mathbf{r}_y, \mathbf{r}_z] \cdot \begin{bmatrix} u_\tau(\mathbf{r}) - x(\mathbf{r}) \\ v_\tau(\mathbf{r}) - y(\mathbf{r}) \\ t_\tau(\mathbf{r}) - z(\mathbf{r}) \end{bmatrix} \tag{15}$$

Referring to FIG. **2,** surface $\overline{S}_\tau(0)$ **209** is located at an altitude ($t_\tau = z_\tau^O$) with respect to the vertical unit vector $\bar{r}_{t_\tau}$ oriented upward. In the frame of the presentation of the volume deformation and without loss of generality, $z_\tau^O$ may be assumed to be constant, e.g., equal to zero.

Referring to FIG. **2,** surface $\overline{S}_\tau(d)$ **207** is located at a distance (d) from $\overline{S}_\tau(0)$ **209,** implying that:

$$t_\tau(\bar{\mathbf{r}}_\tau) \;=\; d - z_\tau^O \qquad \forall\, \bar{\mathbf{r}}_\tau \in \bar{S}_\tau(d) \tag{16}$$

such that:

$$\left|\begin{array}{l} d < 0 \iff \overline{S}_\tau(d) \text{ is located above } \overline{S}_\tau(0) \\ d > 0 \iff \overline{S}_\tau(d) \text{ is located below } \overline{S}_\tau(0) \end{array}\right. \tag{17}$$

FIG. **2** shows the folded present-day volume $G_\tau$ **202** resulting from the deformation of restored volume $\overline{G}_\tau$ **203** under tectonic forces following either a "minimal deformation" or a "flexural slip" tectonic style:

$$\overline{G}_\tau \qquad \rightarrow \quad \text{tectonic forces} \rightarrow \quad G_\tau \subseteq G \tag{18}$$

Referring to FIG. **2,** the following notation is used:

• each horizontal plane $\overline{S}_\tau(d)$ **207** is transformed into a curved surface $S_\tau(d)$ **208** "parallel" (e.g., this notion of "parallelism" may be characterized by equation (10)) to surface $H_\tau$ **210=208** and each surface $S_\tau(d)$ **208** is a level set of vertical restoration coordinate $t_\tau(\mathbf{r})$;
• the images in $G_\tau$ **202** of the $(u_\tau)$, $(v_\tau)$ **205, 206** and $(t_\tau)$ **204** coordinate axes initially rectilinear and contained in volume $\overline{G}_\tau$ **203** now consist of curvilinear coordinate axes **(223, 224)** and **222.**

As shown in FIG. **2,** the part of the subsurface observed today stratigraphically below $H_\tau$ **210** may be identified with the deformed volume $G_\tau$ **202,** e.g., such that:

- $S_\tau(0)$ is assumed to be identical to the horizon $H_\tau$ **210** to be restored:

$$S_\tau(0) \equiv H_\tau \qquad (19)$$

which is equivalent to defining that, on horizon $H_\tau$ **216,** restored vertical coordinate $t_\tau(\mathbf{r})$ is equal to $z_\tau^O$ ;

- for any $t < \tau$, the actual geologic horizon $H_t$ **216** is included **(212)** into the deformed volume $G_\tau$ **202**; note that, contrary to surfaces $\{S_\tau(d) : d \geq 0\}$ **208**, horizons $\{H_t : t < \tau\}$ **216** may be non-parallel to $\{H_\tau \equiv S_\tau(0)\}$ **210=208;**
- after restoration of the volume $G_\tau$ **202** to its initial, unfolded state $\overline{G}_\tau$ **203:**

    - all horizons, faults and geological objects included in $G_\tau$ **202** are dragged up by the embedding volume deformation,
    - $\overline{H}_\tau \equiv \overline{S}_\tau(0)\}$ **209=207** may be defined as the restored sea floor as it was at geological time $\tau$.

**Minimizing deformations and volume variation**

With compaction handled separately in pre and post restoration steps, leaving aside the very particular case of clay and salt layers, tectonic forces generally induce no or negligible variations in volume. Therefore, restoration coordinates $\{u_\tau(\mathbf{r}), v_\tau(\mathbf{r}), t_\tau(\mathbf{r})\}$ may be chosen in such a way that the $u_\tau v_\tau t_\tau$-transform **201** of the present-day volume $G_\tau$ **202** into the restored volume $\overline{G}_\tau$ **203** minimizes deformations and volume variations. This is achieved by constraining restoration coordinates $\{u_\tau(\mathbf{r}), v_\tau(\mathbf{r}), t_\tau(\mathbf{r})\}$ to honor the two following conditions in the present day $G_\tau$ domain:

- Surfaces $\{S_\tau(d) : d \geq 0\}$ **208** are level sets of the vertical restoration coordinate $t_\tau(\mathbf{r})$ and, for any infinitely small increment $\varepsilon$, the thickness of the thin slice of the volume bounded by $S_\tau(d)$ and $S_\tau(d + \varepsilon)$ are, as much as possible, constant and equal to $\varepsilon$. In other words, $S_\tau(d)$ and $S_\tau(d + \varepsilon)$ are as parallel as possible. This is equivalent to honoring equation (10) as precisely as possible.

- In the frame of this invention, the consistency between the depositional (e.g., GeoChron) model provided as input and its restored version at geological time $\tau$ is preserved. Such a consistency is preserved if, and only if, the $uvt$-transform and the $u_\tau v_\tau t_\tau$-transform of $H_\tau$ are identical. This is achieved by honoring the following inventive boundary conditions, referred to as the $(u_\tau, v_\tau)$ boundary constraints:

$$\forall\, \mathbf{r}_\tau^o \in H_\tau \left|\begin{array}{rcl} 1)\ u_\tau(\mathbf{r}_\tau^o) & = & u(\mathbf{r}_\tau^o) \\[6pt] 2)\ v_\tau(\mathbf{r}_\tau^o) & = & v(\mathbf{r}_\tau^o) \end{array}\right. \qquad (20)$$

$$\forall\, \mathbf{r}_\tau^o \in H_\tau \left|\begin{array}{l} 1)\ \mathrm{grad}\, u_\tau(\mathbf{r}_\tau^o) \simeq \mathrm{grad}\, u(\mathbf{r}_\tau^o) \\[6pt] 2)\ \mathrm{grad}\, v_\tau(\mathbf{r}_\tau^o) \simeq \mathrm{grad}\, v(\mathbf{r}_\tau^o) \end{array}\right. \qquad (21)$$

- Whilst taking the same given tectonic style into account (minimal deformation or flexural slip) as the one honored by paleo-geographic coordinates $\{u(\mathbf{r}), v(\mathbf{r})\}$, lateral restoration coordinates $\{u_\tau(\mathbf{r}), v_\tau(\mathbf{r})\}$ may be defined so that their associated restoration deformations are minimized. To preserve consistency with boundary conditions (20) and (21), this is achieved by honoring the following inventive constraints:

    - in a minimal deformation tectonic style context, the following "minimal deformation constraints" may be honored by coordinates $\{u_\tau, v_\tau\}_\tau$ where $t_\tau(\mathbf{r})$ is given, e.g., as follows:

$$\forall\, \mathbf{r} \in G_\tau \left| \begin{array}{l} 1)\ \{\operatorname{grad} u_\tau \cdot \operatorname{grad} v_\tau\}_{\mathbf{r}} \simeq 0 \\ 2)\ \{\operatorname{grad} t_\tau \cdot \operatorname{grad} u_\tau\}_{\mathbf{r}} \simeq 0 \\ 3)\ \{\operatorname{grad} t_\tau \cdot \operatorname{grad} v_\tau\}_{\mathbf{r}} \simeq 0 \end{array} \right. \qquad (22)$$

- in a flexural slip tectonic style context, the following "flexural slip constraint" is coupled (containing both lateral restoration coordinates $u_\tau$ and $v_\tau$) and may be honored by coordinates $\{u_\tau, v_\tau\}_{\mathbf{r}}$, e.g., as follows:

$$\forall\, \mathbf{r} \in G_\tau : \quad \{\operatorname{grad}_s u_\tau \cdot \operatorname{grad}_s v_\tau\}_{\mathbf{r}} \simeq 0 \qquad (23)$$

where subscript "S" refers to a projection of the directions of maximal change over iso-value surfaces of the restored vertical coordinate $t\tau$.

So as not to conflict with equations (20) and (21), and contrary to conventional depositional coordinates u and v (e.g., in the GeoChron model), new constraints (22) and (23) do not constrain $\|\mathbf{grad}\ \boldsymbol{u_\tau}\|$, $\|\mathbf{grad}\ \boldsymbol{v_\tau}\|$, $\|\mathbf{grad_S}\ \boldsymbol{u_\tau}\|$, or $\|\mathbf{grad_S}\ \boldsymbol{v_\tau}\|$ to be equal to "1".

**Restoration**

Referring to FIG. **1** and FIG. **2,** at geological-time $\tau$, the horizon $H_\tau$ **210** to be restored was coincident with a given surface $S_\tau(0)$ **(208=210)** considered as the sea-floor. The task of restoration includes:

- restoring horizon $H_\tau$ **210** to its initial, unfaulted and unfolded state (e.g., mapping horizon $H_\tau$ onto the sea floor $\overline{S}_\tau(0)$) **209** and
- shifting all sedimentary terrains in such a way that, for each point $\mathbf{r} \in G$:

    - the particle of sediment currently located at point $\mathbf{r}$ moves to its former, "restored" location, where the particle was located at geological time $\tau$,
    - no overlaps or voids/gaps are created in the subsurface.

At geological time $\tau$, the sea floor $\overline{S}_\tau(0)$ **(209)** is assumed to be a continuous, unfaulted surface whose altitude $z_\tau{}^O$ is a given function $z_\tau{}^O(u, v)$. In practice, $\overline{S}_\tau(0)$ **(209=207)** is typically a flat, horizontal plane whose altitude $z_\tau{}^O(u, v)$ at geological time $\tau$ is constant. Accordingly, for concision, $z_\tau{}^O$ may refer to a given function $z_\tau{}^O(u(\mathbf{r}), v(\mathbf{r}))$ which may or may not be constant:

$$\forall\, \mathbf{r} \in H_\tau : \quad z_\tau^o \ \text{stands for}\ z_\tau^o(u(\mathbf{r}), v(\mathbf{r})) \qquad (24)$$

**Compaction**

Deformation of sedimentary terrains is typically induced both by tectonic forces and terrain compaction. In order to model separately the effects of these phenomena, the restoration process may proceed as follows:

- First, in a preprocessing phase, a total decompaction may be applied to the terrains to cancel the impact of compaction as it is observed today, at the present day or current geological time;

- Next, the effects of compaction being canceled, a depositional-based restoration process taking only tectonic deformations into account (and not compaction) is applied to restore the geometry of the subsurface as it would have been observed at geological time $\tau$;

- Finally, in a post-processing phase, a partial recompaction is applied to the restored terrains in order to take compaction into account, as it could have been observed at geological time $\tau$.

**Depositional based restoration**

As an input to the restoration process, a given depositional (e.g., GeoChron) model may be received from storage in a digital device (e.g., from memory **150** of FIG. **15).**

Referring to FIG. **2,** a geological time $\tau$ may be selected that is associated with the given horizon $H_\tau$ **210** to be restored and the given altitude $z_\tau^O$ of the surface S $\overline{\tau}(0)$ **209** onto which the horizon $H\tau$ should be restored.

The region $G_\tau$ **202** may be retrieved as the part of the depositional model where geological time of deposition $t(\mathbf{r})$ is less than or equal to $\tau$ (subsurface regions deposited in a layer deeper than or equal to the layer deposited at time $\tau$).

The set of faults may be split into a subset of r-active faults cutting $H_\tau$ **210** and a subset of $\tau$-inactive faults which do not cut $H_\tau$.

A geologist or other user may decide to manually transfer some faults from the $\tau$-inactive fault set to the $\tau$-active set, or vice versa, which typically causes greater restoration deformations. For example, manually altering the set of automatically computed $\tau$-active and $\tau$-inactive faults typically makes the restoration less accurate.

Four new 3D piecewise continuous discrete functions $\{u_\tau, v_\tau, t_\tau, \varepsilon_\tau\}_\Gamma$ may be created that are defined on grid $\Gamma$ **100** whose discontinuities occur only across $\tau$-active faults;

Referring to FIG. **3,** to remove discontinuities of discrete functions $\{u_\tau, v_\tau, t_\tau, \varepsilon_\tau\}_\Gamma$ across $\tau$-inactive faults, for all $\tau$-inactive faults $F$ **300,** one or more of the following inventive (e.g., DSI) constraints may be installed on $\Gamma$ **100,** e.g., as:

$$\left.\begin{array}{lrcl} 1) & u_\tau(\mathbf{r}_F^\oplus) & = & u_\tau(\mathbf{r}_F^\ominus) \\ 2) & v_\tau(\mathbf{r}_F^\oplus) & = & v_\tau(r_F^\ominus) \\ 3) & t_\tau(\mathbf{r}_F^\oplus) & = & t_\tau(r_F^\ominus) \end{array}\right\} \forall\ (\mathbf{r}_F^\oplus, r_F^\ominus)_\tau \qquad (25)$$

$$\left.\begin{array}{lrcl} 1) & \mathrm{grad}\, u_\tau(\mathbf{r}_F^\oplus) & = & \mathrm{grad}\, u_\tau(\mathbf{r}_F^\ominus) \\ 2) & \mathrm{grad}\, v_\tau(\mathbf{r}_F^\oplus) & = & \mathrm{grad}\, v_\tau(r_F^\ominus) \\ 3) & \mathrm{grad}\, t_\tau(\mathbf{r}_F^\oplus) & = & \mathrm{grad}\, t_\tau(r_F^\ominus) \end{array}\right\} \forall\ (\mathbf{r}_F^\oplus, r_F^\ominus)_\tau \qquad (26)$$

$$\left.\begin{array}{lrcl} 1) & \varepsilon_\tau(\mathbf{r}_F^\oplus) & = & \varepsilon_\tau(r_F^\ominus) \\ 2) & \mathrm{grad}\, \varepsilon_\tau(\mathbf{r}_F^\oplus) & = & \mathrm{grad}\, \varepsilon_\tau(r_F^\ominus) \end{array}\right\} \forall\ (\mathbf{r}_F^\oplus, r_F^\ominus)_\tau \qquad \begin{array}{l}(27)\\[1em](28)\end{array}$$

where $(\mathbf{r}_F^\oplus, \mathbf{r}_F^\ominus)_\tau$ **(304,306)** represents a pair of "mate-points" collocated on both sides *of F* **300** and assigned to $F^+$ **103** and $F^-$ **104,** respectively, and $\varepsilon_\tau(\mathbf{r})$ represents an error correction constraint. Constraints (25), (26), (27) and (28) may be referred to collectively as "fault transparency constraints."

Assuming that $TH_{min} > 0$ is a given threshold chosen by a geologist or other user, fault transparency constraints (25), (26), (27) and (28) may be locally installed at any point $\mathbf{r}_F$ on a $\tau$-active fault $F$ where fault throw is lower than $TH_{min}$. As a non-limitative example, $TH_{min}$ may be equal to 1 meter.

Two new discrete vector fields $\mathbf{r}^*$ and $\mathbf{R}_\tau$ may be defined on 3D grid $\Gamma$ **100.**

For each node $\alpha \in \Gamma$ **107:**

- $\mathbf{r}^*(\alpha)$ may be initialized as the initial location of $\alpha$:

$$\mathbf{r}^*(\alpha) = \mathbf{r}(\alpha) \qquad (29)$$

- a decompaction transformation $\mathbf{C}\ (\mathbf{r})$ known in the art may be used to move $\alpha$ vertically downward from its current compacted altitude $z(\alpha)$ to a new decompacted (e.g., deeper) altitude:

$$\mathbf{r}(\alpha) \; \leftarrow \; \mathbf{C}^{-}(\mathbf{r}(\alpha)) \qquad (30)$$

### Vertical Restoration Coordinate $t_\tau(\mathbf{r})$

Referring to FIG. **2** and FIG. 7, the depositional uvt-transform **700** of $G_\tau$ **202** is typically correct when equation (3) is honored. Based on this observation, embodiments of the present invention adapt equation (3) for the inventive restoration technique, replacing the vertical depositional coordinate $t(\mathbf{r})$ by a vertical restoration coordinate $t_\tau(\mathbf{r})$ and replacing equation (3) by the following inventive thickness-preserving constraint to ensure layer thickness is preserved and surfaces $\{S_\tau(d) : d \geq 0\}$ are parallel:

$$\|\mathbf{grad}\, t_\tau(\mathbf{r})\| \simeq 1 \qquad \forall\, \mathbf{r} \in G_\tau \qquad\qquad (31)$$

In addition, to allow $H_\tau$ **210** to be restored on surface $\overline{S}_\tau(0)$ **209,** the vertical restoration coordinate $t_\tau(\mathbf{r})$ may honor the following boundary condition, e.g., as a DSI constraint on grid $\Gamma$ **100,** referred to as the "paleo-sea-floor constraint":

$$t_\tau(\mathbf{r}_H) \;=\; z\tau^O \qquad\qquad \forall\, \mathbf{r}_H \in H_\tau \qquad\qquad (32)$$

Due to its non-linearity, thickness-preserving equation (31) cannot be implemented as a DSI constraint, which must be linear. In order to incorporate the thickness-preserving equation into the restoration model using the DSI method, various linear surrogates of equation (31) may be used to approximate $t_\tau(\mathbf{r})$ as follows:

- Referring to FIG. **1,** to approximate thickness-preserving equation (31), as a non-limitative example, install the following DSI constraints on the grid $\Gamma$ **100** where $\mathbf{r}_{T^\lozenge}$ and $\mathbf{r}_{T^*}$ are arbitrary points belonging to any pair $(T^\lozenge, T^*)$ of adjacent cells **108** of grid $\Gamma$ **100** and where $\mathbf{N}(\mathbf{r_h})$ is the field of unit vectors defined on $H_\tau$ orthogonal to $H_\tau$ and oriented in the direction of younger terrains:

$$
\begin{aligned}
&1) \quad \mathbf{grad}\, t_\tau(\mathbf{r}_H) \;=\; \mathbf{N}(\mathbf{r}_H) &&\forall\, \mathbf{r}_H \in H_\tau \\
&2) \quad \mathbf{grad}\, t_\tau(\mathbf{r}_{T^\lozenge}) \;\simeq\; \mathbf{grad}\, t_\tau(\mathbf{r}_{T^*}) &&\forall\, (T^\lozenge, T^*)
\end{aligned}
\qquad (33)
$$

- Referring to FIG. **1,** to approximate thickness-preserving equation (31), alternatively as a non-limitative example, install the inventive DSI constraints on grid $\Gamma$ **100** as follows:

$$
\begin{aligned}
&1) \quad \mathbf{grad}\, t_\tau(\mathbf{r}) \;=\; \frac{\mathbf{grad}\, t(\mathbf{r})}{\|\mathbf{grad}\, t(\mathbf{r})\|} &&\forall\, \mathbf{r} \in G_\tau \\
&2) \quad \mathbf{grad}\, t_\tau(\mathbf{r}_{T^\lozenge}) \;\simeq\; \mathbf{grad}\, t_\tau(\mathbf{r}_{T^*}) &&\forall\, (T^\lozenge, T^*)
\end{aligned}
\qquad (34)
$$

  where $\mathbf{r}_{T^\lozenge}$ and $\mathbf{r}_{T^*}$ are arbitrary points belonging to any pair $(T^\lozenge, T^*)$ of adjacent cells of grid $\Gamma$ **100** (e.g., the centers of $T^\lozenge$ and T*, respectively).

Constraints (33) and (34) are only examples of possible surrogate-thickness-preserving constraints. Other examples of such surrogate thickness-preserving constraints may be used.

Referring to FIG. **3,** contrary to constraint (33)-(1), new inventive constraint (34)-(1) benefits from the geologic observation that, throughout the entire domain $G_\tau$ **202,** surfaces $\{S_\tau(d) : d \geq 0\}$ **208** generally have a shape roughly similar to the level sets of the geologic time of deposition t(**r**);

Assuming that constraints (32) and (33) or (34) are installed on grid $\Gamma$ **100,** a first approximation of vertical restoration coordinate $t'_\tau(\mathbf{r})$ may be computed by running the DSI method on grid $\Gamma$ **100.**

Honoring constraint (31) significantly increases the accuracy of the restoration model and a violation of this constraint not only degrades the accuracy of the vertical restoration coordinate $t_\tau(\mathbf{r})$ but also the horizontal restoration coordinates $\{u_\tau(\mathbf{r}), v_\tau(\mathbf{r})\}$ as they are linked to $t_\tau(\mathbf{r})$ (e.g., by equations (22) and (23)). Accordingly, there is a great need for validating any approximation technique used to compute $t_\tau(\mathbf{r})$.

To test the accuracy of the various approximations of $t_\tau(\mathbf{r})$, an example geological terrain is provided in FIG. **4**. Despite the apparent simplicity of this terrain, because the thicknesses of the layers vary, this test example is challenging and useful in comparing the accuracy of inventive embodiments with other conventional techniques.

FIG. **5** shows histograms **501** and **502** of the distributions of $\|\mathbf{grad}\ t_\tau\|$, where $t_\tau$ is approximated using constraints (33) or (34), respectively, in the example geological terrain $G_\tau$ **202** shown in FIG. **4**. FIG. **5** shows that when $t_\tau$ is approximated by constraints (33) or (34), $\|\mathbf{grad}\ t_\tau\|$ significantly differs from "1". Therefore, while constraints (34) provide a better approximation of the thickness-preserving equation (31) than constraints (33), both of these approximations are inaccurate.

Similarly, FIG. **9** shows histograms **901** and **902** of relative variations of volume $\Delta V / V$ induced by the restoration of $H_\tau$ **210** over $G_\tau$ **202** shown in FIG. **4**, where $t_\tau$ is approximated using constraints (33) or (34), respectively. Ideally, a restoration transformation should minimize variations in volume $\Delta V / V$ from the present day to the restored model. FIG. **9** however shows that a restoration based on constraints (33) or (34) results in a volume variation $\Delta V / V$ that significantly differs from the ideal value of "0". While constraints (34) result in a smaller volume variation $\Delta V / V$ than constraints (33), both of these approximations induce a significant volume variation $\Delta V$ and are inaccurate.

## Improving Vertical Restoration Coordinate $t_\tau(\mathbf{r})$

An approximation of the vertical restoration coordinate $t'_\tau(\mathbf{r})$ may be improved by a "$t_\tau$-incremental improvement" constraint, e.g., as follows:

$$t_\tau(\mathbf{r}) = t'_\tau(\mathbf{r}) + \varepsilon_\tau(\mathbf{r}) \qquad \forall\ \mathbf{r} \in G_\tau \qquad\qquad (35)$$

where $\varepsilon_\tau(\mathbf{r})$ is an error correction term, e.g., as characterized below.

Accordingly, assuming that an initial approximation $t'_\tau(\mathbf{r})$ has already been obtained, to compute an improved version of $t_\tau(\mathbf{r})$, the following inventive incremental procedure may be executed:

- For each point $\mathbf{r}_H \in H_\tau$, set the following equation as an inventive sea-floor-error constraint e.g., using the DSI method:

$$\varepsilon_\tau(\mathbf{r}_H) = 0 \qquad \forall\ \mathbf{r}_H \in H_\tau \qquad\qquad (36)$$

this constraint assumes that constraint (32) remains honored.

- For each cell $T \in \Gamma \cap G_\tau$ **108**, choose a point $\mathbf{r}_\tau$ in the cell $T$ (e.g., its center) and install the new linear thickness-preserving constraint, e.g., using the DSI method as follows:

$$\mathbf{grad}\ \varepsilon_\tau(\mathbf{r}_\tau) \cdot \mathbf{grad}\ t'_\tau(\mathbf{r}_\tau) \simeq \tfrac{1}{2}\ \{1 - \|\mathbf{grad}\ t'_\tau(\mathbf{r}_\tau)\|^2\} \qquad\qquad (37)$$

This constraint is linear, deduced from a linear second order approximation of equation (31). Further, this constraint ensures that, after applying the $t_\tau$-incremental improvement correction constraint (35), the local value of $\|\mathbf{grad}\ t_\tau(\mathbf{r})\|$ at any point $\mathbf{r} \in G_\tau$ is as close as possible to "1."

- For each sampling point $\mathbf{r}$ located on a $\tau$-active fault, install for $\varepsilon_\tau(\mathbf{r})$ the following inventive DSI constraint referred to as the "$t_\tau$-incremental boundary" constraint:

$$\mathbf{grad}\ \varepsilon_\tau(\mathbf{r}) \times \mathbf{grad}\ t_\tau(\mathbf{r}) \simeq 0 \qquad\qquad (38)$$

This constraint specifies that, after applying correction constraint (35), in the close neighborhood of $\tau$-active faults, the shape of level sets of $t_\tau(\mathbf{r})$ remains roughly unchanged.

- To ensure piecewise continuity of the error correction $\varepsilon_\tau(\mathbf{r})$, install DSI gradient smoothness constraints, known in the art, for the error correction $\varepsilon_\tau(\mathbf{r})$.
- Assuming that constraints (36), (37) and (38) are installed on grid $\Gamma$ **100**, to interpolate the error correction $\varepsilon_\tau(\mathbf{r})$, run DSI on grid $\Gamma$ **100**.
- For each node $\alpha \in \Gamma$ **107**, update the vertical restoration coordinate $t_\tau(\alpha)$ as follows:

$$t_{\mathcal{T}}(\alpha) = t'_{\mathcal{T}}(\alpha) + \varepsilon_{\mathcal{T}}(\alpha) \qquad\qquad (39)$$

- In the test case represented by FIG. **4** and FIG. **5,** the histogram **503** of the distribution of $\|\mathbf{grad}\ t_n\|$, where $t_\tau$ is approximated by constraints (37) over $G_\tau$ **202** is now considerably better than histograms **501** and **502** obtained with constraints (33) or (34), respectively. In particular:

    - As specified by equation (10), distribution **503** is now centered on value "1". This condition is of paramount importance to minimize deformations during the restoration process generated by a $u_\tau\, v_\tau\, t_\tau$ -transform.
    - The standard deviation of distribution **503** is considerably reduced as compared to the relatively wider standard deviation of distributions **501** and **502.**

- Moreover, in the test case represented in FIG. **4** and FIG. **9,** the histogram **903** of the distribution of relative variations of volume $\Delta V/V$ induced by a restoration of $H_\tau$ **210** over $G_\tau$ **202**, where $t_\tau$ is obtained using constraints (37) is significantly more accurate than histograms **901** and **902**, where $t_\tau$ is obtained using constraints (33) or (34), respectively. The center of histogram **903** of volume variation $\Delta V/V$ is closer to the ideal value "0" than histograms **901** and **902**, which indicates that variations of volume are better minimized after applying second order constraints (37) than constraints (33) or (34).

**Horizontal Restoration Coordinates $\{u_\tau(\mathbf{r}),\ v_\tau(\mathbf{r})\}$**

Referring to FIG. **2,** with respect to surfaces $\{S_\tau(d) : d \geq 0\}$ **208,** horizontal restoration coordinates $\{u_\tau(\mathbf{r}),\ v_\tau(\mathbf{r})\}$ play a role similar to the one played by paleo-geographic coordinates $\{u(\mathbf{r}),\ v(\mathbf{r})\}$ with respect to horizons $\{H_t : t \geq 0\}$ **216** of the depositional model provided as input. Based on this similarity, horizontal restoration coordinates $\{u_\tau(\mathbf{r}),\ v_\tau(\mathbf{r})\}$ may be generated as follows:

- install equations (20) and (21) as inventive boundary constraints.
- for all points $\mathbf{r} \in G_\tau$ **214,** define as follows inventive vectors fields $\boldsymbol{a}_\tau(\mathbf{r})$ and $\boldsymbol{b}_\tau(\mathbf{r})$ respectively, referred to as the "$\tau$-axe" and "$\tau$-coaxe" vector fields:

$$a_{\mathcal{T}}(\mathbf{r}) = \mathbf{grad}\ t_{\mathcal{T}}(\mathbf{r}) \times \mathbf{grad}\ u(\mathbf{r}) \times \mathbf{grad}\ t_{\mathcal{T}}(\mathbf{r})$$
$$b_{\mathcal{T}}(\mathbf{r}) = \mathbf{grad}\ t_{\mathcal{T}}(\mathbf{r}) \times a_{\mathcal{T}}(\mathbf{r}) \qquad\qquad (40)$$

The $\tau$-axe and $\tau$-coaxe vector fields $\boldsymbol{a}_\tau(\mathbf{r})$ and $\boldsymbol{b}_\tau(\mathbf{r})$ differ considerably from the local axe and co-axe vectors fields $\boldsymbol{a}(\mathbf{r})$ and $\boldsymbol{b}(\mathbf{r})$, e.g., as discussed in U.S. Patent No. 8711140.
These new $\tau$-axe and $\tau$-coaxe vectors $\boldsymbol{a}_\tau(\mathbf{r})$ and $\boldsymbol{b}_\tau(\mathbf{r})$ strongly depend on the new vertical restoration coordinate $t_\tau(\mathbf{r})$ (e.g., already computed as above) and also take into account the gradient of the paleo-geographic coordinate $u(\mathbf{r})$ (e.g., associated to the depositional model provided as input).

- if the tectonic style is minimal deformation then, to approximate equations (22), install the following inventive "surrogate minimal-deformation" constraints e.g., using the DSI method:

$$\forall\, \mathbf{r} \in G_{\mathcal{T}}\ :\ \begin{vmatrix} \mathbf{grad}\ u_{\mathcal{T}}(\mathbf{r}) \cdot b_{\mathcal{T}}(\mathbf{r}) & \simeq & 0 \\[4pt] \mathbf{grad}\ v_{\mathcal{T}}(\mathbf{r}) \cdot a_{\mathcal{T}}(\mathbf{r}) & \simeq & 0 \end{vmatrix} \qquad (41)$$

- if the tectonic style is flexural slip then, to approximate equations (23), install the following inventive "surrogate flexural-slip" constraints e.g., using the DSI method:

$$\forall\, \mathbf{r} \in G_T \;:\; \left|\begin{array}{ccc} \mathbf{grad}_S\, u_T(\mathbf{r}) \cdot b_T(\mathbf{r}) & \simeq & 0 \\[2mm] \mathbf{grad}_S\, v_T(\mathbf{r}) \cdot a_T(\mathbf{r}) & \simeq & 0 \end{array}\right. \tag{42}$$

where subscript "S" refers to a projection of the directions of maximal change over iso-value surfaces of the restored vertical coordinate $t_T$.

- Referring to FIG. **1** and FIG. **6,** to prevent the $u_\tau v_\tau t_\tau$-transform used as a restoration operator from generating gaps and overlaps along $\tau$-active faults, specific constraints may be added along fault striae induced by twin-points of the depositional model provided as input. For that purpose, for each pair of twin-points ( $\mathbf{r}_F^+, \mathbf{r}_F^-$ ) **(101,102)** located on faces $F^+$ **103** and $F^-$ **104** of a $\tau$-active fault $F$ **105,** respectively, a process may proceed according to as follows:

  - retrieve the fault stria $\sigma(\mathbf{r}_F^-)$ **600** passing through twin points ( $\mathbf{r}_F^+, \mathbf{r}_F^-$ ) **(101,102),** and

  - on curve $\sigma(\mathbf{r}_F^-)$ **600,** retrieve a point $\tilde{\mathbf{r}}_F^+$ **601** located on $F^+$ **103** and such that $t_T(\tilde{\mathbf{r}}_F^+)$ is approximately equal to $t_T(\mathbf{r}_F^-)$.

- install the following inventive "$\tau$-fault-striae" constraints e.g., using the DSI method:

$$\left|\begin{array}{lccc} 1) & u_T(\tilde{\mathbf{r}}_F^+) & \simeq & u_T(\mathbf{r}_F^-) \\[2mm] 2) & v_T(\tilde{\mathbf{r}}_F^+) & \simeq & v_T(\mathbf{r}_F^-) \end{array}\right. \tag{43}$$

- To ensure piecewise continuity of horizontal restoration coordinates $u_\tau(\mathbf{r})$ and $v_\tau(\mathbf{r})$, install gradient smoothness constraints e.g., using the DSI method.
- To compute the pair of horizontal restoration coordinates $\{u_\tau(\mathbf{r}), v_\tau(\mathbf{r})\}$ honoring constraints (20), (41 or 42) and (43), run DSI on grid $\Gamma$ **100.**

### Computing the restoration $R_\tau(\mathbf{r})$

The restoration vector field $\mathbf{R}_\tau(\mathbf{r})$ represents the field of deformation vectors from the present day (e.g., $xyz$) space to the restoration (e.g., $u_\tau v_\tau t_\tau$) space, e.g., computed from the $u_\tau v_\tau t_\tau$- transform.

Referring to FIG. **1,** for each node $\alpha$ **107** of 3D grid $\Gamma$ **100,** move $\alpha$ to restored location $\bar{r}(\alpha)$, e.g., defined as follows:

$$\bar{\mathbf{r}}(\alpha) = u_T(\alpha) \cdot \mathbf{r}_x + v_T(\alpha) \cdot \mathbf{r}_y + t_T(\alpha) \cdot \mathbf{r}_z \tag{44}$$

For each node $\alpha$ **107** of 3D grid $\Gamma$ **100:**

- if, to compute vertical restoration coordinate $t_\tau(\mathbf{r}),$ compaction was taken into account, then, using a recompaction operator $\mathbf{C}^+(\mathbf{r})$ known in the art, move $\alpha$ vertically upward from its current decompacted altitude $z(\alpha)$ to a new recompacted (shallower) altitude:

$$\mathbf{r}(\alpha) \leftarrow \mathbf{C}^+(\mathbf{r}(\alpha)) \tag{45}$$

save the restoration vector $R_\tau(\alpha)$ on a digital device:

$$R\tau(\alpha) = \mathbf{r}(\alpha) - \mathbf{r}^*(\alpha) \qquad (46)$$

where $\mathbf{r}^*(\alpha)$ is defined e.g., in equation (29).

- reset location $\mathbf{r}(\alpha)$ of $\alpha$ to its initial location before restoration:

$$\mathbf{r}(\alpha) \leftarrow \mathbf{r}^*(\alpha) \qquad (47)$$

stop.

**Scanning the subsurface through time**

Consider a series of geological restoration times $\{\tau_1 < \tau_2 << \tau_n\}$ associated with reference horizons $H_{\tau_1}$, $H_{\tau_2}$, ..., $H_{\tau_n}$, respectively. Using the restoration method described herein, for each ($\tau_i = \tau$), build and store on a digital device a restoration vector field $\mathbf{R}_{\tau_i}(\mathbf{r}) = \mathbf{R}_{\tau}(\mathbf{r})$, e.g., as:

$$
\begin{array}{ccccccc}
\tau_1 & < & \tau_2 & < & \cdots & < & \tau_n \\
\updownarrow & & \updownarrow & & & & \updownarrow \\
\mathbf{R}_{\tau_1} & & \mathbf{R}_{\tau_2} & & & & \mathbf{R}_{\tau_n}
\end{array}
\qquad (48)
$$

In addition to these reference restoration times, an additional restoration time $\tau_{n+1}$ may be added to be associated with the horizontal plane $H_{t_{n+1}}$ located at a constant altitude $z^0_{\tau_{n+1}}$ of the sea level. Time $\tau_{n+1}$ may be the present day geological time and, provided that $\tau_{n+1}$ is greater than $\tau_n$, any arbitrary value may be chosen for $\tau_{n+1}$. As a non-limitative example, $\tau_{n+1}$ may be defined as:

$$\tau_{n+1} = \tau_n + 1 \qquad (49)$$

Because $\tau_{n+1}$ is the present day, applying the restoration vector field $\mathbf{R}\tau_{n+1}(\mathbf{r})$ to the present day horizon $H_{t_{n+1}}$ should leave $H_{t_{n+1}}$ unchanged e.g., as follows:

$$\mathbf{R}\tau_{n+1}(\mathbf{r}) = \mathbf{0} \qquad \forall\, \mathbf{r} \in G \qquad (50)$$

To explore subsurface evolution throughout geological times, a process may proceed as follows:

- as input, read a depositional (e.g., GeoChron) model and associated series of restoration vector fields $\{\mathbf{R}_{\tau_1}, \mathbf{R}_{\tau_2}, ..., \mathbf{R}_{\tau_{n+1}}\}$ stored on a digital device;
- using an input device such as, in a non-limitative example, the keyboard of a computer or the wheel of a computer mouse, select a geological time $\tau_i$ in the given list of geological times $\{\tau_1 < \tau_2 < . . . < \tau_{n+1}\}$;
- for each vertex $\alpha \in \Gamma$ **107,** save a copy $\mathbf{r}^*(a)$ of the location of this node in the depositional model given as input;
- apply the restoration vector field $\mathbf{R}_{\tau_i}(\mathbf{r})$ to the depositional model given as input;
- display the restored model on a device such as, in a non-limitative example, a display (e.g., display **180** of FIG. **15),** such as, a screen, a hologram or a 3D printer;
- repeat the previous operations as long as desired.
- optionally, to modify the geometry of the horizons at geological time $\tau_i$, use a computerized tool known in the art to edit the geological time of deposition t(r);
- for each vertex $\alpha$ **107** of 3D grid $\Gamma$ **100,** use copy $\mathbf{r}^*(\alpha)$ to restore $\mathbf{r}(\alpha)$ to its present day location:

$$\mathbf{r}(\alpha) \leftarrow \mathbf{r}^*(\alpha) \qquad \forall\, \alpha \in \Gamma \qquad (51)$$

such an operation implicitly and automatically propagates the modifications of the geometry of horizons optionally performed above;

- return to the first step above.

**Geological Tomography**

Geological models are generated using geological or seismic tomography technology. Geological tomography generates an image of the interior subsurface of the Earth based on geological data collected by transmitting a series of incident waves and receiving reflections of those waves across discontinuities in the subsurface. A transmitter may transmit signals, for example, acoustic waves, compression waves or other energy rays or waves, that may travel through subsurface structures. The transmitted signals may become incident signals that are incident to subsurface structures. The incident signals may reflect at various transition zones or geological discontinuities throughout the subsurface structures, such as, faults or horizons. The reflected signals may include seismic events. A receiver may collect data, for example, reflected seismic events. The data may be sent to a modeling mechanism that may include, for example, a data processing mechanism and an imaging mechanism.

Reference is made to FIG. **14,** which is a schematic illustration of a geological tomography technique in which a series of incident rays **111** and reflected rays **121** are propagated through a subsurface region of the Earth **30** to image the subsurface, according to an embodiment of the invention.

One or more transmitter(s) (e.g., **190** of FIG. 15) located at incident location(s) **60** may emit a series of incident rays **111**. Incident rays **111** may include for example a plurality of energy rays related to signal waves, e.g., sonic waves, seismic waves, compression waves, etc. Incident rays **111** may be incident on, and reflect off of, a subsurface structure or surface **90** at a reflection point **50**. Multiple reflection points **50** may be identified or imaged or displayed in conjunction to display, for example, a horizon.

One or more receiver(s) (e.g., **140** of FIG. 15) located at reflected location(s) **65** may receive the reflection rays **121**. Reflection rays **121** may be the reflected images of incident rays **111,** for example, after reflecting off of image surface **90** at target point **50**. The angle of reflection **55** may be the angle between corresponding incident rays **111** and reflected rays **121** at reflection point **50**. An incident rays **111** and a corresponding reflected rays **121** may propagate through a cross-section of a subsurface structure **30**. Incident rays **111** may reflect off of a subsurface feature **90** at a reflection point **50,** for example, a point on an underground horizon, the seafloor, an underground aquifer, etc.

One or more processor(s) (e.g., **140** of FIG. 15) may reconstitute incident and reflected rays **111** and **121** to generate an image the subsurface **30** using an imaging mechanism. For example, a common reflection angle migration (CRAM) imaging mechanism may image reflection points **50** by aggregating all reflected signals that may correspond to a reflection point, for example, reflected signals that may have the same reflection angle. In other examples, imaging mechanisms may aggregate reflected signals that may have the same reflection offset (distance between transmitter and receiver), travel time, or other suitable conditions.

The processor(s) may compose all of the reflection points **50** to generate an image or model of the present day underground subsurface of the Earth **30**. The processor(s) may execute a restoration transformation (e.g., $u_\tau$ $v_\tau$ $t_\tau$ - transform **201**) to transform the present day model of subsurface **30** to a restored subsurface image **203** at a restoration time $\tau$. One or more display(s) (e.g., **180** of FIG. **15)** may visualize the present day subsurface image **30** and/or the restored subsurface image **203.**

**System Overview**

Reference is made to Fig. **15,** which schematically illustrates a system including one or more transmitter(s), one or more receiver(s) and a computing system in accordance with an embodiment of the present invention. Methods disclosed herein may be performed using a system **1505** of Fig. **15.**

System **1505** may include one or more transmitter(s) **190,** one or more receiver(s) **120,** a computing system **130,** and a display **180**. The aforementioned data, e.g., seismic data used to form intermediate data and finally to model subsurface regions, may be ascertained by processing data generated by transmitter **190** and received by receiver **120**. Intermediate data may be stored in memory **150** or other storage units. The aforementioned processes described herein may be performed by software **160** being executed by processor **140** manipulating the data.

Transmitter **190** may transmit signals, for example, acoustic waves, compression waves or other energy rays or waves, that may travel through subsurface (e.g., below land or sea level) structures. The transmitted signals may become incident signals that are incident to subsurface structures. The incident signals may reflect at various transition zones or geological discontinuities throughout the subsurface structures. The reflected signals may include seismic data.

Receiver **120** may accept reflected signal(s) that correspond or relate to incident signals, sent by transmitter **190**. Transmitter **190** may transmit output signals. The output of the seismic signals by transmitter **190** may be controlled by a computing system, e.g., computing system **130** or another computing system separate from or internal to transmitter **190.** An instruction or command in a computing system may cause transmitter **190** to transmit output signals. The instruction may include directions for signal properties of the transmitted output signals (e.g., such as wavelength and intensity). The instruction to control the output of the seismic signals may be programmed in an external device or program, for example, a computing system, or into transmitter **190** itself.

Computing system **130** may include, for example, any suitable processing system, computing system, computing device, processing device, computer, processor, or the like, and may be implemented using any suitable combination of hardware and/or software. Computing system **130** may include for example one or more processor(s) **140,** memory **150** and software **160**. Data **155** generated by reflected signals, received by receiver **120,** may be transferred, for example, to computing system **130**. The data may be stored in the receiver **120** as for example digital information and transferred to computing system **130** by uploading, copying or transmitting the digital information. Processor **140** may communicate with computing system **130** via wired or wireless command and execution signals.

Memory **150** may include cache memory, long term memory such as a hard drive, and/or external memory, for example, including random access memory (RAM), read only memory (ROM), dynamic RAM (DRAM), synchronous DRAM (SD-RAM), flash memory, volatile memory, non-volatile memory, cache memory, buffer, short term memory unit, long term memory unit, or other suitable memory units or storage units. Memory **150** may store instructions (e.g., software **160)** and data **155** to execute embodiments of the aforementioned methods, steps and functionality (e.g., in long term memory, such as a hard drive). Data **155** may include, for example, raw seismic data collected by receiver **120,** instructions for building a mesh (e.g., **100),** instructions for partitioning a mesh, and instructions for processing the collected data to generate a model, or other instructions or data. Memory **150** may also store instructions to divide and model $\tau$-active faults and $\tau$-inactive faults. Memory **150** may generate and store the aforementioned constraints, restoration transformation (e.g., $u_\tau$ $v_\tau$ $t_\tau$-transform **201),** restoration coordinates (e.g., $u_\tau$ $v_\tau$ $t_\tau$), a geological-time and paleo-geographic coordinates (e.g., $u$, v, t), a model representing a structure when it was originally deposited (e.g., in *uvt*-space), a model representing a structure at an intermediate restoration time (e.g., in $u_\tau$ $v_\tau$ $t_\tau$-space), and/or a model representing the corresponding present day structure in a current time period (e.g., in xyz-space). Memory **150** may store cells, nodes, voxels, etc., associated with the model and the model mesh. Memory **150** may also store forward and/or reverse $u_\tau$ $v_\tau$ $t_\tau$-transformations to restore present day models (e.g., in xyz-space) to restored models (e.g., in $u_\tau$ $v_\tau$ $t_\tau$-space), and vice versa. Memory **150** may also store the three-dimensional restoration vector fields, which when applied to the nodes of the initial present day model, move the nodes of the initial model to generate one of the plurality of restored models. Applying a restoration vector field to corresponding nodes of the present day model may cause the nodes to "move", "slide", or "rotate", thereby transforming modeled geological features represented by nodes and cells of the initial model. Data **155** may also include intermediate data generated by these processes and data to be visualized, such as data representing graphical models to be displayed to a user. Memory **150** may store intermediate data. System **130** may include cache memory which may include data duplicating original values stored elsewhere or computed earlier, where the original data may be relatively more expensive to fetch (e.g., due to longer access time) or to compute, compared to the cost of reading the cache memory. Cache memory may include pages, memory lines, or other suitable structures. Additional or other suitable memory may be used.

Computing system **130** may include a computing module having machine-executable instructions. The instructions may include, for example, a data processing mechanism (including, for example, embodiments of methods described herein) and a modeling mechanism. These instructions may be used to cause processor **140** using associated software **160** modules programmed with the instructions to perform the operations described. Alternatively, the operations may be performed by specific hardware that may contain hardwired logic for performing the operations, or by any combination of programmed computer components and custom hardware components.

Embodiments of the invention may include an article such as a non-transitory computer or processor readable medium, or a computer or processor storage medium, such as for example a memory, a disk drive, or a USB flash memory, encoding, including or storing instructions, e.g., computer-executable instructions, which when executed by a processor or controller, carry out methods disclosed herein.

Display **180** may display data from transmitter **190,** receiver **120,** or computing system **130** or any other suitable systems, devices, or programs, for example, an imaging program or a transmitter or receiver tracking device. Display **180** may include one or more inputs or outputs for displaying data from multiple data sources or to multiple displays. For example, display **180** may display visualizations of subsurface models including subsurface features, such as faults, horizons and unconformities, as a present day subsurface image (e.g., **202),** a restored subsurface image (e.g., **203)** and/or a depositional model (e.g., **703)**. Display **180** may display one or more present day model(s), depositional model(s), restoration model(s), as well as a series of chronologically sequential restoration models associated with a sequence of respective restoration times (e.g., $\tau_1 < \tau_2 < \tau_3 < \tau_4$, as shown in FIG. **13)**. The models may be displayed one at a time, two at a time, or many at a time (e.g., the number selected by a user or automatically based on the difference between models or the total number of models). Display **180** may display the models in a sequence of adjacent models, through which a user may scan (e.g., by clicking a 'next' or 'previous' button with a pointing device such as a mouse or by scrolling through the models).

Input device(s) **165** may include a keyboard, pointing device (e.g., mouse, trackball, pen, touch screen), or cursor direction keys, for communicating information and command selections to processor **140.** Input device **165** may communicate user direction information and command selections to the processor **140.** For example, a user may use input device **165** to select one or more preferred models from among the plurality of perturbed models, recategorize faults as $\tau$-active faults and $\tau$-inactive, or edit, add or delete subsurface structures.

Processor **140** may include, for example, one or more processors, controllers or central processing units ("CPUs"). Software **160** may be stored, for example, in memory **150.** Software **160** may include any suitable software, for example, DSI software.

Processor **140** may generate a present day subsurface image (e.g., **202),** a restored subsurface image (e.g., **203)** and/or a depositional model (e.g., **703),** for example, using data **155** from memory **150.** In one embodiment, a model may simulate structural, spatial or geological properties of a subsurface region, such as, porosity or permeability through geological terrains.

Processor **140** may initially generate a three dimensional mesh, lattice, grid or collection of nodes (e.g., **100)** that spans or covers a domain of interest. The domain may cover a portion or entirety of the three-dimensional subsurface region being modeled. Processor **140** may automatically compute the domain to be modeled and the corresponding mesh based on the collected seismic data so that the mesh covers a portion or the entirety of the three-dimensional subsurface region from which geological data is collected (e.g., the studied subsurface region). Alternatively or additionally, the domain or mesh may be selected or modified by a user, for example, entering coordinates or highlighting regions of a simulated optional domain or mesh. For example, the user may select a domain or mesh to model a region of the Earth that is greater than a user-selected subsurface distance (e.g., 100 meters) below the Earth's surface, a domain that occurs relative to geological features (e.g., to one side of a known fault or riverbed), or a domain that occurs relative to modeled structures (e.g., between modeled horizons $H(t_1)$ and $H(t_{100})$). Processor **140** may execute software **160** to partition the mesh or domain into a plurality of three-dimensional (3D) cells, columns, or other modeled data (e.g., represented by voxels, pixels, data points, bits and bytes, computer code or functions stored in memory **150).** The cells or voxels may have hexahedral, tetrahedral, or any other polygonal shapes, and preferably three-dimensional shapes. Alternatively, data may include zero-dimensional nodes, one-dimensional segments, two-dimensional facet and three-dimensional elements of volume, staggered in a three-dimensional space to form three-dimensional data structures, such as cells, columns or voxels. The cells preferably conform to and approximate the orientation of faults and unconformities. Each cell may include faces, edges and/or vertices. Each cell or node may correspond to one or more particles of sediment in the Earth (e.g., a node may include many cubic meters of earth, and thus many particles).

Data collected by receiver **120** after the time of deposition in a current or present time period, include faults and unconformities that have developed since the original time of deposition, e.g., based on tectonic motion, erosion, or other environmental factors, may disrupt the regular structure of the geological domain. Accordingly, an irregular mesh may be used to model current geological structures, for example, so that at least some faces, edges, or surfaces of cells are oriented parallel to faults and unconformities, and are not intersected thereby. In one embodiment, a mesh may be generated based on data collected by receiver **120,** alternatively, a generic mesh may be generated to span the domain and the data collected by receiver **120** may be used to modify the structure thereof. For example, the data collected may be used to generate a set of point values at "sampling point". The values at these points may reorient the nodes or cells of the mesh to generate a model that spatially or otherwise represents the geological data collected from the Earth. Other or different structures, data points, or sequences of steps may be used to process collected geological data to generate a model. The various processes described herein (e.g., restoring a geological model using $\tau$-active and $\tau$-inactive faults, or restoring a geological model using a new thickness-preserving constraint) may be performed by manipulating such modeling data.

Restoration coordinates may be defined at a finite number of nodes or sampling points based on real data corresponding to a subsurface structure, e.g., one or more particles or a volume of particles of Earth. Restoration coordinates may be approximated between nodes to continuously represent the subsurface structure, or alternatively, depending on the resolution in which the data is modeled may represent discrete or periodic subsurface structures, e.g., particles or volumes of Earth that are spaced from each other.

The computing system of FIG. **15** may accept the data used in the operations of FIGS. **16, 17** and **19** as for example a set of data generated by tomographic scanning of a subsurface geological region of the Earth as disclosed in reference to FIG. **14,** or such data augmented by another process. The computing system may accept one or more of seismic and well data. The computing device may generate one or more of seismic and well data.

"Restoration" or "intermediate" time $\tau$ may refer to a time in the past before the present day and after a time when an oldest or deepest horizon surface in the 3D model was deposited. "Restoration" or "intermediate" transformation or model may refer to a model or image of the surface as it was configured at the "intermediate" time in the past $\tau$. An intermediate horizon may refer to a horizon that was deposited at the "intermediate" time $\tau$, which is located above the deepest horizon and below the shallowest horizon.

"Time" including the present-day, current or present time, the past restoration time $\tau$, and/or the depositional time $t$, may refer to geological time periods that span a duration of time, such as, periods of thousands or millions of years.

"Geological-time" $t(\mathbf{r})$ may refer to the time of deposition when a particle of sediment represented by point $\mathbf{r}$ was originally deposited in the Earth. In some embodiments, the geological-time of the deposition may be replaced, e.g., by any arbitrary monotonic increasing function of the actual geological-time. It is a convention to use an monotonically increasing function, but similarly an arbitrary monotonic decreasing function may be used. The monotonic function may be referred to as the "pseudo-geological-time".

The geological-time of the deposition and restoration time of particles are predicted approximate positions since past configurations can not typically be verified.

"Current" or "present day" location for a particle (or data structure representing one or more particles) or subsurface feature may refer to the location of the item in the present time, as it is measured.

In stratified terrain, layers, horizons, faults and unconformities may be curvilinear surfaces which may be for example characterized as follows.

- A horizon, $H\tau$, may be a surface corresponding to a plurality of particles of sediment which were deposited approximately at substantially the same geological-time, $\tau$.
- A fault may be a surface of discontinuity of the horizons that may have been induced by a relative displacement of terrains on both sides of such surfaces. In other words, the geological-time of deposition of the sediments is discontinuous across each fault. Faults may cut horizons and may also cut other faults.
- An unconformity may be a surface of discontinuity of the horizons that may have been induced by for example an erosion of old terrains replaced by new ones. In other words, similarly to faults, the geological-time of deposition of the sediments is discontinuous across each unconformity.

Terrain deformed in the neighborhood of a point $\mathbf{r}$ in the $G$-space may occur according to a "minimal deformation" tectonic style when, in this neighborhood:

- the strain tensor is approximately equal to the null tensor.

Terrain deformed in the neighborhood of a point $\mathbf{r}$ in the $G$-space may occur according to a "flexural slip" tectonic style when, in this neighborhood:

- the length of any small increment of distance $d(\mathbf{r})$ on the horizon passing through point $\mathbf{r}$ is preserved, e.g., in any direction, and,
- the volume of the terrains in the neighborhood of point $\mathbf{r}$ does not vary.

Discrete-Smooth-Interpolation (DSI) is a method for interpolating or approximating values of a function $f(x,y,z)$ at nodes of a 3D grid or mesh $\Gamma$ (e.g., **100)**, while honoring a given set of constraints. The DSI method allows properties of structures to be modeled by embedding data associated therewith in a (e.g., 3D Euclidean) modeled space. The function $f(x,y,z)$ may be defined by values at the nodes of the mesh, $\Gamma$. The DSI method allows the values of $f(x,y,z)$ to be computed at the nodes of the mesh, $\Gamma$, so that a set of one or more (e.g., linear) constraints are satisfied. DSI generally only applies linear constraints on the model.

In some embodiments, bold symbols represent vectors or multi-dimensional (e.g., 3D) functions or data structures.

In some embodiments, the "simeq" symbol "$\simeq$" or "$\cong$" may mean approximately equal to, e.g., within 1-10% of, or in a least squares sense. In some embodiments, the symbol "$\equiv$" may mean identical to, or defined to be equal to.

While embodiments of the invention describe the input depositional model as the GeoChron model, any other depositional model visualizing the predicted configuration of each particle, region or layer at its respective time of depositional may be used.

While embodiments of the invention describe the present day coordinates as $xyz$, the restoration coordinates as $u_\tau v_\tau t_\tau$, the depositional coordinates as $uvt$, the restoration transformation as a $u_\tau v_\tau t_\tau$-transform, and the depositional transformation as a $uvt$-transform, any other coordinates or transformations may be used.

In the foregoing description, various aspects of the present invention have been described. For purposes of explanation, specific configurations and details have been set forth in order to provide a thorough understanding of the present invention. However, it will also be apparent to one skilled in the art that the present invention may be practiced without the specific details presented herein. Furthermore, well known features may have been omitted or simplified in order not to obscure the present invention. Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices. In addition, the term "plurality" may be used throughout the specification to describe two or more components, devices, elements, parameters and the like.

Embodiments of the invention may manipulate data representations of real-world objects and entities such as underground geological features, including faults and other features. The data may be generated by tomographic scanning, as discussed in reference to FIG. **14,** e.g., received by for example a receiver receiving waves generated e.g., by an air gun or explosives, that may be manipulated and stored, e.g., in memory **150** of FIG. **15,** and data such as images representing underground features may be presented to a user, e.g., as a visualization on display **180** of FIG. **15.**

When used herein, a subsurface image or model may refer to a computer-representation or visualization of actual geological features such as horizons and faults that exist in the real world. Some features when represented in a computing device may be approximations or estimates of a real world feature, or a virtual or idealized feature, such as an idealized horizon as produced in a $u_\tau v_\tau t_\tau$-transform. A model, or a model representing subsurface features or the location of those features, is typically an estimate or a "model", which may approximate or estimate the physical subsurface structure being modeled with more or less accuracy.

It will thus be seen that the objects set forth above, among those made apparent from the preceding description, are efficiently attained and it is intended that all matter contained in the above description and shown in the accompanying drawings shall be interpreted as illustrative and not in a limiting sense.

The scope of the invention is defined by the claims that follow.

### Claims

1. A computer-implemented method for decompacting a 3D model of the subsurface geology of the Earth at an intermediate restoration time in the past $\tau$, the method comprising:

   receiving a 3D model of present-day geometry of the subsurface geology ;
   selecting a value of a restoration time in the past $\tau$ before the present day and after a time an oldest horizon surface in the 3D model of the subsurface was deposited;
   restoring the 3D model from the present day measured geometry to the predicted past geometry at the restoration time in the past $\tau$ using a 3D transformation; and
   decompacting the vertical dimension of the restored 3D model to elongate vertical lengths of geological layers below a horizon layer deposited at the restoration time in the past $\tau$, **characterized in that**
   the method further comprises receiving a measure of present-day porosity experimentally measured within the subsurface geology of the Earth and
   wherein the vertical lengths are elongated based on a relationship between a depositional porosity of the geological layers at the time sediment in those layers was deposited, restoration porosity of the geological layers at the restoration time in the past $\tau$, and the present-day porosity of the geological layers experimentally measured in the present-day.

2. The method of claim 1 comprising decompacting the vertical dimension of the restored 3D model by a combination of total decompaction corresponding to an increase in porosity from the present day porosity to the depositional porosity and partial recompaction corresponding to a partial decrease in the porosity from the depositional porosity to the restored porosity.

3. The method of claim 1, wherein the restoration porosity is greater than the present-day porosity and less than the depositional porosity.

4. The method of claim 1 comprising elongating the vertical length as a function of height in the vertical dimension.

5. The method of claim 1 comprising elongating the vertical length as a function of geological-time when the particles of sediment were originally deposited on the Earth's surface.

6. The method of claim 1 comprising extracting material from within the subsurface geology of the Earth or one or more wells and experimentally measuring the present-day porosity of the extracted material.

7. The method of claim 1 comprising applying a boundary condition that ensures that a top horizon deposited at the restoration time $\tau$ is a horizontal plane in the restored 3D model.

8. The method of claim 1 comprising applying a boundary condition that ensures that a direction of change of geological-time when the particles of sediment were originally deposited on the Earth's surface is vertical in the restored 3D model.

9. The method of claim 1 comprising applying a boundary condition that ensures that, for any pair of collocated points on opposite sides of a fault, the two collocated points are decompacted to have the same coordinate.

10. The method of claim 1 comprising decompacting the vertical dimension of the restored 3D model by:

computing an elongated geological-time in the restored 3D model;
transforming the elongated geological-time from the restored 3D model to generate a 1D geological-time in the present-day 3D model;
computing 2D paleo-depositional coordinates based on the transformed geological-time in the present-day 3D model; and
performing a 3D transformation comprising the 1D geological-time and 2D paleo-depositional coordinates from the present-day 3D model to the restored 3D model that is decompacted based on the elongated geological-time.

11. The method of claim 1 comprising iteratively decompacting the subsurface layer-by-layer, starting at the top horizon deposited at the restoration time $\tau$ and ending at the bottom horizon deposited at the depositional time.

12. The method of claim 11 comprising independently determining the depositional porosity and the present-day porosity for each geological layer of the subsurface.

13. The method of claim 1 comprising, when the depositional porosity and the present-day porosity are substantially constant throughout the subsurface geology, decompacting in one operation over the entire domain of the restored 3D model.

**Patentansprüche**

1. Rechnerimplementiertes Verfahren zum Dekompaktieren eines 3D-Modells der Untergrundgeologie der Erde zu einem Zwischenwiederherstellungszeitpunkt in der Vergangenheit $\tau$, wobei das Verfahren Folgendes umfasst:

Erhalten eines 3D-Modells der gegenwärtigen Geometrie der Untergrundgeologie;
Auswählen eines Werts für einen Wiederherstellungszeitpunkt in der Vergangenheit $\tau$ vor dem heutigen Tag und nach einem Zeitpunkt, zu dem eine älteste Horizontoberfläche in dem 3D-Modell des Untergrunds abgelagert wurde;
Wiederherstellen des 3D-Modells von der gegenwärtig gemessenen Geometrie auf die vorhergesagte vergangene Geometrie zu dem Wiederherstellungszeitpunkt in der Vergangenheit $\tau$ unter Verwendung einer 3D-Transformation; und
Dekompaktieren der vertikalen Dimension des wiederhergestellten 3D-Modells, um vertikale Längen geologischer Schichten unterhalb einer Horizontschicht zu verlängern, die zu dem Wiederherstellungszeitpunkt in der Vergangenheit $\tau$ abgelagert wurde, **dadurch gekennzeichnet, dass**
das Verfahren ferner Erhalten eines Maßes gegenwärtiger Porosität umfasst, das experimentell in der Untergrundgeologie der Erde gemessen wurde, und
wobei die vertikalen Längen basierend auf einer Beziehung zwischen einer Ablagerungsporosität der geologischen Schichten zum Zeitpunkt der Sedimentablagerung in diesen Schichten, der Wiederherstellungsporosität der geologischen Schichten zum Wiederherstellungszeitpunkt in der Vergangenheit $\tau$ und der gegenwärtigen Porosität der geologischen Schichten, die in der Gegenwart experimentell gemessen wurde, verlängert werden.

2. Verfahren nach Anspruch 1, umfassend Dekompaktieren der vertikalen Dimension des wiederhergestellten 3D-Modells durch eine Kombination aus vollständiger Dekompaktierung, die einer Zunahme der Porosität von der gegenwärtigen Porosität zu der Ablagerungsporosität entspricht, und teilweiser Neukompaktierung, die einer teilweisen Abnahme der Porosität von der Ablagerungsporosität zu der wiederhergestellten Porosität entspricht.

3. Verfahren nach Anspruch 1, wobei die Wiederherstellungsporosität größer als die gegenwärtige Porosität und kleiner als die Ablagerungsporosität ist.

**4.** Verfahren nach Anspruch 1, umfassend Verlängern der vertikalen Länge als Funktion der Höhe in der vertikalen Dimension.

**5.** Verfahren nach Anspruch 1, umfassend Verlängern der vertikalen Länge als Funktion der geologischen Zeit, in der die Sedimentpartikel ursprünglich auf der Erdoberfläche abgelagert wurden.

**6.** Verfahren nach Anspruch 1, umfassend Extrahieren von Material aus der Untergrundgeologie der Erde oder aus einem oder mehreren Bohrlöchern und experimentelles Messen der gegenwärtigen Porosität des extrahierten Materials.

**7.** Verfahren nach Anspruch 1, umfassend Anwenden einer Randbedingung, die sicherstellt, dass ein zum Wiederherstellungszeitpunkt $\tau$ abgelagerter oberer Horizont eine horizontale Ebene in dem wiederhergestellten 3D-Modell ist.

**8.** Verfahren nach Anspruch 1, umfassend Anwenden einer Randbedingung, die sicherstellt, dass eine Änderungsrichtung der geologischen Zeit, in der die Sedimentpartikel ursprünglich auf der Erdoberfläche abgelagert wurden, in dem wiederhergestellten 3D-Modell vertikal ist.

**9.** Verfahren nach Anspruch 1, umfassend Anwenden einer Randbedingung, die sicherstellt, dass für jedes Paar von kollokierten Punkten auf gegenüberliegenden Seiten einer Verwerfung die beiden kollokierten Punkte so dekompaktiert werden, dass sie dieselbe Koordinate aufweisen.

**10.** Verfahren nach Anspruch 1, umfassend Dekompaktieren der vertikalen Dimension des wiederhergestellten 3D-Modells durch Folgendes:

Berechnen einer verlängerten geologischen Zeit in dem wiederhergestellten 3D-Modell;
Transformieren der verlängerten geologischen Zeit aus dem wiederhergestellten 3D-Modell zum Generieren einer 1D-geologischen Zeit in dem gegenwärtigen 3D-Modell;
Berechnen von 2D-Koordinaten einer Paläoablagerung basierend auf der transformierten geologischen Zeit in dem gegenwärtigen 3D-Modell; und
Durchführen einer 3D-Transformation, die die 1D-Koordinaten der geologischen Zeit und die 2D-Koordinaten der Paläoablagerung von dem gegenwärtigen 3D-Modell zu dem wiederhergestellten 3D-Modell umfasst, das basierend auf der verlängerten geologischen Zeit dekompaktiert wird.

**11.** Verfahren nach Anspruch 1, umfassend schichtweises iteratives Dekompaktieren des Untergrunds, beginnend am oberen Horizont, der zu dem Wiederherstellungszeitpunkt $\tau$ abgelagert wurde, und endend am unteren Horizont, der zum Ablagerungszeitpunkt abgelagert wurde.

**12.** Verfahren nach Anspruch 11, umfassend unabhängiges Bestimmen der Ablagerungsporosität und der gegenwärtigen Porosität für jede geologische Schicht des Untergrunds.

**13.** Verfahren nach Anspruch 1, umfassend, wenn die Ablagerungsporosität und die gegenwärtige Porosität in der gesamten Untergrundgeologie im Wesentlichen konstant sind, Dekompaktieren in einem Arbeitsgang über den gesamten Bereich des wiederhergestellten 3D-Modells.

**Revendications**

**1.** Procédé mis en oeuvre par ordinateur pour décompacter un modèle 3D de la géologie souterraine de la Terre à un moment de restauration intermédiaire $\tau$ dans le passé, le procédé consistant à :

recevoir un modèle 3D de la géométrie actuelle de la géologie souterraine ;
sélectionner une valeur d'un moment de restauration $\tau$ dans le passé avant le moment présent et après un moment où la plus ancienne surface d'horizon dans le modèle 3D du sous-sol a été déposée ;
restaurer le modèle 3D à partir de la géométrie mesurée au moment présent à la géométrie passée prédite au moment de restauration $\tau$ dans le passé à l'aide d'une transformation 3D ; et
décompacter la dimension verticale du modèle 3D restauré pour allonger les longueurs verticales des couches géologiques sous une couche d'horizon déposée au moment de la restauration $\tau$ dans le passé,

**caractérisé en ce que** le procédé comprend en outre la réception d'une mesure de la porosité actuelle mesurée expérimentalement dans la géologie souterraine de la Terre et

**en ce que** les longueurs verticales sont allongées sur la base d'une relation entre une porosité de dépôt des couches géologiques au moment où les sédiments contenus dans ces couches ont été déposés, la porosité de restauration des couches géologiques au moment de la restauration $\tau$ dans le passé, et la porosité actuelle des couches géologiques mesurée expérimentalement au moment présent.

2. Procédé selon la revendication 1, comprenant le décompactage de la dimension verticale du modèle 3D restauré par une combinaison de décompactage total correspondant à une augmentation de la porosité depuis la porosité actuelle à la porosité de dépôt, et de recompactage partiel correspondant à une diminution partielle de la porosité depuis la porosité de dépôt à la porosité restaurée.

3. Procédé selon la revendication 1, dans lequel la porosité de restauration est supérieure à la porosité actuelle et inférieure à la porosité de dépôt.

4. Procédé selon la revendication 1, comprenant l'allongement de la longueur verticale en fonction de la hauteur dans la dimension verticale.

5. Procédé selon la revendication 1, comprenant l'allongement de la longueur verticale en fonction du temps géologique auquel les particules de sédiments se sont initialement déposées sur la surface de la Terre.

6. Procédé selon la revendication 1, comprenant l'extraction de matériau à partir de la géologie souterraine de la Terre ou d'un ou plusieurs puits et la mesure expérimentale de la porosité actuelle du matériau extrait.

7. Procédé selon la revendication 1, comprenant l'application d'une condition limite qui garantit qu'un horizon supérieur déposé au moment de restauration $\tau$ est un plan horizontal dans le modèle 3D restauré.

8. Procédé selon la revendication 1, comprenant l'application d'une condition limite qui garantit qu'une direction de changement de temps géologique lorsque les particules de sédiment ont été initialement déposées sur la surface de la Terre est verticale dans le modèle 3D restauré.

9. Procédé selon la revendication 1, comprenant l'application d'une condition limite qui garantit que, pour toute paire de points colocalisés sur des côtés opposés d'une faille, les deux points colocalisés sont décompactés pour avoir la même coordonnée.

10. Procédé selon la revendication 1, comprenant le décompactage de la dimension verticale du modèle 3D restauré par :

le calcul d'un temps géologique allongé dans le modèle 3D restauré ;
la transformation du temps géologique allongé à partir du modèle 3D restauré pour générer un temps géologique 1D dans le modèle 3D actuel ;
le calcul de coordonnées paléodépositionnelles 2D sur la base du temps géologique transformé dans le modèle 3D actuel ; et
l'exécution d'une transformation 3D comprenant les coordonnées géologiques 1D et paléodépositionnelles 2D du modèle 3D actuel au modèle 3D restauré qui est décompacté en fonction du temps géologique allongé.

11. Procédé selon la revendication 1, comprenant le décompactage itératif du sous-sol couche par couche, en commençant par l'horizon supérieur déposé au moment de restauration $\tau$ et en terminant par l'horizon inférieur déposé au moment du dépôt.

12. Procédé selon la revendication 11, comprenant la détermination indépendante de la porosité de dépôt et de la porosité actuelle pour chaque couche géologique du sous-sol.

13. Procédé selon la revendication 1 comprenant, lorsque la porosité de dépôt et la porosité actuelle sont sensiblement constantes dans toute la géologie souterraine, le décompactage en une seule opération sur l'ensemble du domaine du modèle 3D restauré.

**FIG. 1**

**FIG. 2**

**FIG. 3**

FIG. 4

**FIG. 5**

**FIG. 6**

**FIG. 7**

**FIG. 8**

FIG. 9

**FIG. 10**

$\tau_1$

$\tau_2 > \tau_1$

$\tau_3 > \tau_2$

$\tau_4 > \tau_3$

**FIG. 11**

FIG. 12

FIG. 13

**Fig. 14**

**Fig. 15**

1610 ⟶ RECEIVE A 3D PRESENT DAY MODEL OF THE EARTH'S SUBSURFACE COMPRISING A FAULT NETWORK WITH ALL FAULTS REPRESENTING GEOLOGICAL DISCONTINUITIES

1620 ⟶ SELECT A PAST RESTORATION TIME $\tau$ PRIOR TO THE PRESENT DAY AND AFTER THE START OF THE SUBSURFACE DEPOSITION

1630 ⟶ DIVIDE THE FAULT NETWORK INTO TAU-ACTIVE FAULTS (INTERSECTING A HORIZON $H\tau$ DEPOSITED AT RESTORATION TIME $\tau$) AND TAU-INACTIVE FAULTS (NOT INTERSECTING HORIZON $H\tau$)

1640 ⟶ RESTORE THE 3D MODEL FROM THE PRESENT DAY TO THE PAST RESTORATION TIME $\tau$ BY:

$\tau$-ACTIVE FAULT          $\tau$-INACTIVE FAULT

1650 FOR EACH $\tau$-ACTIVE FAULT, UNFAULTING HORIZON $H\tau$ INTERSECTED BY THE FAULT

1660 FOR EACH $\tau$-INACTIVE FAULT, DEACTIVATING THE FAULT TO REPRESENT A GEOLOGICALLY CONTINUOUS SURFACE

REPEAT FOR NEW RESTORATION TIME $\tau'$

1670 ⟶ DISPLAY IMAGE OF SUBSURFACE OVERLAID WITH $\tau$-ACTIVE FAULTS AND $\tau$-INACTIVE FAULTS IN THE RESTORED MODEL AT PAST RESTORATION TIME $T$

Fig. 16

1710 — RECEIVE A 3D PRESENT DAY MODEL OF THE EARTH'S SUBSURFACE COMPRISING FOLDED HORIZONS

1720 — SELECT A PAST RESTORATION TIME $\tau$ PRIOR TO THE PRESENT DAY AND AFTER THE START OF THE SUBSURFACE DEPOSITION

1730 — RESTORE THE 3D MODEL FROM THE PRESENT DAY TO THE PAST RESTORATION TIME $\tau$ WITH RESTORED COORDINATES $u_\tau$, $v_\tau$, $t_\tau$ USING LINEAR CONSTRAINTS THAT REDUCE GEOLOGICAL ERRORS AND INCREASE RENDERING SPEED

1740 — DISPLAY IMAGE OF RESTORED 3D MODEL OF THE SUBSURFACE SUCH THAT EACH POINT IS POSITIONED AT THE RESTORED COORDINATES $u_\tau$, $v_\tau$, $t_\tau$

1750 — PLAY A MOVING IMAGE SEQUENCE OF 3D MODELS ITERATIVELY RESTORED IN A FORWARD OR REVERSE ORDER OF A SEQUENCE OF PAST RESTORATION TIMES $\tau_1$, $\tau_2$, . . . $\tau_n$ TO VISUALIZE CHANGES IN THE SUBSURFACE GEOLOGY OVER THE PASSAGE OF TIME

REPEAT FOR NEW RESTORATION TIME $\tau'$

# Fig. 17

$$\bar{\Psi}_o = \frac{9}{27} = \frac{1}{3}$$

$$\bar{\Psi} = \frac{9}{2 \times 27} = \frac{1}{6}$$

1800

1810

$d\bar{h}^{\oplus}$

Compaction

Decompaction

$d\bar{h}$

$$\bar{\delta} = \bar{\Psi}_o - \bar{\Psi} = \frac{1}{6} \qquad \Rightarrow \qquad d\bar{h} = (1 - \bar{\delta}) \cdot d\bar{h}^{\oplus} = \frac{5}{6} d\bar{h}^{\oplus}$$

## Fig. 18

1910 — RECEIVE A 3D PRESENT DAY MODEL OF THE EARTH'S SUBSURFACE AND A MEASURE OF PRESENT-DAY POROSITY

1920 — SELECT A PAST RESTORATION TIME $\tau$ PRIOR TO THE PRESENT DAY AND AFTER THE START OF THE SUBSURFACE DEPOSITION

1930 — RESTORE THE 3D MODEL FROM THE PRESENT DAY TO THE PAST RESTORATION TIME $\tau$ USING A 3D RESTORATION TRANSFORMATION

1940 — DECOMPACT THE VERTICAL DIMENSION OF THE RESTORED 3D MODEL

## Fig. 19

**EP 3 875 995 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170330373 A1, Medwedeff
- US 8600708 B
- US 8711140 B

**Non-patent literature cited in the description**

- **BAUR et al.** Integrating structural geology and petroleum systems modeling - A pilot project from Bolivia's fold and thrust belt. *the journal Marine and Petroleum Geology*